(19) Europäisches Patentamt
European Patent Office
Office européen des brevets

(11) **EP 3 781 332 B1**

(12) **EUROPÄISCHE PATENTSCHRIFT**

(45) Veröffentlichungstag und Bekanntmachung des Hinweises auf die Patenterteilung:
**02.02.2022 Patentblatt 2022/05**

(21) Anmeldenummer: **19816687.8**

(22) Anmeldetag: **06.12.2019**

(51) Internationale Patentklassifikation (IPC):
**B21B 38/00** (2006.01)

(52) Gemeinsame Patentklassifikation (CPC):
**B21B 38/00; G01L 5/0085; G01L 5/045;**
B21B 38/006; B21B 38/02; B21B 38/06;
B21B 2273/04

(86) Internationale Anmeldenummer:
**PCT/EP2019/084050**

(87) Internationale Veröffentlichungsnummer:
**WO 2020/120328 (18.06.2020 Gazette 2020/25)**

(54) **VERFAHREN ZUM FESTSTELLEN EINER EIGENSCHAFT EINES ÜBER DIE MESSROLLE GEFÜHRTEN BANDFÖRMIGEN GUTS**

METHOD FOR DETERMINING A PROPERTY OF A STRIP-SHAPED PRODUCT GUIDED OVER THE MEASURING ROLL

PROCÉDÉ POUR DÉTERMINER UNE PROPRIÉTÉ D'UN PRODUIT EN FORME DE BANDE GUIDÉ SUR UN ROULEAU DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2018 DE 102018009610**

(43) Veröffentlichungstag der Anmeldung:
**24.02.2021 Patentblatt 2021/08**

(73) Patentinhaber: **VDEh-Betriebsforschungsinstitut GmbH**
**40237 Düsseldorf (DE)**

(72) Erfinder:
• **MÜCKE, Gert**
**40724 Hilden (DE)**
• **KREMEYER, Julian**
**40723 Hilden (DE)**
• **VOß, Thorsten**
**52222 Stolberg (DE)**

(74) Vertreter: **Tilmann, Max Wilhelm et al**
**König-Szynka-Tilmann-von Renesse**
**Patentanwälte Partnerschaft mbB**
**Mönchenwerther Straße 11**
**40545 Düsseldorf (DE)**

(56) Entgegenhaltungen:
EP-A1- 1 759 778      EP-A1- 3 009 206
WO-A1-84/02121      WO-A1-2015/149190
DE-A1- 19 747 655      US-A- 5 285 684

EP 3 781 332 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Messrolle zum Feststellen einer Eigenschaft eines über die Messrolle geführten bandförmigen Guts, insbesondere von Metallband. Ferner betrifft die Erfindung ein Verfahren zum Feststellen einer Eigenschaft eines über die Messrolle geführten bandförmigen Guts, insbesondere von Metallband. Ein gattungsgemässes Verfahren bzw. eine gattungsgemässe Messrolle sind aus US 5 285 684 A bekannt.

Ebenso betrifft die Erfindung eine Verwendung einer solchen Messrolle.

Messrollen werden beim Kalt- und Warmwalzen von Metallband eingesetzt und sind beispielsweise aus der DE 42 36 657 A1 bekannt.

Für das herkömmliche Messen der Planheit beim Walzen von Bändern werden im Wesentlichen Verfahren eingesetzt, bei denen das Band mit einem gewissen Umschlingungswinkel über eine mit Kraftsensoren bestückte Messrolle geführt wird.

Auf diese Weise kommt es bei der in der DE 42 36 657 A1 beschriebenen Messrolle zu einer Berührung zwischen Kraftmessgebern oder deren Abdeckungen, die in zur Messrollenoberfläche offenen radialen Ausnehmungen der Messrolle angeordnet sind, und dem Band. Zwischen den am Boden ihrer Ausnehmung aufgespannten Kraftsensoren und der sie umgebenden Ausnehmungswandung befindet sich ein zylindrischer Spalt. Dieser Spalt kann mit einem O-Ring schulterdichtend oder mit einer Kunststoffschicht frontdichtend verschlossen sein, um das Eindringen von Schmutz, beispielsweise Bandabrieb und Schmiermittel in die Ringspalte zwischen Kraftsensor und Messrollenkorpus zu verhindern. Auch ist es möglich, wie in der DE 42 36 657 A1 in der Fig. 1c dargestellt ist, den Messgeber in eine Ausnehmung der Vollrolle zu platzieren, die dann mit einer angearbeiteten Membran abgedeckt wird.

Die Anordnung der Kraftsensoren mit Abstand von der sie umgebenden Wandung und das Verschließen des Ringspalts mit Hilfe eines O-Rings oder eines hinreichend elastischen Kunststoffs (DE 196 16 980 A1) verhindert, dass sich während des Walzens im Korpus der Messrolle wirksame Querkräfte störend auf die Kraftsensoren bzw. das Messergebnis auswirken. Derartige Störkräfte sind die Folge des auf die Messrolle wirkenden Bandzugs und einer damit verbundenen Durchbiegung der Messrolle. Deren Querschnitt nimmt dabei die Form einer Ellipse an, deren längere Achse parallel zum Band verläuft. Die Messrollendurchbiegung täuscht dem Kraftsensor eine Unebenheit des Bandes vor, wenn sie durch Kraftnebenschluss auf den Messgeber übertragen wird. Ein solcher Kraftnebenschluss lässt sich bei der Verwendung einer Dichtung im Ringspalt nicht ganz vermeiden, da die Dichtkräfte zwangsläufig auf den Kraftsensor wirken.

Aus DE 102 07 501 C1 ist eine Vollrolle zum Feststellen von Planheitsabweichungen beim Behandeln von bandförmigem Gut, insbesondere von Metallband, mit in Ausnehmungen angeordneten Kraftsensoren bekannt, bei der die Kraftsensoren axial zugänglich sind. Das Einbringen der axial verlaufenden Ausnehmungen wird häufig mit Tieflochbohrwerkzeugen durchgeführt. Bei Messrollen mit Ballenbreiten > 1000 mm müssen sehr lange Bohrwerkzeuge verwendet werden, da für das stirnseitige Bohren der Ausnehmung das Bohrwerkzeug erst über die zum Teil sehr langen Zapfen gefahren werden muss. Ein Verlaufen des Bohrkanals ist häufig die Ursache.

Aus DE 20 2007 001 066 U1 ist eine Messrolle zum Feststellen von Planheitsabweichungen beim Behandeln von bandförmigem Gut, insbesondere von Metallband, mit einem Messrollenkörper und einem den Messrollenkörper zumindest teilweise umgebenden Mantelrohr und in Ausnehmungen angeordneten Kraftsensoren bekannt, wobei sich die Ausnehmungen von einer Stirnseite der Messrolle in den Messrollenkörper und/oder in das Mantelrohr hinein erstreckt. Die Ausnehmung kann stirnseitig mit einem Deckel verschlossen werden. Die jeweils stirnseitig vorgesehenen Zapfen dieser Messrolle sind an dem Messrollenkörper ausgeformt. Nachteilig an dieser Messrolle ist die Schwächung des Messrollenkörpers, bzw. des Mantelrohrs durch die eingebrachten Ausnehmungen. Bei breiten Messrollen ist auch wie beim Tieflochbohren hierbei das Überfahren des Lagerzapfens von großem Nachteil. Ein weiteres Problem ist das Verschließen der bis zur Stirnseite eingearbeiteten Kanäle/Nuten, da diese nicht wie bei der DE 102 07 501 C1 mit Bohrwerkzeuge (runde Kanäle), sondern mit Fräswerkzeuge (eckige Kanäle) hergestellt werden.

Der Erfindung liegt das Problem zugrunde, die Aussagekraft der mit derartigen Messrollen durchgeführten Untersuchungen der Eigenschaften des über die Messrolle geführten bandförmigen Guts zu erhöhen.

Diese Aufgabe wird durch die Gegenstände der Ansprüche 1, 8, 9 und 10 gelöst. Vorteilhafte Ausführungsformen sind in den Unteransprüchen und der nachfolgenden Beschreibung näher erläutert.

Die Erfindung geht von dem Grundgedanken aus, für das Feststellen der Eigenschaft eines über eine Messrolle geführten bandförmigen Guts eine Messrolle zu verwenden, bei der in einer Ausnehmung des Messrollenkörpers der Messrolle ein erster Kraftsensor neben einem zweiten Kraftsensor angeordnet ist und die beiden Kraftsensoren so nahe beieinander angeordnet sind, dass entweder die Sensorfläche des ersten Kraftsensors an die Sensorfläche des zweiten Kraftsensors unmittelbar angrenzt oder der erste Kraftsensor so nah neben dem zweiten Kraftsensor angeordnet ist, dass der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensor am nächsten ist, und einer Linie, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt,

kleiner als 65° ist. Alternativ geht die Erfindung von dem Grundgedanken aus, eine Messrolle zu verwenden, bei der der erste Kraftsensor in einer ersten Ausnehmung des Messrollenkörpers der Messrolle und der zweite Kraftsensor in einer zur ersten Ausnehmung benachbarten zweiten Ausnehmung angeordnet ist und die beiden Kraftsensoren so nahe beieinander angeordnet sind, dass der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensor am nächsten ist, und einer Linie, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt,

kleiner als 65° ist.

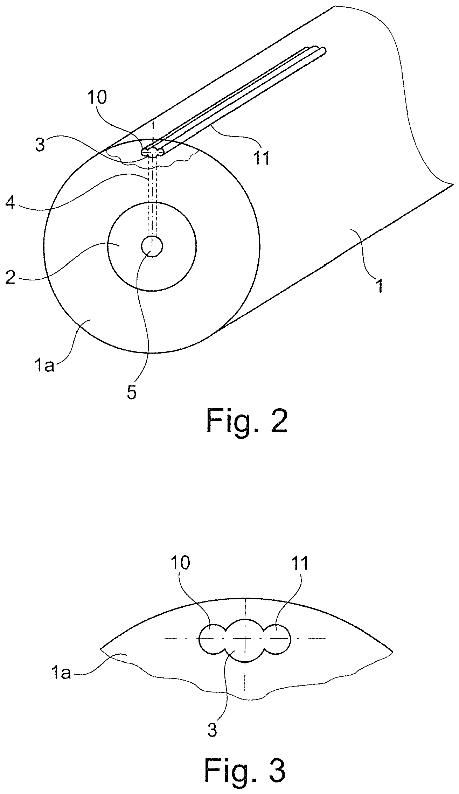

Es ist aus dem Stand der Technik bekannt, mehrere Kraftsensoren in einer Ausnehmung des Messrollenkörpers anzuordnen. DE 102 07 501 C1 lehrt in Spalte 3, Zeilen 1 und 2, mehrere Kraftsensoren in einer Ausnehmung mit Abstand voneinander anzuordnen. Die US 2013/0298625 A1 zeigt in ihrer Fig. 2 ebenfalls mehrere, beanstandet voneinander angeordnete Kraftsensoren. Die DE 10 2014 012 426 A1 lehrt in [0021], mehrere Kraftsensoren in einer Ausnehmung anzuordnen und konkretisiert diese Lehre in ihrer Fig. 2 dadurch, dass mehrere Kraftsensoren beabstandet voneinander in der Ausnehmung angeordnet sind. Dem Stand der Technik ist die allgemeine Lehre zu entnehmen, bei mehreren in einer Ausnehmung angeordneten Kraftsensoren diese deutlich beabstandet voneinander anzuordnen. Dem mag das Bestreben zugrundeliegen, die vorhandenen (wenigen) Kraftsensoren in der jeweiligen Ausnehmung möglichst breit zu verteilen, um die Messung über die durch die Länge der Ausnehmung vorgegebene mögliche Breite des Messfelds möglichst breit aufzustellen. Ferner mag dieser weit beabstandeten Anordnung der Kraftsensoren innerhalb der Ausnehmung der Gedanke zugrundeliegen, Fehlmessungen zu vermeiden. Bei der Messung einer radial auf den Messrollenkörper einer Messrolle wirkenden Kraft mittels eines Kraftsensors, der beabstandet von der Umfangsfläche des Messrollenkörpers in einer Ausnehmung des Messrollenkörpers angeordnet ist, besteht das Problem, dass die radial wirkende Kraft durch das Material des Messrollenkörpers, durch das sie hindurchdringen muss, um die Sensorfläche des Kraftsensors zu erreichen, gestreut wird. Dieses Phänomen wird als Spannungskegel oder "Rötscherkegel" bezeichnet. Dieser Effekt führt dazu, dass eine deutlich beabstandete Anordnung der Kraftsensoren voneinander innerhalb einer Ausnehmung vorgenommen wird. So kann vermieden werden, dass zwei benachbart zueinander angeordnete Kraftsensoren im Zuge der Planheitsmessung Messsignale liefern, die von einer einzigen an einem einzigen Punkt der Umfangsfläche des Messrollenkörpers einwirkenden Radialkraft verursacht werden und für einige Auswertemethoden des Standes der Technik eigentlich nur von dem einen der beiden Sensoren gemessen werden sollten.

Die Erfindung hat nun erkannt, dass sowohl innerhalb der Planheitsmessung von bandförmigem Gut, insbesondere von Metallband, aber auch bei der Feststellung anderer Eigenschaften eines über die Messrolle geführten bandförmigen Guts Vorteile erzielt werden, wenn ein erster Kraftsensor in der Ausnehmung so neben dem zweiten Kraftsensor angeordnet ist, dass entweder die Sensorfläche des ersten Kraftsensors an die Sensorfläche des zweiten Kraftsensors unmittelbar angrenzt oder der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensor am nächsten ist, und einer Linie, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt,

kleiner als 65° ist.

Eine festzustellende Eigenschaft des über die Messrolle geführten bandförmigen Guts kann dessen Lage relativ zur Messrolle sein bzw. konkreter: die Lage der Ränder des bandförmigen Guts auf der Messrolle ("Bandkantenlage").

Es wurde erkannt, dass bei der nahen Anordnung eines ersten Kraftsensors neben dem zweiten Kraftsensor zumindest für den Abschnitt entlang der Längsachse der Messrolle, in dem sich die beiden Kraftsensoren befinden, eine Überwachung der Bandkantenlage vorgenommen werden kann, beispielsweise, ob sich oberhalb des ersten Kraftsensors noch Band befindet, während oberhalb des zweiten Kraftsensors kein Band mehr die Messrolle umschlingt. Durch die Erfindung wird beispielsweise die Möglichkeit geschaffen, die beiden Kraftsensoren (oder vorzugsweise noch weitere Kraftsensoren) in einem bestimmten Abschnitt des Messrollenkörpers gemeinsam in einer Ausnehmung anzuordnen, nämlich in dem Abschnitt, in dem man aufgrund des Produktionsprozesses die Lage der Bandkante erwartet. Mittels der beiden Kraftsensoren (oder vorzugsweise mittels mehrerer dort angeordneter Kraftsensoren) lässt sich dann präzise die Lage der Bandkante in diesem Abschnitt bestimmen. Alternativ wird durch die Erfindung die Möglichkeit geschaffen, die beiden Kraftsensoren (oder vorzugsweise noch weitere Kraftsensoren) in einem bestimmten Abschnitt des Messrollenkörpers in nahe bei einander angeordneten Ausnehmungen anzuordnen, nämlich in dem Abschnitt, in dem man aufgrund des Produktionsprozesses die Lage der Bandkante erwartet. Mittels der beiden Kraftsensoren (oder vorzugsweise mittels mehrerer dort angeordneter Kraftsensoren) lässt sich dann präzise die Lage der Bandkante in diesem Abschnitt bestimmen. Ebenso kann die festzustellende Eigenschaft die Bandbreite sein. Ist die Lage der Bandkanten bekannt, so kann daraus auch die Bandbreite ermittelt werden.

Eine festzustellende Eigenschaft des über die Messrolle geführten bandförmigen Guts kann die Planheit des Bandes sein. Mit Hilfe der Einzelmesswerte der Kraftsensoren wird die örtliche Radialkraft gemessen, die durch das über den Rollenkörper bewegte Band erzeugt wird. Aus der Radialkraft wird die Bandzugspannungsverteilung bzw. die Bandplanheit, bzw. ein die Bandplanheit symbolisierender Referenzwert ("I-Unit") berechnet.

Ferner wird für die bevorzugte Ausführungsform, bei der die Ausnehmung sich in Längsrichtung des Messrollenkörpers über den gesamten Bereich des Messrollenkörpers, in dem eine Auflage des zu untersuchenden bandförmigen Guts zu erwarten ist, erstreckt und bei der eine derart ausgeführte Ausnehmung vollständig mit Kraftsensoren gefüllt ist, die jeweils eine Sensorfläche aufweisen und die jeweils bei einer Änderung der Lage der Sensorfläche ein Sensorsignal erzeugen können, und die derart angeordnet sind, dass entweder die Sensorfläche eines Kraftsensors an die Sensorfläche eines ihm benachbarten Kraftsensors unmittelbar angrenzt oder der jeweilige Kraftsensor so nah neben dem ihm benachbarten Kraftsensor angeordnet ist, dass der Winkel zwischen einer in Radialrichtung der Messrolle verlaufenden Endbegrenzungslinie, die den Punkt der Sensorfläche des jeweiligen Kraftsensors schneidet, der der Sensorfläche des ihm benachbarten Kraftsensor am nächsten ist, und einer Linie, die

- in der Ebene verläuft, die die Endbegrenzungslinie und die Linie enthält, die den Punkt der Sensorfläche des jeweiligen Kraftsensors, der der Sensorfläche des benachbarten Kraftsensor am nächsten liegt, mit dem Punkt der Sensorfläche des benachbarten Kraftsensors, der der Sensorfläche des jeweiligen Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des ihm benachbarten Kraftsensors schneidet, der der Sensorfläche des jeweiligen Kraftsensors am nächsten liegt,

kleiner als 65° ist, die Möglichkeit geschaffen, den Bandzug zu ermitteln, mit dem das bandförmige Gut über die Messrolle gezogen wird. Der Bandzug ist proportional zu der Summe der auf nebeneinander angeordneten Umfangsflächenabschnitte des Messrollenkörpers wirkenden Radialkräfte, die das über die Messrolle geführte bandförmige Gut in die Umfangsfläche einbringt. Schafft man mit der zuvor beschriebenen Ausführungsform eine Möglichkeit, die die Summe dieser Kräfte ermitteln kann, so wird eine Möglichkeit geschaffen, den Bandzug zu ermitteln. Dies bietet den Vorteil, dass innerhalb einer übergeordneten Vorrichtung, in die die erfindungsgemäße Messrolle eingebaut werden kann, weitere Messvorrichtungen zum Bestimmen des Bandzugs entfallen können. Der Bandzug ist bei der Ermittlung der Planheit des Bandes aus den Sensorsignalen der Kraftsensoren eine bei einigen Berechnungsmethoden notwendige Berechnungsgrundlage. Für die reine Messung der Planheit des bandförmigen Guts bietet die Möglichkeit der Bestimmung des Bandzugs somit den Vorteil, dass mit dergleichen Messrolle die Berechnungsgrundlage (der Bandzug) ermittelt werden, die bei der weitergehenden Auswertung der Sensorsignale für das Feststellen der Planheit des bandförmigen Guts nach einigen Berechnungsmethoden benötigt wird.

Ferner wird für die bevorzugte Ausführungsform, bei der jeder Kraftsensor in einer eigenen Ausnehmung angeordnet ist, und die Ausnehmungen mit Kraftsensoren in Längsrichtung des Messrollenkörpers über den gesamten Bereich des Messrollenkörpers, in dem eine Auflage des zu untersuchenden bandförmigen Guts zu erwarten ist, verteilt angeordnet sind und bei der die Kraftsensoren, die jeweils eine Sensorfläche aufweisen und die jeweils bei einer Änderung der Lage der Sensorfläche ein Sensorsignal erzeugen können, derart angeordnet sind, dass entweder die Sensorfläche eines Kraftsensors an die Sensorfläche eines ihm benachbarten Kraftsensors unmittelbar angrenzt oder der jeweilige Kraftsensor so nah neben dem ihm benachbarten Kraftsensor angeordnet ist, dass der Winkel zwischen einer in Radialrichtung der Messrolle verlaufenden Endbegrenzungslinie, die den Punkt der Sensorfläche des jeweiligen Kraftsensors schneidet, der der Sensorfläche des ihm benachbarten Kraftsensors am nächsten ist, und einer Linie, die

- in der Ebene verläuft, die die Endbegrenzungslinie und die Linie enthält, die den Punkt der Sensorfläche des jeweiligen Kraftsensors, der der Sensorfläche des benachbarten Kraftsensor am nächsten liegt, mit dem Punkt der Sensorfläche des benachbarten Kraftsensors, der der Sensorfläche des jeweiligen Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des ihm benachbarten Kraftsensors schneidet, der der Sensorfläche des jeweiligen Kraftsensors am nächsten liegt,

kleiner als 65° ist, die Möglichkeit geschaffen, den Bandzug zu ermitteln, mit dem das bandförmige Gut über die Messrolle gezogen wird.

Eine abstandsfreie oder nahezu abstandsfreie Anordnung der Kraftsensoren ermöglicht die gleichzeitige Messung der auf die Außenfläche über die Ballenbreite der Messrolle aufgebrachten Kraft. Aus der Summe der einzelnen Messwerte der Kraftsensoren kann unter Berücksichtigung des Bandumlenkwinkels der Bandzug bestimmt werden, mit dem das Band die Rollenoberfläche beaufschlagt. Beispielsweise ließe sich aus der Summe der einzelnen Messwerte $F_{R,i}$, also aus $F_{R,ges}$ in N

$$F_{R,ges} = \sum_{1=1}^{n} F_{R,i}$$

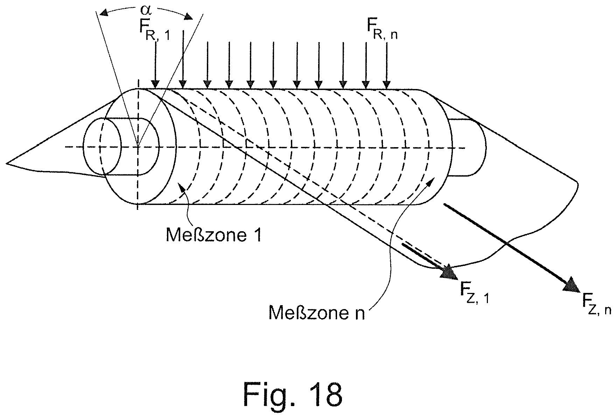

die Gesamtzugkraft $F_{Z,ges}$ in N unter Berücksichtigung des Umschlingungswinkel ALPHA (siehe auf Fig. 18) mit folgender Beziehung berechnen:

$$F_{Z,ges} = F_{R,ges} / (2 \cdot \sin \alpha/2)$$

Wird gemäß einer bevorzugten Ausführungsform die Messrolle mit einem Temperatursensor ausgestattet, so lässt sich mit dieser Ausführungsform der Messrolle sowohl die Planheit, als auch der Bandzug, als auch die Temperatur des bandförmigen Guts ermitteln. Eine solche Messrolle erlaubt es, auf beim Stand der Technik bisher separat angeordnete Messeinrichtung zum Messen des Bandzugs oder zum Messen der Temperatur zu verzichten und alle 3 Parameter mit einer Messeinrichtung, nämlich mit dem erfindungsgemäßen Verfahren zu messen.

Über die Messrollenbreite verhält sich der Temperaturverlauf im Innern der Ausnehmungswand nahezu zeitlich proportional dem Temperaturverlauf, der an der Rollenoberfläche vorherrscht. Die Rollenoberflächentemperatur wiederum ist nahezu zeitgleich proportional dem Temperaturverlauf im Band. Somit lässt sich über mehrere über die Messrollenbreite verteilten Temperatursensoren in der Messrolle mit der Messrolle der Temperaturverlauf im Band über die Bandbreite ermitteln.

Ferner besteht die Möglichkeit, mit der erfindungsgemäßen Messrolle die Bandgeschwindigkeit zu messen. Die Rotationsgeschwindigkeit der Messrolle ist proportional zu der Geschwindigkeit, mit der das die Messrolle teilweise umschlingende Band über die Messrolle geführt wird. Somit lässt sich mit Drehsensoren, die die Rotationsgeschwindigkeit der Messrolle messen, die Bandgeschwindigkeit ermitteln. Mit Hilfe eines Inkrementalgebers, der am Rollenkörper befestigt wird, kann die Umfangsgeschwindigkeit der Messrolle und daraus die Bandgeschwindigkeit des über den Rollenkörper bewegten Bandes berechnet werden.

In einer bevorzugten Ausführungsform erzeugt die Auswerteeinheit eine von dem Sensorsignal des ersten Kraftsensors und dem Sensorsignal des zweiten Kraftsensors abhängige Information, die dem Bandzug, mit dem das bandförmige Gut über die Messrolle geführt wird, entspricht oder zu dem Bandzug direkt proportional ist. Das Sensorsignal des ersten Kraftsensors und das Sensorsignal des zweiten Kraftsensors sind elektrische Signale, deren Stärke von der Größe des Betrags abhängt, um den die Lage der Sensorfläche bezüglich einer Referenzlage geändert wurde. Die Größe des Betrags, um den die Lage der Sensorfläche bezüglich einer Referenzlage geändert wurde, hängt von der Stärke der Kraft ab, die oberhalb der jeweiligen Sensorfläche radial auf die Umfangsfläche des Messrollenkörpers einwirkt. Beispielsweise mit einem durch Versuche leicht zu ermittelnden Kalibrierfaktor lässt sich in der Auswerteeinheit somit das elektrische Signal des jeweiligen Kraftsensors in eine Größe umrechnen, die der Stärke der Kraft, die oberhalb der jeweiligen Sensorfläche radial auf die Umfangsfläche des Messrollenkörpers einwirkte, beispielsweise gemessen in Newton entspricht. Die Summe der so ermittelten Einzelkräfte, also die Summe der durch die Auswerteeinheit mit Hilfe des Kalibrierfaktors entsprechend umgerechneten Sensorsignale der Kraftsensoren, ergibt den Bandzug, bzw. eine zu dem Bandzug direkt proportionale Größe. Es ist denkbar, dass die durch Summieren der mit Hilfe des Kalibrierfaktors entsprechend umgerechneten Sensorsignale der Kraftsensoren ermittelte Größe mit einem weiteren Kalibrierfaktor, der durch einfache Versuche ermittelt werden kann, in den Bandzug umgerechnet werden muss. Werden in der einen der bevorzugten Ausführungsformen die Kraftsensoren so angeordnet, dass die Sensorfläche des ersten Kraftsensors nicht unmittelbar an die Sensorfläche des zweiten Kraftsensors unmittelbar angrenzt, sondern nur so, dass der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensor am nächsten ist, und einer Linie, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt,

kleiner als 65° ist, aber zwischen den Sensorflächen ein Spalt verbleibt, dann ist es denkbar, dass die durch das reine Aufsummieren der durch die Auswerteeinheit mit Hilfe des Kalibrierfaktors entsprechend umgerechneten Sensorsignale der Kraftsensoren ermittelte Größe kleiner ist, als der Bandzug, da der Beitrag der Kräfte fehlt, die oberhalb des zwischen den Sensorflächen verbleibenden Spalts auf die Umfangsfläche des Messrollenkörpers einwirkten. Das Fehlen dieses Beitrags lässt sich jedoch pauschal durch einen Kalibrierfaktor, der durch einfache Versuche ermittelt werden kann, kompensieren.

In einer bevorzugten Ausführungsform deckt das über die Messrolle geführte bandförmige Gut einen Bereich der Umfangsfläche der Messrolle ab, wobei zumindest einmal pro Umdrehung der Messrolle die Ausnehmung durch diesen Bereich geführt wird, wobei die Ausnehmung sich parallel zur Längsachse des Messrollenkörpers erstreckt und zumindest über die parallel zur Längsachse weisende Breite des Bereichs mit einer Kette von Kraftsensoren ausgestattet ist, bei der mit Ausnahme des jeweils letzten Kraftsensors am jeweiligen Ende der Kette jeder Kraftsensor derart angeordnet ist, dass die Sensorfläche des jeweiligen Kraftsensors an die Sensorfläche eines ihm in Richtung der Kette benachbarten Kraftsensors unmittelbar angrenzt und an die Sensorfläche eines ihm entgegengesetzt der Richtung der Kette benachbarten Kraftsensors unmittelbar angrenzt oder der jeweilige Kraftsensor sowohl so nah neben dem ihm in Richtung der Kette benachbarten Kraftsensor angeordnet ist, dass der Winkel zwischen einer in Radialrichtung der Messrolle verlaufenden Endbegrenzungslinie, die den Punkt der Sensorfläche des jeweiligen Kraftsensors schneidet, der der Sensorfläche des ihm benachbarten Kraftsensors am nächsten ist, und einer Linie, die

- in der Ebene verläuft, die die Endbegrenzungslinie und die Linie enthält, die den Punkt der Sensorfläche des jeweiligen Kraftsensors, der der Sensorfläche des benachbarten Kraftsensor am nächsten liegt, mit dem Punkt der Sensorfläche des benachbarten Kraftsensors, der der Sensorfläche des jeweiligen Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des ihm benachbarten Kraftsensors schneidet, der der Sensorfläche des jeweiligen Kraftsensors am nächsten liegt,

kleiner als 65° ist
als auch so nah neben dem ihm entgegengesetzt der Richtung der Kette benachbarten Kraftsensor angeordnet ist, dass der Winkel zwischen einer in Radialrichtung der Messrolle verlaufenden Endbegrenzungslinie, die den Punkt der Sensorfläche des jeweiligen Kraftsensors schneidet, der der Sensorfläche des ihm benachbarten Kraftsensor am nächsten ist, und einer Linie, die

- in der Ebene verläuft, die die Endbegrenzungslinie und die Linie enthält, die den Punkt der Sensorfläche des jeweiligen Kraftsensors, der der Sensorfläche des benachbarten Kraftsensor am nächsten liegt, mit dem Punkt der Sensorfläche des benachbarten Kraftsensors, der der Sensorfläche des jeweiligen Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des ihm benachbarten Kraftsensors schneidet, der der Sensorfläche des jeweiligen Kraftsensors am nächsten liegt,

kleiner als 65° ist.

In einer bevorzugten Ausführungsform deckt das über die Messrolle geführte bandförmige Gut einen Bereich der Umfangsfläche der Messrolle ab, wobei zumindest einmal pro Umdrehung der Messrolle eine Kette von Ausnehmungen durch diesen Bereich geführt wird, wobei die Ausnehmungen parallel zur Längsachse des Messrollenkörpers angeordnet sind und zumindest über die parallel zur Längsachse weisende Breite des Bereichs Ausnehmungen angeordnet sind und in jeder Ausnehmung der Kette ein Kraftsensor angeordnet ist, wobei mit Ausnahme des jeweils letzten Kraftsensors am jeweiligen Ende der Kette jeder Kraftsensor derart angeordnet ist, dass der jeweilige Kraftsensor sowohl so nah neben dem ihm in Richtung der Kette benachbarten Kraftsensor angeordnet ist, dass der Winkel zwischen einer in Radialrichtung der Messrolle verlaufenden Endbegrenzungslinie, die den Punkt der Sensorfläche des jeweiligen Kraftsensors schneidet, der der Sensorfläche des ihm benachbarten Kraftsensor am nächsten ist, und einer Linie, die

- in der Ebene verläuft, die die Endbegrenzungslinie und die Linie enthält, die den Punkt der Sensorfläche des jeweiligen Kraftsensors, der der Sensorfläche des benachbarten Kraftsensor am nächsten liegt, mit dem Punkt der Sensorfläche des benachbarten Kraftsensors, der der Sensorfläche des jeweiligen Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des ihm benachbarten Kraftsensors schneidet, der der Sensorfläche des jeweiligen Kraftsensors am nächsten liegt,

kleiner als 65° ist
als auch so nah neben dem ihm entgegengesetzt der Richtung der Kette benachbarten Kraftsensor angeordnet ist, dass der Winkel zwischen einer in Radialrichtung der Messrolle verlaufenden Endbegrenzungslinie, die den Punkt der Sensorfläche des jeweiligen Kraftsensors schneidet, der der Sensorfläche des ihm benachbarten Kraftsensor am nächsten ist, und einer Linie, die

- in der Ebene verläuft, die die Endbegrenzungslinie und die Linie enthält, die den Punkt der Sensorfläche des jeweiligen Kraftsensors, der der Sensorfläche des benachbarten Kraftsensor am nächsten liegt, mit dem Punkt der Sensorfläche des benachbarten Kraftsensors, der der Sensorfläche des jeweiligen Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des ihm benachbarten Kraftsensors schneidet, der der Sensorfläche des jeweiligen Kraftsensors am nächsten liegt, kleiner als 65° ist.

In einer bevorzugten Ausführungsform gibt die Information an, welcher Kraftsensor sich in Radialrichtung des Messrollenkörpers gesehen unterhalb eines Bereichs befindet, der von dem über die Messrolle geführten bandförmigen Gut abgedeckt wird. Es sind Ausführungsformen denkbar, bei denen die einzelnen Kraftsensoren mit Bezugszeichen, vorzugsweise Nummern versehen werden und die Information durch Wiedergabe der entsprechenden Bezugszeichen beispielsweise angibt, welche Kraftsensoren von dem Band überdeckt werden. Auch ist denkbar, dass die Information durch Wiedergabe der entsprechenden Bezugszeichen beispielsweise angibt, welche Kraftsensoren nicht vom Band überdeckt werden. Denkbar ist auch, dass die Information nur das Bezugszeichen des letzten überdeckten Kraftsensors angibt oder beispielsweise das Bezugszeichen des ersten nicht mehr überdeckten Kraftsensors angibt. Auch sind Ausführungsformen möglich, bei denen die Lage der einzelnen Kraftsensoren relativ zu einem Bezugspunkt der Messrolle, bspw. dem Rand der Messrolle oder aber bspw. der Mitte der Messrolle in der Auswerteeinheit abgelegt ist. Damit erhält die Auswerteeinheit die Möglichkeit, die Lage der Bandkante in Bezug zu diesem Bezugspunkt auszudrücken. Liegt der letzte Kraftsensor, der noch durch das Band überdeckt wird, beispielsweise 250 mm von der Mitte der Messrolle entfernt, so kann die Auswerteeinheit die Information ausgeben, dass die Bandkante 250 mm entfernt von der Mitte der Messrolle liegt.

In einer bevorzugten Ausführungsform weist die Messrolle einen Temperatursensor auf, wobei die Auswerteeinheit zusätzlich zu der von der Auswerteeinheit erzeugten Information die von dem Temperatursensor gemessene Temperatur oder eine von der von dem Temperatursensor gemessene Temperatur abhängige Größe ausgibt.

In einer bevorzugten Ausführungsform erzeugt die Auswerteeinheit eine von dem Sensorsignal des ersten Kraftsensors und dem Sensorsignal des zweiten Kraftsensors abhängige weitere Information, die von der Planheit des über die Messrolle geführten bandförmigen Gutes abhängt.

Die Messrolle weist einen Messrollenkörper auf. Vorzugsweise weist der Messrollenkörper eine geschlossene Umfangsfläche auf. In einer bevorzugten Ausführungsform ist der Messrollenkörper eine Vollrolle, die sich entlang einer Längsachse erstreckt. Unter einer Vollrolle wird ein Messrollenkörper verstanden, der einstückig ist und dessen Form entweder mit einem Urformverfahren, beispielsweise Gießen, hergestellt wurde und/oder dessen geometrische Form durch Trennverfahren, insbesondere durch Zerspanen, insbesondere durch Drehen, Bohren, Fräsen oder Schleifen aus einem einstückigen Halbzeug hergestellt wird. In einer bevorzugten Ausführungsform sind bei einem solchen als Vollrolle ausgebildeten Messrollenkörper auch die jeweils stirnseitig der Messrolle angeordneten Messrollenzapfen zur drehbaren Lagerung der Messrolle, beispielsweise in Kugellagern, Teil des einstückigen Körpers. Es sind jedoch auch Bauformen, wie sie beispielsweise Fig. 2 der DE 20 2014 006 820 U1 dargestellt werden, denkbar, bei denen der Hauptteil des Messrollenkörpers als zylinderförmige Vollrolle ausgeführt wird, die stirnseits angeordnete Deckel aufweist, an denen die Messrollenzapfen ausgeführt sind.

Der Messrollenkörper der erfindungsgemäßen Messrolle weist eine geschlossene Umfangsfläche auf. Dies kann beispielsweise dadurch erreicht werden, dass der Messrollenkörper als Vollrolle ausgebildet wird und alle in dem Messrollenkörper vorgesehenen Ausnehmungen derart ausgebildet sind, dass keine Ausnehmung von der Ausnehmung zur Umfangsfläche führt. Bei einer solchen Ausführungsform werden die Ausnehmungen insbesondere bevorzugt axial geführt und weisen eine Öffnung an einer Stirnseite des Messrollenkörpers auf oder es werden Querkanäle innerhalb des Messrollenkörpers vorgesehen, die von der Ausnehmung aus radial weiter in das Innere des Messrollenkörpers führen, beispielsweise zu einem Sammelkanal in der Mitte des Messrollenkörpers. Eine geschlossene Umfangsfläche des Messrollenkörpers lässt sich ferner dadurch erzielen, dass bei Ausführungsformen, bei denen die jeweilige Ausnehmung eine in Richtung auf die Umfangsfläche führende Ausnehmung aufweist, diese durch ein Verschlusselement verschlossen werden. Ein derartiges Verschlusselement kann ein einen Grundkörper des Messrollenkörpers gesamthaft umgebendes Mantelrohr sein, wie beispielsweise in den Fig. 3 und 4 der DE 10 2014 012 426 A1 gezeigt. Das Verschlusselement kann jedoch auch nach Art der in DE 197 47 655 A1 gezeigten Abdeckung ausgebildet sein. In einer bevorzugten Ausführungsform weist die Messrolle jedoch kein Mantelrohr auf, sondern ist als Vollrolle ausgeführt, entweder als solche, bei der keine Ausnehmung von der Ausnehmung zur Umfangsfläche führt, oder als solche, bei der die jeweilige Ausnehmung eine in Richtung auf die Umfangsfläche führende Ausnehmung ist, die aber durch ein Verschlusselement, wie beispielsweise eine Abdeckung, verschlossen wird. Zudem sind Beschichtungen, beispielsweise der Umfangsfläche der Vollrolle denkbar, beispielsweise zur Reduktion der Reibung oder zum Schutz des über die Messrolle zu führenden bandförmigen Guts.

In dem Messrollenkörper der erfindungsgemäßen Messrolle ist mindestens eine Ausnehmung vorgesehen. Es hat sich gezeigt, dass die Vorzüge der Erfindung bereits mit einer einzigen Ausnehmung im Messrollenkörper erreicht werden können. Wird die erfindungsgemäße Messrolle beispielsweise zum Ermitteln des Bandzugs verwendet, so kann es ausreichen, diese Information einmal pro Umdrehung der Messrolle bereitzustellen. Somit kann eine erfindungsgemäße Messrolle mit einer einzigen Ausnehmung bereits sinnvoll eingesetzt werden. Ebenso ist es bei der Planheitsmessung denkbar, eine Information über die Planheit des über die Messrolle geführten bandförmigen Guts einmal pro Umdrehung der Messrolle bereitzustellen.

In einer bevorzugten Ausführungsform weist der Messrollenkörper mehrere Ausnehmungen auf. In einer bevorzugten Ausführungsform sind die Ausnehmungen im gleichen radialen Abstand zur Längsachse des Messrollenkörpers ausgeführt. In einer bevorzugten Ausführungsform sind alle Ausnehmungen in Umfangsrichtung äquidistant zueinander verteilt angeordnet. Es sind aber auch Ausführungsformen denkbar, bei denen eine erste Gruppe von Ausnehmungen vorgesehen ist, die insbesondere bevorzugt im gleichen radialen Abstand zur Längsachse und in Umfangsrichtung äquidistant verteilt angeordnet sind, und bei dem zusätzlich zu dieser ersten Gruppe von Ausnehmungen zumindest eine weitere Ausnehmung vorgesehen ist, die entweder bezüglich ihres radialen Abstands zur Längsachse anders ausgeführt ist, als die Ausnehmungen der ersten Gruppe und/oder nicht den gleichen Abstand in Umfangsrichtung zu den übrigen Ausnehmungen aufweist, wie die übrigen Ausnehmung zueinander aufweisen. So ist es beispielsweise denkbar, eine Messrolle hinsichtlich der Planheitsmessung so auszuführen, wie eine Messrolle des Standes der Technik, beispielsweise wie die aus DE 102 07 501 bekannte Vollrolle oder die aus DE 10 2014 012 426 A1 bekannten Messrollen, um dann aber für die erfindungsgemäße Ausstattung diese Messrollen des Standes der Technik mit einer weiteren, außerhalb des Rasters ausgeführten Ausnehmung zu versehen, mit der beispielsweise eine andere Messung bspw. die Messung des Bandzugs durchgeführt wird. Vorzugsweise sind die in diesem Absatz genannten Ausnehmungen solche, die in Axialrichtung des Messrollenkörpers verlaufen. Es sind auch Ausführungsformen denkbar, bei der die Messrolle eine einzige Ausnehmung aufweist und alle Kraftsensoren der Messrolle in einer einzigen Ausnehmung, beispielsweise in einer einzigen axial verlaufenden Ausnehmung angeordnet sind.

In einer bevorzugten Ausführungsform weist der Messrollenkörper eine geschlossene Umfangsfläche auf und wird stirnseitig jeweils durch eine Stirnseite abgeschlossen. In einer bevorzugten Ausführungsform sind die Stirnseiten im Winkel von 90° zur Umfangsfläche angeordnet.

In einer bevorzugten Ausführungsform weist die Messrolle Lagerzapfen auf. In einer bevorzugten Ausführungsform sind die Lagerzapfen bei Ausführungsformen der Messrolle mit Stirnseiten die Lagerzapfen an den Stirnseiten ausgebildet.

In einer bevorzugten Ausführungsform ist der Messrollenkörper zylinderförmig ausgeführt.

Die erfindungsgemäße Messrolle ist in einer ersten Variante der Erfindung mit mindestens einer Ausnehmung in dem Messrollenkörper ausgeführt, die beabstandet zu der Umfangsfläche angeordnet ist, wobei die Ausnehmung sich nicht zur Umfangsfläche hin öffnet, bzw. keine von der Ausnehmung fortführende weitere Ausnehmung, beispielsweise keine Bohrung zur Umfangsfläche führt. In einer zweiten Variante der Erfindung führt die Ausnehmung von der Umfangsfläche in das Innere des Messrollenkörpers, ist aber durch ein Verschlusselement verschlossen. In einer bevorzugten Ausführungsform sind bei den Ausführungsformen, in denen die Messrolle mit mehreren Ausnehmungen in dem Messrollenkörper ausgeführt ist, die beabstandet zu den Umfangsflächen angeordnet sind, entweder alle Ausnehmungen derart ausgeführt, dass keine Ausnehmung, bspw. keine Bohrung von der Ausnehmung zur Umfangsfläche führt (und auch nicht die Ausnehmung selbst in die Umfangsfläche mündet), oder es sind einige Ausnehmungen derart ausgeführt, dass keine Ausnehmung von der jeweiligen Ausnehmung zur Umfangsfläche führt, während bei anderen Ausnehmungen eine in Richtung auf die Umfangsfläche führende Ausnehmung vorgesehen ist, die aber durch ein Verschlusselement verschlossen ist. Das Verschlusselement ist - wie vorstehend ausgeführt - eine Abdeckung oder beispielsweise ein Mantelrohr.

In einer bevorzugten Ausführungsform erstreckt sich eine Ausnehmung des Messrollenkörpers in eine Richtung parallel zur Längsachse des Messrollenkörpers. Sind gemäß einer bevorzugten Ausführungsform mehrere Ausnehmungen in dem Messrollenkörper vorgesehen, so ist es bevorzugt, dass alle Ausnehmungen des Messrollenkörpers sich jeweils in eine Richtung parallel zur Längsachse des Messrollenkörpers erstrecken. In einer bevorzugten Ausführungsform mündet die jeweilige Ausnehmung zumindest an einem ihrer Enden, vorzugweise an beiden ihrer Enden an einer Stirnfläche des Messrollenkörpers. Eine an einer Stirnseite eines Messrollenkörpers endende Ausnehmung kann durch eine Endkappe verschlossen sein, wobei diese Endkappe nur diese Ausnehmung verschließt. Ebenso sind Ausführungsformen denkbar, bei denen die Stirnseite des Messrollenkörpers durch einen Deckel gesamthaft verschlossen wird, wie beispielsweise in Fig. 1 und 2, bzw. Fig. 4 der DE 10 2014 012 426 A1 gezeigt.

In einer bevorzugten Ausführungsform ist die Ausnehmung langgestreckt ausgeführt, wobei unter "langgestreckt" verstanden wird, dass die Ausnehmung in eine erste Richtung (in die Längsrichtung der Ausnehmung) größer ist als in irgendeine senkrecht zu dieser Richtung stehenden Richtung. In einer bevorzugten Ausführungsform ist die Erstreckung der langgestreckten Ausnehmung in Längsrichtung um das Zweifache oder insbesondere bevorzugt um mehr als das Zweifache größer als in irgendeine senkrecht zu dieser Richtung stehende Richtung. In einer bevorzugten Ausführungsform schließt die Längsrichtung der Ausnehmung mit der Längsrichtung des Messrollenkörpers einen Winkel ein, der kleiner ist als 75°, insbesondere bevorzugt <45°, insbesondere bevorzugt <30°, insbesondere bevorzugt <10°, insbesondere bevorzugt <5° ist. In einer bevorzugten Ausführungsform steht die Längsrichtung der Ausnehmung nicht senkrecht zur Längsachse des Messrollenkörpers. Sollten sich - was in einer Ausführungsform denkbar wäre - die Längsachse der Ausnehmung und die Längsachse des Messrollenkörpers nicht schneiden, so gilt die vorstehend genannte Auslegungsregel für die Projektion der Längsachse der Ausnehmung auf die Ebene, die die Längsachse des Messrollenkörpers enthält. Bei diesen Ausführungsformen ist demnach die Projektion der Längsachse der Ausnehmung auf eine Ebene, die die Längsachse des Messrollenkörpers enthält, derart ausgeführt, dass die Projektion der Längsrichtung der Ausnehmung mit der Längsrichtung des Messrollenkörpers einen Winkel einschließt, der kleiner ist als 75°, insbesondere bevorzugt <45°, insbesondere bevorzugt <30°, insbesondere bevorzugt <10°, insbesondere bevorzugt <5° ist. In den bevorzugten Ausführungsformen, in denen sich die Ausnehmung parallel zur Längsachse des Messrollenkörpers erstreckt, schneidet die Längsachse der Ausnehmung offensichtlich die Längsachse des Messrollenkörpers nicht, ebenso wenig wie eine Projektion der Längsachse auf eine Ebene, die die Längsachse des Messrollenkörpers enthält, die Längsachse des Messrollenkörpers nicht schneidet. In DE 20 2007 001 066 U1 wird beispielsweise eine Messrolle mit langgestreckt ausgeführten Ausnehmungen gezeigt.

In anderen bevorzugten Ausführungsformen sind die Ausnehmungen nicht langgestreckt sondern als radial verlaufende Taschen ausgeführt, wie sie beispielsweise in DE 198 38 457 A1 dargestellt sind. Bei diesen Ausführungsformen können die radial verlaufenden Ausnehmungen in ihrem Querschnitt entweder so groß ausgeführt sein, dass sie zwei Kraftsensoren aufnehmen können, beispielsweise wenn der Querschnitt die Form der Zahl 8 hat. Alternativ kann bei diesen Ausführungsformen jeweils ein Kraftsensor pro Ausnehmung vorgesehen sein, wobei aber die Ausnehmungen derart nah bei einander angeordnet sind, dass der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensor am nächsten ist, und einer Linie, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt,

kleiner als 65° ist.

In bevorzugten Ausführungsform sind in einer Ausnehmung (wenn die Messrolle nur eine Ausnehmung aufweist:

in der Ausnehmung) der Messrolle ein erster Kraftsensor und ein zweiter Kraftsensor angeordnet. Der erste Kraftsensor weist eine Sensorfläche auf, wobei der Kraftsensor bei einer Änderung der Lage der Sensorfläche des ersten Kraftsensors ein Sensorsignal erzeugen kann. Ferner weist der zweite Kraftsensor eine Sensorfläche auf, wobei der zweite Kraftsensor bei einer Änderung der Lage der Sensorfläche des zweiten Kraftsensors ein Sensorsignal erzeugen kann. Kraftsensoren werden als Kraftsensor bezeichnet, weil sie dazu eingesetzt werden, Kräfte, insbesondere bevorzugt Druckkräfte zu messen. Um die auf sie wirkende Kraft zu messen, sind die Kraftsensoren derart ausgeführt, dass sie eine Sensorfläche aufweisen und bei einer Änderung der Lage der Sensorfläche ein Sensorsignal erzeugen können. Die Kraftsensoren weisen meist ein ihnen zugehöriges Bezugssystem auf und reagieren auf Änderungen der Lage der Sensorfläche in diesem Bezugssystem. Häufig weisen Kraftsensoren ein Gehäuse auf. Das Bezugssystem ist dann häufig das Gehäuse. Der Kraftsensor kann bei einer solchen Ausführungsform beispielsweise feststellen, ob sich die Lage der Sensorfläche relativ zu dem Gehäuse geändert hat. Ist der Kraftsensor beispielsweise als piezoelektrischer Kraftsensor ausgeführt, so weist er einen Piezo-Quarz auf, der ein elektrisches Signal erzeugen kann, wenn die Lage einer seiner Oberflächen relativ zu einer Bezugsfläche, beispielsweise einer gegenüberliegenden Oberfläche des Piezo-Quarz geändert wird, der Piezo-Quarz beispielsweise zusammengedrückt wird. Bei einem als Dehnungsmessstreifen ausgeführten Kraftsensor wird durch eine Lageänderung der Oberfläche des Kraftsensors die Länge des Messdrahts, bzw. des aus Messdrähten gebildeten Messgitters geändert, meist gestreckt, teilweise aber auch gestaucht. Bei einem als optischen Kraftsensor ausgestalteten Kraftsensor werden die optischen Eigenschaften des Kraftsensors, beispielsweise der Brechungsindex oder Reflektionseigenschaften durch die Lageränderung der Oberfläche geändert.

Die erfindungsgemäß einzusetzenden Kraftsensoren weisen eine Sensorfläche auf, deren Lageänderung der Kraftsensor zur Bestimmung einer auf ihn wirkenden Kraft beobachtet. Es sind Ausführungsformen denkbar, bei denen die Sensorfläche eine Oberfläche des Elements ist, dessen Eigenschaften zur Erzeugung des Sensorsignals geändert werden, beispielsweise eine Oberfläche des Piezo-Quarzes selbst. Häufig sind bei derartigen Kraftsensoren jedoch Zwischenstücke vorgesehen, an denen die Sensorfläche ausgebildet ist. Häufig sind derartige Zwischenstücke starre Blöcke, bei denen eine Veränderung der Lage der einen Oberfläche des starren Blocks aufgrund der Starrheit des Blocks unmittelbar zu einer Veränderung der Lage der gegenüberliegenden Fläche führt. Derartige Zwischenstücke können dazu eingesetzt werden, die Sensorfläche von übrigen Teilen des Kraftsensors, insbesondere von einem Gehäuse überstehend auszubilden. Durch eine gegenüber anderen Teilen des Kraftsensors überstehende Sensorfläche wird die Messgenauigkeit erhöht, weil eine klar definierte Fläche geschaffen wird, auf die die Umgebung einwirken kann. Durch überstehende Sensorflächen können beispielsweise Messfehler durch Kraftnebenschluss verhindert werden. Der einzusetzende Kraftsensor kann beispielsweise wie der in DE 1 773 551 A1 gezeigte Kraftsensor ausgeführt sein und ein in einem Gehäuse angeordnetes, aus einer mehrschichtigen Kristallanordnung bestehendes Piezoelement aufweisen, das zwischen zwei Kraftübertragungsscheiben angeordnet ist. Bei einer solchen Ausführungsform wäre die Sensorfläche die Außenoberfläche der in Fig. 1 der DE 1 773 551 A1 oberen Kraftübertragungsscheibe oder die Außenoberfläche der in Fig. 1 der DE 1 773 551 A1 unteren Kraftübertragungsscheibe.

In einer bevorzugten Ausführungsform ist die Sensorfläche eben ausgeführt. In einer bevorzugten Ausführungsform weist die Flächennormale der ebenen Sensorfläche des ersten Kraftsensors in Richtung auf die Umfangsfläche. Die Flächennormale der Sensorfläche des zweiten Kraftsensors ist in einer bevorzugten Ausführungsform ebenfalls eben ausgeführt und weist in einer bevorzugten Ausführungsform ebenfalls in Richtung auf die Umfangsfläche. In einer bevorzugten Ausführungsform ist die Flächennormale der Sensorfläche des ersten Kraftsensors parallel zur Flächennormale der Sensorfläche des zweiten Kraftsensors. In einer bevorzugten Ausführungsform ist eine Radialrichtung des Messrollenkörpers eine Flächennormale der Sensorfläche des ersten und/oder des zweiten Kraftsensors.

In einer bevorzugten Ausführungsform steht die Flächennormale einer eben ausgeführten Sensorfläche an dem Punkt der Sensorfläche, an dem die Sensorfläche von einer Radialen des Messrollenkörpers geschnitten wird, in einem Winkel zu dieser Radialen des Messrollenkörpers, der kleiner ist als 45°, insbesondere bevorzugt kleiner als 20°, insbesondere bevorzugt kleiner als 10°, insbesondere bevorzugt kleiner als 5° ist.

In einer bevorzugten Ausführungsform ist die Sensorfläche eines in der erfindungsgemäßen Messrolle eingesetzten Kraftsensors, insbesondere des ersten Kraftsensors und/oder des zweiten Kraftsensors eine ebene Fläche.

In einer bevorzugten Ausführungsform ist die Sensorfläche des ersten Kraftsensors symmetrisch bezüglich der Ebene ausgeführt, die die Längsachse des Messrollenkörpers enthält und die die Sensorfläche des Kraftsensors schneidet und in der auch eine Flächennormale der Sensorfläche liegt.

In einer bevorzugten Ausführungsform ist die Sensorfläche ringförmig, insbesondere kreisringförmig ausgeführt. Ebenso bevorzugt werden Ausführungsformen, bei denen die Sensorfläche kreisförmig oder elliptisch ausgeführt ist. Auch sind rechteckige, quadratische oder polygone Sensorflächen denkbar. In einer bevorzugten Ausführungsform ist die Sensorfläche eben ausgeführt.

In einer bevorzugten Ausführungsform ist die Sensorfläche eine von übrigen Elementen des Kraftsensors hervorgehobene Fläche, die im Kontakt mit einer Begrenzungsfläche der Ausnehmung steht, bzw. die im Kontakt mit einem die Ausnehmung zur Umfangsfläche hin verschließenden Verschlusselement steht.

In einer bevorzugten Ausführungsform sind zumindest zwei in der erfindungsgemäßen Messrolle eingesetzten Kraftsensoren, insbesondere bevorzugt die Mehrzahl der in der erfindungsgemäßen Messrolle eingesetzten Kraftsensoren, insbesondere bevorzugt alle in der erfindungsgemäßen Messrolle eingesetzten Kraftsensoren gleichartig ausgeführt, mithin vom gleichen Typ und insbesondere von der gleichen Baureihe, insbesondere bevorzugt identisch aufgebaut.

Gemäß einer ersten Alternativen der erfindungsgemäßen Messrolle ist der erste Kraftsensor in der Ausnehmung neben dem zweiten Kraftsensor angeordnet. Das bedeutet, dass die Sensorfläche des ersten Kraftsensors näher zu einer Stirnseite des Messrollenkörpers angeordnet ist, als die Sensorfläche des zweiten Kraftsensors. Es ist denkbar, dass der erste Kraftsensor in der Ausnehmung in Umfangsrichtung versetzt zu dem zweiten Kraftsensor angeordnet ist. In einer bevorzugten Ausführungsform sind der erste Kraftsensor und der zweite Kraftsensors in Umfangsrichtung jedoch nicht versetzt zueinander angeordnet.

In einer bevorzugten Ausführungsform sind der erste Kraftsensor und der zweite Kraftsensor im gleichen radialen Abstand zur Längsachse des Messrollenkörpers angeordnet.

Bei der erfindungsgemäßen Messrolle ist vorgesehen, dass entweder die Sensorfläche des ersten Kraftsensors an die Sensorfläche des zweiten Kraftsensors unmittelbar angrenzt oder dass der erste Kraftsensor so nah neben dem zweiten Kraftsensor angeordnet ist, dass der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensor am nächsten ist, und einer Linie, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt,

kleiner als 65° ist.

Von den beiden vorstehend genannten erfindungsgemäßen Alternativen ist insbesondere die bevorzugt, bei der die Sensorfläche des ersten Kraftsensors an die Sensorfläche des zweiten Kraftsensors unmittelbar angrenzt. Beispielsweise würde bei kreisförmigen oder kreisringförmigen Sensorflächen somit ein auf dem Umfang der kreisförmig oder kreisringförmig ausgeführten ersten Sensorfläche liegender Punkt an einem auf dem Umfang der kreisförmig oder kreisringförmig ausgeführten zweiten Sensorfläche liegenden Punkt angrenzen. In einer solchen Ausgestaltung der Erfindung könnten die auf den Umfang der Messrolle wirkenden Radialkräfte lückenlos gemessen werden. Es steht aber zu erwarten, dass eine derartige Anordnung zu einem Kraftnebenschluss führt und Bewegungen der ersten Sensorfläche aufgrund von auf die erste Sensorfläche wirkenden Kräften zu Bewegungen der zweiten Sensorfläche führen, beispielsweise durch Reibung an den Umfangsrändern der Sensorflächen. Ein Kraftnebenschluss könnte nur verhindert werden, wenn die Umfangsflächen der Sensorflächen so glatt ausgeführt sind, dass keine Reibkräfte übertragen werden. Es ist deshalb davon auszugehen, dass die Sensorflächen in der praktisch relevanten Umsetzung hauptsächlich leicht beabstandet zueinander angeordnet werden, um die Messergebnisse der jeweiligen Sensorfläche nicht durch Belastungen einer benachbarten Sensorfläche zu beeinflussen.

In der anderen erfindungsgemäßen Alternative sind die Sensorflächen zwar beabstandet voneinander angeordnet, aber so nah beieinander, dass der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensors am nächsten ist, und einer Linie, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt,

kleiner als 65° ist.

Die erfindungsgemäß beanspruchte Auslegungsregel geht von einer radial verlaufenden Endbegrenzungslinie aus. Die Messrolle wird im praktischen Einsatz regelmäßig für das Messen von radial wirkenden Kräften eingesetzt werden. Diese Kräfte treten auf, wenn das zu untersuchende bandförmige Gut die Messrolle teilweise umschlingt. Die Endbegrenzungslinie legt durch den Punkt, in dem sie die Umfangsfläche schneidet, den Punkt fest, an dem eine radial wirkende Kraft noch gerade oberhalb der Sensorfläche des einen Kraftsensors liegt; und sei es bei einer kreisförmig oder kreisringförmig ausgeführten Sensorfläche auch nur oberhalb eines an dem Umfang der Sensorfläche liegenden Punkts.

Ausgehend von dieser Endbegrenzungslinie legt die Erfindung den Abstand zur benachbarten Sensorfläche über die Winkellage einer Linie fest, die

- in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des zweiten Kraftsensors schneidet, der der Sensorfläche des ersten Kraftsensors am nächsten liegt.

Erfindungsgemäß ist der Winkel zwischen diesen Linien kleiner als 65°, insbesondere bevorzugt kleiner als 55° und besonders bevorzugt kleiner oder gleich 45°, besonders bevorzugt kleiner oder gleich 40°, besonders bevorzugt kleiner oder gleich 35°, besonders bevorzugt kleiner oder gleich 30°, besonders bevorzugt kleiner oder gleich 20°, besonders bevorzugt kleiner oder gleich 10°, besonders bevorzugt kleiner oder gleich 5°.

Erfindungsgemäß sind somit auch Ausführungsformen vorgesehen, bei denen Teile der zweiten Sensorfläche innerhalb des "Rötscherkegel" liegen, der von einer radial wirkenden Kraft ausgeht, die im Schnittpunkt der Endbegrenzungslinie und der Umfangsfläche auf die Umfangsfläche wirkt.

In einer bevorzugten Ausführungsform verläuft die Linie, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, parallel zur Längsachse der Messrolle. Dies ist insbesondere dann der Fall, wenn der erste Kraftsensor und der zweite Kraftsensor in einer langgestreckten Ausnehmung angeordnet sind und die Richtung der Längserstreckung der Ausnehmung parallel zur Längsachse der Messrolle verläuft. Es sind jedoch auch Ausführungsformen denkbar, bei denen der erste Kraftsensor in einer ersten radialen Ausnehmung, vorzugsweise einer Tasche, angeordnet ist, und der zweite Kraftsensor in einer zweiten radialen Ausnehmung, vorzugsweise einer Tasche, angeordnet ist. Bei einer solchen Ausführungsform kann die Linie, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, ebenfalls parallel zur Längsachse der Messrolle verlaufen. Es sind jedoch auch Ausführungsformen denkbar, bei denen die radiale Ausnehmung des ersten Kraftsensors axial (in Richtung der Längsachse der Messrolle) und in Umfangrichtung der Messrolle versetzt zur radialen Ausnehmung des zweiten Kraftsensors angeordnet ist. In solchen Ausführungsformen würde die Linie, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, nicht parallel zur Längsachse der Messrolle verlaufen. Eine solche Ausrichtung der Linie ist auch bei langgestreckten Ausnehmungen gegeben, deren Längserstreckung nicht parallel zur Längsachse des Messrollenkörpers verläuft, sondern auch eine in Umfangsrichtung weisende Komponente hat.

Erfindungsgemäss verläuft die Linie, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, in einem Winkel zu einer Ebene, die senkrecht zur Längsachse der Messrolle steht, in einem Winkel von >10°, insbesondere bevorzugt in einem Winkel von >15°, insbesondere bevorzugt in einem Winkel von >20°, insbesondere bevorzugt in einem Winkel von >25°, insbesondere bevorzugt in einem Winkel von >30°, insbesondere bevorzugt in einem Winkel von >45°. In einer bevorzugten Ausführungsform ist der Winkel ≤ 90°. Ist der Winkel gemäß einer besonders bevorzugten Ausführungsform 90°, so verläuft die Linie, die die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, parallel zur Längsachse der Messrolle. In einer bevorzugten Ausführungsform liegen der Punkt der Sensorfläche des ersten Kraftsensors, der der Sensorfläche des zweiten Kraftsensors am nächsten liegt, und der Punkt der Sensorfläche des zweiten Kraftsensors, der der Sensorfläche des ersten Kraftsensors am nächsten liegt, nicht in Umfangsrichtung hintereinander

Die erfindungsgemäße Erkenntnis lässt sich für Ausführungsformen, bei denen die Sensorfläche an der Ausnehmungsbegrenzungsfläche anliegt, die der Umfangsfläche des Messrollenkörpers am nächsten liegt, auch in Abhängigkeit der Höhe des Stegs ausdrücken, wobei als Steg das Material zwischen der Umfangsfläche des Messrollenkörpers und der Ausnehmungsbegrenzungsfläche, die der Umfangsfläche des Messrollenkörpers am nächsten liegt, verstanden wird. Steghöhen können bei mehr als 2 mm, vorzugsweise bei 5 mm oder mehr liegen und liegen vorzugsweise bei weniger als 20 mm, vorzugsweise bei weniger als 15 mm und insbesondere bevorzugt bei gleich oder weniger als 12 mm. In einer alternativen Ausdrucksweise der erfindungsgemäßen Erkenntnis ist der Punkt der Sensorfläche des ersten Kraftsensors, der der Sensorfläche des zweiten Kraftsensor am nächsten liegt, um weniger als das 2,2-fache der Steghöhe entfernt von dem Punkt der Sensorfläche des zweiten Kraftsensors, der der Sensorfläche des ersten Kraftsensors am nächsten liegt, vorzugsweise um weniger als das 2-fache, insbesondere bevorzugt um gleich oder weniger als das 1-fach der Steghöhe.

In einer bevorzugten Ausführungsform sind der erste Kraftsensor und der zweite Kraftsensor in einer Ausnehmung angeordnet, die von der einen Stirnseite des Messrollenkörpers zur gegenüberliegenden Stirnseite des Messrollenkörpers führt. In einer alternativen Bauform führt die Ausnehmung, in der sich der erste Kraftsensor und der zweite Kraftsensor befinden, in Richtung parallel zur Längsachse des Messrollenkörpers und erstreckt sich über mindestens 50%, insbesondere bevorzugt mindestens 60%, insbesondere bevorzugt mindestens 75%, insbesondere bevorzugt mindestens 80%, insbesondere bevorzugt mindestens 90%, insbesondere bevorzugt mindestens 95% der Länge des Messrollenkörpers, wie sie sich ergibt, wenn man sie von Stirnseite zu Stirnseite misst (also ohne Berücksichtigung der Zapfen).

In der Ausführungsform, bei denen die Messrolle mehrere Ausnehmungen aufweist, sind Ausführungsformen denkbar, bei denen alle Ausnehmungen gleichartig ausgeführt sind, also zueinander parallele Längserstreckungen aufweisen und gleiche Längen aufweisen. In einer alternativen Ausführungsform ist es denkbar, eine Messrolle mit mehreren Ausnehmungen derart auszuführen, dass zumindest eine Ausnehmung die vorstehende Auslegungsregel erfüllt, also sich über mindestens 50%, insbesondere bevorzugt mindestens 60%, insbesondere bevorzugt mindestens 75%, insbesondere bevorzugt mindestens 80%, insbesondere bevorzugt mindestens 90%, insbesondere bevorzugt mindestens 95% der Länge des Messrollenkörpers, wie sie sich ergibt, wenn man sie von Stirnseite zu Stirnseite misst (also ohne Berücksichtigung der Zapfen) erstreckt, während es für die anderen Ausnehmungen denkbar ist, dass diese kürzer ausgeführt sind. Fig. 5 der DE 102 07 501 C1 zeigt eine Möglichkeit, die Tiefe der Ausnehmungen helixförmig zu staffeln. Eine solche Ausführungsform könnte hinsichtlich der Wahl der Längen der Ausnehmungen so ergänzt werden, dass eine der dort gezeigten axial verlaufenden Ausnehmungen derart ausgeführt wird, dass sie von einer Stirnseite bis zur gegenüberliegenden Stirnseite der Messrolle verläuft.

In einer bevorzugten Ausführungsform weist die Ausnehmung eine Öffnung auf, die an einer Stirnseite des Messrollenkörpers angeordnet ist. Diese Ausnehmung kann offenstehend ausgeführt sein. Es sind jedoch auch Bauformen denkbar, bei denen die Ausnehmung durch einen Deckel verschlossen wird. Bei mehreren Ausnehmungen, die an der Stirnseite münden, hätte in dieser Ausführungsform jede Ausnehmung einen eigenen Deckel. Auch sind Ausführungsformen der erfindungsgemäßen Messrolle, insbesondere bei solchen Ausführungsformen, bei denen die Messrolle mehrere Ausnehmungen aufweist, denkbar, bei denen der Messrollenkörper einen stirnseitigen Deckel zum gemeinsamen Verschließen der Öffnungen der Ausnehmungen aufweist, beispielsweise einen Deckel, wie er in Fig. 1 oder Fig. 2 der DE 10 2014 012 426 A1 gezeigt wird. Ebenso ist es denkbar, insbesondere für Ausführungsformen, bei denen die Messrolle mehrere Ausnehmungen aufweist, die jeweils Öffnungen aufweisen, die an einer Stirnseite des Messrollenkörpers angeordnet sind, diese Öffnungen mit einem stirnseitigen Deckel zu verschließen, wie er beispielsweise in Fig. 1 der DE 102 07 501 C1 gezeigt wird.

In einer bevorzugten Ausführungsform weist die Messrolle eine Vielzahl von Kraftsensoren auf, die alle in einer Ausnehmung angeordnet sind. Insbesondere bevorzugt sind mehr als 5, besonders bevorzugt mehr als 7, besonders bevorzugt mehr als 10, besonders bevorzugt mehr als 15 Kraftsensoren in einer Ausnehmung angeordnet.

In einer bevorzugten Ausführungsform weist die Messrolle eine erste Ausnehmung auf, in der eine Vielzahl von Kraftsensoren nebeneinander angeordnet sind, insbesondere bevorzugt sind mehr als 5, besonders bevorzugt mehr als 7, besonders bevorzugt mehr als 10, besonders bevorzugt mehr als 15 Kraftsensoren in der ersten Ausnehmung angeordnet, während die Messrolle diese Ausführungsform weitere Ausnehmungen ausweist, in denen jeweils nur ein einziger Kraftsensor oder weniger als 15, besonders bevorzugt weniger als 10, besonders bevorzugt weniger als 7, besonders bevorzugt weniger als 5 Kraftsensoren angeordnet sind.

In einer bevorzugten Ausführungsform der Messrolle, in der eine Vielzahl von Kraftsensoren in einer Ausnehmung angeordnet sind, sind die Kraftsensoren äquidistant über die Länge der Ausnehmung verteilt, zumindest aber äquidistant zueinander verteilt (für Ausführungsformen, bei denen der Abstand des letzten Kraftsensors zum Ende der Ausnehmung nicht dem Abstand entspricht, den dieser letzte Kraftsensor zu seinem benachbarten (vorletzten) Kraftsensor aufweist). Es sind jedoch auch Ausführungsformen denkbar, bei denen eine erste Gruppe von Kraftsensoren äquidistant zueinander angeordnet ist und eine zweite Gruppe von Kraftsensoren in anderem Abstand zu den Kraftsensoren dieser ersten Gruppe angeordnet sind, wobei die Kraftsensoren der zweiten Gruppe wiederum zueinander äquidistant angeordnet sein können. So lässt sich innerhalb der Ausnehmung eine Zone schaffen, innerhalb der die Kraftsensoren näher zueinander angeordnet sind, während die des Weiteren vorgesehenen Kraftsensoren außerhalb dieser Zone weiter beabstandet voneinander angeordnet sind. Eine derartige Ausführungsform ist insbesondere dann zweckmäßig, wenn die Bandkantenlage des bandförmigen Guts bestimmt werden soll und bereits bei der Auslegung der Messrolle bekannt ist, in welchem Bereich/in welcher Zone die Bandkante des bandförmigen Guts vermutlich zu liegen kommt. Dann ist es möglich, in dieser Zone die Dichte der vorgesehenen Kraftsensoren zu erhöhen, während in dem außerhalb dieser Zone liegenden Bereich der Ausnehmungen die Kraftsensoren in einer bevorzugten Ausführungsform weiter beabstandet voneinander angeordnet werden können.

Ausführungsformen mit einer Vielzahl von Kraftsensoren können auch bei dem erfindungsgemäßen Grundtypus der Messrolle umgesetzt werden, bei dem die Kraftsensoren in Taschen angeordnet sind. Bei einer solchen Ausführungsform wird eine Vielzahl von Taschen nebeneinander angeordnet, insbesondere bevorzugt werden mehr als 5, besonders bevorzugt mehr als 7, besonders bevorzugt mehr als 10, besonders bevorzugt mehr als 15 derart angeordnet, dass der jeweils eine in der jeweiligen Tasche angeordnete Kraftsensor derart nah an einem benachbarten, in einer benachbarten Tasche angeordneten Kraftsensor ist, dass der Winkel zwischen einer in Radialrichtung der Messrolle verlaufenden Endbegrenzungslinie, die den Punkt der Sensorfläche des jeweiligen Kraftsensors schneidet, der der Sensorfläche des ihm benachbarten Kraftsensor am nächsten ist, und einer Linie, die

- in der Ebene verläuft, die die Endbegrenzungslinie und die Linie enthält, die den Punkt der Sensorfläche des jeweiligen Kraftsensors, der der Sensorfläche des benachbarten Kraftsensor am nächsten liegt, mit dem Punkt der Sensorfläche des benachbarten Kraftsensors, der der Sensorfläche des jeweiligen Kraftsensors am nächsten liegt, verbindet, und
- die Endbegrenzungslinie im Schnittpunkt der Endbegrenzungslinie mit der Umfangsfläche schneidet, und
- den Punkt der Sensorfläche des ihm benachbarten Kraftsensors schneidet, der der Sensorfläche des jeweiligen Kraftsensors am nächsten liegt,

kleiner als 65° ist. In einer bevorzugten Ausführungsform wird diese Auslegungsregel von allen Kraftsensoren dieser Messrolle erfüllt. In einer alternativen Ausführungsform wird diese Auslegungsregel von einigen, vorzugweise der Mehrzahl der Kraftsensoren der Messrolle erfüllt, während weitere Taschen mit darin angeordneten Kraftsensoren vorgesehen sind, die diese Auslegungsregel nicht erfüllen. Für die Taschen, deren Kraftsensoren die Auslegungsregel erfüllen, ist es bevorzugt, wenn diese Taschen in einer Linie angeordnet sind, nämlich die Mittelpunkte der Taschen auf einer Linie angeordnet sind. Diese Linie verläuft vorzugsweise parallel zur Längsachse des Messrollenkörpers oder helixförmig um die Längsachse des Messrollenkörpers. Für die Taschen, deren Kraftsensoren die Auslegungsregel erfüllen, ist es in einer Alternative bevorzugt, dass die Taschen versetzt zueinander angeordnet sind, so dass die jeweils übernächste Tasche mit der jeweiligen Tasche auf einer Linie liegt, während die nächste Tasche versetzt zur jeweiligen Tasche angeordnet und vorzugsweise auf einer Linie mit der zu ihr übernächsten Tasche angeordnet ist. Durch diese Anordnung kann die Packung der Taschen erhöht werden.

In einer bevorzugten Ausführungsform werden die Kraftsensoren in der Ausnehmung verkeilt. Dadurch können sie in einer besonders bevorzugten Ausführungsform mit einer vordefinierten Vorspannung belastet werden. Sie werden durch das Verkeilen also nicht nur in ihrer Position innerhalb der Ausnehmung fixiert, sondern können zudem mit Vorspannkräften belastet werden. Das Belasten mit Vorspannkräften ist bevorzugt, da sich beim Einsatz der Messrolle im normalen Betrieb die Einbaubedingungen für den Kraftsensor unter den verschiedenen Betriebsbedingungen, wie z.B. durch Temperaturänderung, ändern können. Deshalb ist es bevorzugt, dass die Kraftsensoren beim Einbau in die Ausnehmungen mit einer Vorspannkraft beaufschlagt werden, die so hoch ist, dass im Betriebseinsatz unter allen Betriebseinflüssen die Kraftverbindung zwischen Kraftsensor und Ausnehmungswandung erhalten bleibt, damit eine hysteresefreie und lineare Messung gewährleistet ist.

Die Kraftsensoren sollten in einer bevorzugten Ausführungsform in den Ausnehmungen fixiert, nämlich verkeilt, und bevorzugt auch durch die Verkeilung verspannt sein. In einer bevorzugten Ausführungsform ist die Verkeilung derart ausgeführt, dass eine Vorspannung auf den Kraftsensor ausgeübt wird. Diese Vorspannung ist insbesondere bevorzugt so gewählt, dass im Betriebseinsatz unter allen Betriebseinflüssen die Kraftverbindung zwischen Kraftsensor und Ausnehmungswandung erhalten bleibt, damit eine hysteresefreie und lineare Messung gewährleistet ist.

Treten beim Verspannen unterschiedliche Vorspannungen auf, lassen sich diese ohne weiteres messtechnisch kompensieren. Andererseits lässt sich die Vorspannung jedoch auch bewusst dosieren, um Fertigungstoleranzen sowohl der Kraftsensoren als auch der Ausnehmungen auszugleichen. Dabei können Kraftsensoren mit planparallelen Flächen zwischen keilförmigen Haltestücken, beispielsweise Spannkeilen angeordnet sein, die solange gegeneinander bewegt werden, bis der Kraftsensor unverrückbar zwischen den Haltestücken eingeklemmt ist.

Eines der beiden Haltestücke ist normalerweise dort, wo der Kraftsensor platziert werden soll, ortsfest in der Ausnehmung angeordnet, während das andere Haltestück zum Fixieren des Kraftsensors in der Ausnehmung verschoben wird. Dies kann mit Hilfe einer Spannschraube geschehen, die sich am Messrollenkorpus abstützt und über eine Distanzhülse auf das bewegliche Haltestück wirkt.

Besonders günstig ist die Anordnung mehrerer Kraftsensoren in radial beweglichen Schiebestücken, die mit Hilfe einer Keilleiste in der Ausnehmung fixiert werden. Die Schiebestücke können in einer Distanzleiste angeordnet sein und mit Hilfe keilförmiger Haltenasen einer Spannleiste radial nach außen gedrückt und so in den Ausnehmungen verspannt werden.

Um die zu den Kraftsensoren führenden Leitungen sicher unterzubringen, können die Ausnehmungen mit parallel verlaufenden Leitungskanälen verbunden sein. Alternativ können die Ausnehmungen jedoch auch über einen Querkanal mit einer zentrischen Kabelausnehmung in der Messrolle verbunden sein. Der Querkanal kann im Korpus der Messrolle verlaufen oder als offener Kanal an der Stirnfläche der Messrolle und dann mit einem Deckel verschlossen sein.

Um die Haltestücke für die Kraftsensoren oder die Leisten in den Ausnehmungen zu führen, können sie mit einer Längsrippe versehen sein, die in eine komplementäre Führungsnut im Korpus der Messrolle eingreift.

In einer bevorzugten Ausführungsform wird der Kraftsensor zwischen zwei Paaren von Innen- und Außenkeilelementen gehalten. Dadurch wird es zum einen möglich, den Kraftsensor in Wirkrichtung der zu messenden Druckkraft auszurichten. Ferner ist es durch diese Anordnung möglich, die Halterung bezüglich einer durch die Einbauposition des Kraftsensors verlaufenden, senkrecht zur Wirkrichtung der zu messenden Druckkraft angeordneten Ebene geometrisch symmetrisch auszubilden, möglicherweise sogar achssymmetrisch.

Die Vorzüge werden bereits durch eine Halterung für einen Kraftsensor, der eine von oben auf ihn wirkende Druckkraft messen kann, erzielt, der folgende Bauelemente aufweist:

- ein erstes oberhalb der für den Kraftsensor vorgesehenen Einbauposition angeordnetes Innenkeilelement mit einer zu der Einbauposition des Kraftsensors weisenden Innenfläche und einer im Winkel zur Innenfläche stehenden, der Innenfläche gegenüberliegenden Außenfläche, und

- ein erstes Außenkeilelement mit einer zu der Einbauposition des Kraftsensors weisenden Innenfläche, mit der das Außenkeilelement auf der Außenfläche des ersten Innenkeilelements aufliegt, sowie mit einer der Innenfläche gegenüberliegenden Außenfläche, und

- ein zweites unterhalb der für den Kraftsensor vorgesehenen Einbauposition angeordnetes Innenkeilelement mit einer zu der Einbauposition des Kraftsensors weisenden Innenfläche und einer im Winkel zur Innenfläche stehenden, der Innenfläche gegenüberliegenden Außenfläche und

- ein zweites Außenkeilelement mit einer zu der Einbauposition des Kraftsensors weisenden Innenfläche, mit der das Außenkeilelement auf der

Außenfläche des zweiten Innenkeilelements aufliegt, sowie mit einer der Innenfläche gegenüberliegenden Außenfläche.

Auf diese Weise wird die für das Vorspannen der Halterung und des Kraftsensors in einer Ausnehmung durch eine translatorische Bewegung notwendige Keilanordnung in das Innere der Halterung verlegt. Die Halterung kann bezüglich ihrer Außenflächen an die Formgebung der Ausnehmung, in die die Halterung und der Kraftsensor zu verspannen sind, angepasst werden und erlaubt gleichzeitig, die unmittelbar bzw. mittelbar die Einbauausrichtung des Kraftsensors beeinflussenden Innenflächen auf die gewünschte Ausrichtung anzupassen, beispielsweise diese Innenflächen senkrecht zu der Wirkrichtung der zu messenden Druckkraft anzuordnen. Außerdem hat es sich gezeigt, dass bei einer derartigen Halterung die Oberflächengüte der Ausnehmung (beispielsweise der Axialausnehmung), in die die Halterung eingesetzt wird, geringer sein kann, ohne dass ein Kippen auftritt. Dadurch entfallen aufwendige Verfahren zum Erzeugen einer guten Oberflächengüte, wie beispielsweise das Hohnen oder Rollieren.

In einer bevorzugten Ausführungsform ist die Halterung bezüglich einer durch die Einbauposition des Kraftsensors verlaufenden, senkrecht zur Wirkrichtung der zu messenden Druckkraft angeordneten Ebene geometrisch symmetrisch ausgebildet. Bereits die Abstimmung der Geometrie der oberhalb des Kraftsensors und unterhalb des Kraftsensors angeordneten Bauelemente reduziert die beim Vorspannen auftretenden Kippmomente und kann sie sogar vollständig vermeiden.

Alternativ oder ergänzend kann die Halterung bezüglich einer durch die Einbauposition des Kraftsensors verlaufenden, senkrecht zur Wirkrichtung der zu messenden Druckkraft angeordneten Ebene bezüglich der für die die Halterung bildenden Bauelemente verwendeten Materialien und/oder bezüglich der Oberflächenbeschaffenheiten dieser Bauelemente symmetrisch ausgebildet sein. Kippmomente können nicht nur durch geometrische Unterschiede der oberhalb und unterhalb des Kraftsensors vorgesehenen Bauelemente erzeugt werden, sondern auch dadurch, dass aufgrund unterschiedlicher Materialwahl oder unterschiedlicher Oberflächenbeschaffenheiten unterschiedliche Reibkräfte zwischen gegeneinander bewegten Oberflächen oberhalb und unterhalb des Kraftsensors entstehen. Dies kann durch die symmetrische Ausbildung der betreffenden Materialen bzw. Oberflächenbeschaffenheiten verhindert werden.

In einer bevorzugten Ausführungsform ist eine Verbindung vorgesehen, die das erste Innenkeilelement und das zweite Innenkeilelement zur Vermeidung einer relativen Verschiebung in eine Richtung, die nicht die Wirkrichtung der zu messenden Druckkraft ist, verbindet. Die zu vermeidenden Kippmomente können auch dadurch entstehen, dass sich vergleichbare Bauelemente oberhalb des Kraftsensors und unterhalb des Kraftsensors nicht synchron zueinander bewegen. Dies kann vermieden werden, wenn die betreffenden Bauelemente miteinander verbunden werden. Vorzugsweise ist diese Verbindung jedoch derart ausgebildet, dass sie eine Verschiebung der beiden verbundenen Bauelemente in Wirkrichtung der zu messenden Druckkraft erlaubt. Bei Halterungen für Kraftsensoren, die eine von oben auf sie wirkende Druckkraft messen sollen, wird durch konstruktive Maßnahmen vorzugsweise versucht, den Kraftnebenschluss möglichst gering zu halten, also den Teil der zu messenden Druckkraft, der durch die Halterung an dem Kraftsensor vorbeigeleitet wird, klein zu halten. Dies erfolgt, indem die Bauelemente in Wirkrichtung der zu messenden Druckkraft relativ zueinander federnd ausgebildet sind und die Federsteifigkeit der durch die Verbindung entstandenen Kraftbrücke möglichst gering ist.

In einer weiteren Ausführungsform der Erfindung ist eine Verbindung vorgesehen, die das erste Außenkeilelement und das zweite Außenkeilelement zur Vermeidung einer relativen Verschiebung in eine Richtung, die nicht die Wirkrichtung der zu messenden Druckkraft ist, verbindet. Dadurch werden die gleichen Vorteile wie bei der Verbindung der Innenkeilelemente erzielt.

Auch wenn die Außenfläche des ersten Innenkeilelements und/oder die Außenfläche des zweiten Innenkeilelements nach Art eines Flachkeils plan ausgebildet sein kann, ist bei einer bevorzugten Ausführungsform die Außenfläche des ersten Innenkeilelements und/oder die Außenfläche des zweiten Innenkeilelements als Teilfläche eines Kegels ausgebildet, dessen Längsachse durch die Einbauposition des Kraftsensors verläuft. Für die beim Vorspannen erzeugten Kippmomente ist es von Bedeutung, mit welcher Präzision die Geometrien der einander zugewandten Flächen einzelner, relativ zueinander bewegter Flächen hergestellt werden können. Es hat sich gezeigt, dass die Herstellung von Kegelteilflächen, beispielsweise durch drehende, spanabhebende Bearbeitung eines Halbzeugs präziser hergestellt werden kann, als die plane Fläche eines Flachkeils. Durch diese spezielle Ausgestaltung der Außenflächen wird deshalb eine weitere Verminderung der auftretenden Kippmomente erreicht.

Aus dem gleichen Grund wird die Innenfläche des ersten Außenkeilelements und/oder die Innenfläche des zweiten Außenkeilelements vorzugsweise als Teilfläche der Begrenzung einer kegelförmigen Ausnehmung ausgebildet, deren Längsachse durch die Einbauposition des Kraftsensors verläuft.

In einer bevorzugten Ausführungsform sind das erste Innenkeilelement und das zweite Innenkeilelement Teilelemente einer einstückig hergestellten Innenhülse. Dies bietet sowohl hinsichtlich der Fertigung der Bauteile der Halterung als auch hinsichtlich der Handhabung der Halterung beim Einbau des Kraftsensors Vorteile.

In einer bevorzugten Ausführungsform weist die Innenhülse zwischen dem ersten Innenkeilelement und dem zweiten Innenkeilelement einen Längsschlitz auf, der zur Wirkrichtung der zu messenden Druckkraft im Wesentlichen senkrecht verläuft. Hierdurch wird die Federsteifigkeit der Innenhülse reduziert, so dass der Kraftnebenschluss gering bleibt. Ferner kann die Innenhülse mit einer geringen Wandstärke ausgebildet sein. Als geringe Wandstärke wird bei einem üblichen Innendurchmesser von z.B. 20 mm bis 50 mm eine Wandstärke von z.B. 0,3 mm bis 5 mm verstanden. Die gewählte Wandstärke der Hülsen kann auch in Abhängigkeit der Hülsenlänge, den Verschiebeweg und der Steigung gewählt werden. Sie kann an der dünnsten Stelle auch 1/10 mm betragen. Insbesondere kann der Längsschlitz derart ausgebildet sein, dass er nahezu die gesamte Längserstreckung der Innenhülse aufweist und nur an einem oder beiden Enden als Verbindung zwischen dem ersten Innenkeilelement und dem zweiten Innenkeilelement ein schmaler Steg verbleibt. In einer bevorzugten Ausführungsform weist die Innenhülse zwei Längsschlitze auf. Vorzugsweise ist der bzw. sind die Längsschlitze in einer durch die Einbauposition des Kraftsensors verlaufenden, senkrecht zur Wirkrichtung der zu messenden Druckkraft angeordneten Ebene vorgesehen.

Wie auch bei den Innenkeilelementen können in einer bevorzugten Ausführungsform alternativ oder ergänzend das ersten Außenkeilelement und das zweite Außenkeilelement Teilelemente bzw. Teilstücke einer einstückig hergestellten Außenhülse sein. Diese Außenhülse kann in einer bevorzugten Ausführungsform ebenfalls mindestens einen Längsschlitz zwischen dem ersten Außenkeilelement und dem zweiten Außenkeilelement aufweisen, der zur Wirkrichtung der zu messenden Druckkraft im Wesentlichen senkrecht verläuft.

In einer bevorzugten Ausführungsform ist die Innenfläche des ersten Innenkeilelements und/oder die Innenfläche des zweiten Innenkeilelements plan ausgebildet und in einer zur Wirkrichtung der zu messenden Druckkraft senkrechten Ebene angeordnet. Eine derartige Ausgestaltung erlaubt es, den an seiner Oberseite und Unterseite meist plan ausgebildeten Kraftsensor unmittelbar an die Innenflächen anliegend, zwischen die Innenkeilelemente einzuschieben.

Alternativ kann in einer weiteren Ausführungsform der Erfindung zwischen dem ersten Innenkeilelement und der Einbauposition des Kraftsensors ein erstes Zwischenstück mit einer Kalotte und/oder zwischen dem zweiten Innenkeilelement und der Einbauposition des Kraftsensors ein zweites Zwischenstück mit einer Kalotte vorgesehen sein, wobei die Kalotte die der einen Innenfläche eines Innenkeilelements zugewandte Fläche bildet und die zugehörige Innenfläche des Innenkeilelements korrespondierend ausgebildet ist. Die Kalotte weist dabei vorzugsweise die geometrische Form einer Teilfläche eines zylindrischen Körpers auf.

In einer bevorzugten Ausführungsform der Erfindung ist die Außenfläche des ersten und/oder des zweiten Außenkeilelements eine Teilfläche eines zylindrischen Körpers. Diese Ausgestaltung empfiehlt sich besonders in Anwendungsgebieten, bei denen der Kraftsensor mittels der Halterung in einer Ausnehmung, beispielsweise der Axialausnehmung einer Messrolle zu halten ist.

Die Halterung kann Zentrierstifte aufweisen, die in Zentrierausnehmungen in Bauelementen eingreifen. Mittels dieser Zentrierstifte können einzelne, lose Bauelemente, wie beispielsweise der Kraftsensor, im Verhältnis zu anderen Bauelementen, wie beispielsweise den Innenkeilelemente bzw. der Innenhülse, gut und genau positioniert werden.

In einer bevorzugten Ausführungsform weist die Halterung ein in das erste und zweite Außenkeilelement eingebrachte Innengewinde auf, dessen Längsachse durch die Einbauposition des Kraftsensors verläuft und eine in das Innengewinde eingeschraubte Druckschraube, die in Kontakt mit dem ersten Innenkeilelement und dem zweiten Innenkeilelement kommen kann und sie relativ zu dem ersten und dem zweiten Außenkeilelement verschieben kann. Durch diese Druckschraube kann ein einfaches Vorspannen der Halterung erzeugt werden. Durch die winklige Ausgestaltung der jeweiligen Außenflächen im Verhältnis zu den jeweiligen Innenflächen der miteinander kooperierenden Innenkeil- und Außenkeilelementen erzeugt eine Verschiebung der Keilelemente relativ zueinander eine Verlagerung des Außenkeilelements fort von der Einbauposition des Kraftsensors. Auf diese Weise kann die Halterung in einer Ausnehmung verspannt werden.

Alternativ kann die Halterung ein in das erste und das zweite Innenkeilelement eingebrachtes Innengewinde aufweisen, dessen Längsachse durch die Einbauposition des Kraftsensors verläuft und eine Zugschraube, die in das Innengewinde eingeschraubt ist und mit ihrem Schraubenkopf in Kontakt mit dem ersten und dem zweiten Außenkeilelement kommen kann und sie relativ zu dem ersten und dem zweiten Innenkeilelement verschieben kann.

In einer bevorzugten Ausführungsform ist mehr als eine Art von Kraftsensor in der Messrolle zur Messung unterschiedlicher mechanischer Kräfte vorgesehen. Dadurch kann der Einfluss der Temperatur erfasst werden, wobei die Erfinder erkannt haben, dass der Einfluss der Temperatur durch eine Messung einer in der Messrolle vorliegenden mechanischen Kraft erkannt und dann entsprechend korrigiert werden kann. Es wird demnach neben der sonst üblichen Messung einer mechanischen Kraft eine zweite mechanische Kraft gemessen, die Rückschlüsse auf den Einfluss eines Temperatureintrags bedingt durch die Verwendung der Messrolle im Warmband ermöglicht. Die erfindungsgemäß ausgestaltete Messrolle ermöglicht eine Separierung des durch den thermischen Eintrag in den Messrollenkörper erzeugten Kraftanteils vom Summensignal des Kraftmessgebers.

Die Erfinder haben es gemäß einer bevorzugten Ausführungsform als besonders sinnvoll erkannt, wenn eine Art der Kraftsensoren ein Kraftsensor zum Messen der Radialkraft ist, und eine Art der Kraftsensoren ein Kraftsensor zum Messen der Vorspannkraft des Kraftsensors zum Messen der Radialkraft ist. Versuche haben gezeigt, dass eine Temperaturveränderung an der Messrollenoberfläche derart zu einer elastischen Deformation der Messrolle führt, dass die unter Vorspannkraft eingebauten üblicherweise vorgesehenen Kraftsensoren zum Messen der Radialkraft ihre Vorspannkraft und damit auch ihre Linearität verändern. Durch die sich von der ersten Art unterscheidende Art der Kraftsensoren zum Messen der Vorspannkraft, die auf die Kraftsensoren zum Messen der Radialkraft ausgeübt wird, ist es möglich, den Einfluss der thermischen Verformung des Messrollenkörpers zu messen, und den durch die thermische Verformung erzeugten Anteil des Messsignals des Kraftsensors zum Messen der Radialkraft von der eigentlichen durch das bandförmige Gut verursachten Radialkraft zu separieren.

Die Erfinder haben ferner als erste erkannt, dass mit Kraftsensoren einer weiteren Art, die eine mechanische Kraft messen, es möglich ist, dass neben der thermischen Verformung der Messrolle, die das Messergebnis der Kraftsensoren einer ersten Art beeinflusst, eine Relativtemperaturverteilung über die Bandbreite ermittelbar ist, wenn mehrere Kraftsensoren in Längsrichtung der Messrolle angeordnet sind. Beispielsweise kann für den thermischen Eintrag in Höhe von 1°C ein Wert x in N gemessen werden, über den die Temperaturverteilung durch das in Beziehung setzen mit der gemessenen mechanischen Kraft bestimmbar ist.

Bevorzugt werden die durch das unter Längszug stehende bandförmige Gut eingeleiteten Kräfte dynamisch durch eine Art von Kraftsensor gemessen und die durch die Verformung der Messrolle in Folge eines thermischen Eintrags auftretenden Kräfte statisch durch eine andere Art von Kraftsensor gemessen. Hierdurch können die jeweils aktuell gemessenen Kräfte aufeinander bezogen werden und die von den Kraftsensoren einer Art gemessenen Radialkräfte um den thermischen Eintrag bzw. die thermische Verformung korrigiert werden.

Insbesondere eine Art von Kraftsensor kann in den Ausnehmungen fixiert bzw. verspannt sein, beispielsweise verkeilt. Diese Vorspannungen sind gewollt und lassen sich ohne weiteres messtechnisch kompensieren. Die Vorspannung kann mit einem vorgegebenen Wert eingestellt werden. Beispielsweise können Kraftsensoren mit planparallelen Flächen zwischen keilförmigen Haltestücken, beispielsweise Spannkeilen angeordnet sein, die solange gegeneinander bewegt werden, bis der Kraftsensor unverrückbar zwischen den Haltestücken eingeklemmt ist. Bevorzugt kann ein Kraftsensor der anderen Art, gemeinsam in einem Gehäuse mit der ersten Art von Kraftsensor in den Ausnehmungen fixiert bzw. verspannt sein. Die andere Art von Kraftsensor kann beispielsweise auch in einer an einer der Haltestücke ausgebildeten Ausnehmung oder an einem der Haltestücke befestigt sein, mit denen die eine Art von Kraftsensor in der Ausnehmung verspannt wird.

Eines der beiden Haltestücke kann dort, wo der Kraftsensor platziert werden soll, ortsfest in der Ausnehmung angeordnet sein, während das andere Haltestück zum Fixieren des Kraftsensors in der Ausnehmung verschoben wird. Dies kann z. B. mit Hilfe einer Spannschraube geschehen, die sich am Messrollenkorpus abstützt und über eine Distanzhülse auf das bewegliche Haltestück wirkt.

Besonders bevorzugt ist es, dass die Kraftsensoren unterschiedlicher Art benachbart zueinander angeordnet sind, um den direkten Einfluss durch den thermischen Eintrag "vor Ort" zu messen und den Einfluss bei dem Signal des anderen Kraftsensors als Korrektur anzuwenden.

In einer bevorzugten Ausführungsform ist ein Kraftsensor einer Art mit einem Kraftsensor einer weiteren Art in bzw. an einem Gehäuse bzw. einer Halterung angeordnet, welches die Handhabung bei der Herstellung vereinfacht. Das Gehäuse kann in einer Ausnehmung der Messrolle angeordnet werden. Beispielsweise kann der Kraftsensor einer Art in dem Gehäuse schon vorgespannt werden, wobei der Kraftsensor der weiteren Art an dem Kraftsensor der ersten Art angeordnet ist und die Vorspannkraft messen kann. Es kann vorgesehen sein, dass der Kraftsensor der ersten Art in dem Gehäuse und/oder mit dem Gehäuse vorgespannt wird, wobei der Kraftsensor der weiteren Art die Vorspannung an dem Gehäuse, und damit den thermischen Eintrag, ermittelt. Bei der Anordnung der beiden Arten von Kraftsensoren in bzw. an einem Gehäuse wird auch sichergestellt, dass die beiden Arten von Kraftsensoren zueinander benachbart angeordnet sind, um den Einfluss den die eine Art von Kraftsensor ermittelt für die andere Art von Kraftsensor exakt zu berücksichtigen.

Von dem Begriff "Gehäuse" werden auch Halterungen erfasst, die keine geschlossene Bauform eines üblichen Gehäuses aufweisen. Ein Gehäuse kann insbesondere wie in der DE 10 2006 003 792 A1, deren Offenbarungsgehalt hier durch Inbezugnahme explizit aufgenommen wird, beschrieben ausgestaltet sein, wobei das Gehäuse bzw. die Halterung eine einen Außenumfangskonus aufweisende Innenhülse, in der ein Kraftsensor zum Messen der Radialkraft (Kraftsensor einer Art) angeordnet ist, und eine mit der Innenhülse in Eingriff bringbare bzw. mit dieser verspannbare einen Innenumfangkonus aufweisende Außenhülse aufweist. Beispielsweise kann ein Kraftsensor zum Messen einer der Radialkraft entgegenwirkenden mechanischen Kraft (Kraftsensor anderer Art) an der Innenhülse oder in einer Ausnehmung derselben angeordnet bzw. befestigt sein. Beispielsweise kann der Kraftsensor verklebt sein. Ein Kraftsensor zum Messen einer der Radialkraft entgegenwirkenden mechanischen Kraft (Kraftsensor anderer Art) kann auch an der Außenhülse bzw. in einer Ausnehmung derselben angeordnet sein. Es ist auch möglich, dass der Kraftsensor zum einer der Radialkraft entgegenwirkenden mechanischen Kraft (Kraftsensor anderer Art) in einer Ausnehmung der Messrolle im Bereich des für den Einbau des Gehäuses bzw. der Halterung vorgesehenen Ort anordnet ist, ohne selbst mit dem Gehäuse bzw. der Halterung verbunden zu sein.

In einer bevorzugten Ausführungsform ist der Kraftsensor der anderen Art derart angeordnet, dass er im Kraftfluss der auf den Kraftsensor der ersten Art wirkenden Kraft liegt. Die Anordnung sollte im Kraftfluss der einen Art von Kraftsensor liegen.

In einer bevorzugten Ausführungsform ist eine Art der Kraftsensoren als Quarz-Kraftsensor ausgestaltet, wobei unter Quarz-Kraftsensor ein piezo-elektrisches Element zu verstehen ist, an dessen Kristalloberfläche die zu messende Kraft Ladungen erzeugt, die als Messgröße dienen. Derartige Kraftsensoren besitzen eine hohe Anspruchsempfindlichkeit, eine hohe Eigenfrequenz und Stabilität bei geringen Abmessungen und ermöglichen es, Anfangslasten ohne Beeinträchtigung des Messergebnisses zu kompensieren.

Vorzugsweise ist ein Kraftsensor einer (weiteren) Art als Dehnungsmessstreifen ausgestaltet, der beispielsweise die Vorspannkraft eines Quarz-Kraftsensors messen kann, die sich bei der Verformung der Messrolle in Folge eines thermischen Eintrags in die Messrolle verändern kann.

In einer bevorzugten Ausführungsform weist die Messrolle einen Temperatursensor auf. In einer bevorzugten Ausführungsform ist der Temperatursensor innerhalb des Messrollenkörpers angeordnet.

Bei einer Ausführungsform der erfindungsgemäßen Messrolle, bei der eine von der Ausnehmung in Richtung auf die Umfangsfläche führende Bohrung durch ein Verschlusselement verschlossen wird, ist es besonders vorteilhaft, wenn der Temperatursensor in dem Verschlusselement angeordnet wird.

Die Anordnung des Temperatursensors in Messrollenkörper hat den Vorteil, dass die Messwertübertragungseinheit (Drehübertrager) und die Kabelkanäle der Messleitungen der Kraftmessgeber für die Messleitungen und die Speisespannungsversorgung der Temperatursensoren genutzt werden können.

So ist es möglich, eine Kraft- bzw. Spannungsverteilungsmessung des Bandes bezüglich Ort und Zeit mit einer Temperaturmessung zu vereinheitlichen und damit den durch den Temperaturunterschied über die Bandbreite verfälschten Messwert direkt zu korrigieren. Eine Wartung oder Reinigung der Temperatursensoren, wie dies bei optischen Systemen erforderlich ist, entfällt.

In einer bevorzugten Ausführungsform wird somit eine Messrolle möglich, die sowohl die Planheit, als auch den Bandzug als auch die Temperatur des über die Messrolle geführten bandförmigen Guts ermitteln kann.

Der Temperatursensor kann in einem Einbauteil in einer Ausnehmung vorgesehen sein. Beispielsweise kann der Temperatursensor in einer Halterung, beispielsweise einem Keilelemente angeordnet sein, die zum Befestigen des Kraftsensors in der Ausnehmung verwendet wird. Es sind aber auch Ausführungsformen denkbar, bei denen der Temperatursensor in einer eigenen Ausnehmung, bspw. einer eigenen Bohrung angeordnet wird.

In einer bevorzugten Ausführungsform ist der Temperatursensor in Radialrichtung gesehen näher zur Umfangsfläche des Messrollenkörpers angeordnet, als die Sensorfläche des Kraftsensors.

Die erfindungsgemäße Messrolle findet insbesondere bevorzugt Einsatz beim Feststellen von Eigenschaften eines Metallbands beim Kalt- oder Warmwalzen des Metallbands, insbesondere zum Feststellen der Planheit des Metallbands. Weitere Einsatzgebiete sind Weiterverarbeitungslinien wie z.B. Nachwalzgerüste (Dressiergerüste), Bandglühlinien, Verzinkungslinien, Streck-Biege-Richtanlagen!

Die erfindungsgemäße Messrolle wird insbesondere bevorzugt zum Messen des Bandzugs verwendet, mit dem das bandförmige Gut über die Messrolle gezogen wird. Ergänzend oder alternativ kann die Messrolle zum Ermitteln der Lage des bandförmigen Guts, beispielsweise ausgedrückt durch die Lage der Mittellinie des bandförmigen Guts relativ zu einem Referenzpunkt, beispielsweise relativ zur Seitenfläche des Messrollenkörpers oder beispielsweise relativ zur Mitte des Messrollenkörpers und/oder zum Ermitteln der Lage einer Kante des bandförmigen Guts auf der Umfangsfläche der Messrolle beispielsweise ausgedrückt durch die Lage der Kante des bandförmigen Guts relativ zu einem Referenzpunkt, beispielsweise relativ zur Seitenfläche des Messrollenkörpers oder beispielsweise relativ zur Mitte des Messrollenkörpers verwendet werden. Ergänzend oder alternativ kann die Messrolle zur Ermittlung der Planheit des bandförmigen Guts verwendet werden. Ergänzend oder alternativ kann die Messrolle zum Ermitteln der Bandbreite verwendet werden. Ergänzend oder alternativ kann die Messrolle zum Ermitteln der Bandgeschwindigkeit verwendet werden. Ergänzend oder alternativ kann die Messrolle zum Ermitteln der Temperatur des bandförmigen Guts verwendet werden. In einer besonders bevorzugen Ausführungsform wird die Messrolle zum Messen des Bandzugs, mit dem das bandförmige Gut über die Messrolle gezogen wird, und zum Ermitteln der Lage des bandförmigen Guts, beispielsweise ausgedrückt durch die Lage der Mittellinie des bandförmigen Guts relativ zu einem Referenzpunkt, beispielsweise relativ zur Seitenfläche des Messrollenkörpers oder beispielsweise relativ zur Mitte des Messrollenkörpers und/oder zum Ermitteln der Lage einer Kante des bandförmigen Guts auf der Umfangsfläche der Messrolle beispielsweise ausgedrückt durch die Lage der Kante des bandförmigen Guts relativ zu einem Referenzpunkt, beispielsweise relativ zur Seitenfläche des Messrollenkörpers oder beispielsweise relativ zur Mitte des Messrollenkörpers, und zum Ermitteln der Planheit des bandförmigen Guts zum Ermitteln der Temperatur des bandförmigen Guts verwendet.

Der erfindungsgemäß eingesetzte Kraftsensor weist ein piezoelektrisches Material und eine polygonale Sensorfläche auf.

Insbesondere bevorzugt weist der Kraftsensor einen piezoelektrischen Quarz auf. Insbesondere bevorzugt ist der piezoelektrische Quarz eine Scheibe.

In einer bevorzugten Ausführungsform hat das piezoelektrische Material einen polygonen, insbesondere bevorzugt rechteckigen, insbesondere bevorzugt quadratischen Querschnitt.

Insbesondere bevorzugt weist der Kraftsensor eine rechteckige, insbesondere bevorzugt eine quadratische Sensorfläche auf. In einer bevorzugten Ausführungsform ist die Sensorfläche die Oberfläche eines Blocks, der oberhalb des piezoelektrischen Materials angeordnet ist. Insbesondere bevorzugt liegt der Block mit seiner der Sensorfläche gegenüberliegenden Seite auf dem piezoelektrischen Material, insbesondere bevorzugt auf dem piezoelektrischen Quarz, insbesondere bevorzugt auf einer Scheibe aus piezoelektrischem Quarz auf. In einer bevorzugten Ausführungsform weist der Block einen polygonalen, insbesondere bevorzugt einen rechteckigen, insbesondere bevorzugt einen quadratischen Querschnitt in einer Ebene parallel zur Sensorfläche und/oder in einer Ebene senkrecht zur Sensorfläche auf

In einer bevorzugten Ausführungsform ist die Sensorfläche die Oberfläche einer Erhebung, die an einer Seite des Blocks vorgesehen ist, und sich über eine Randfläche, die in einer zu Sensorebene parallelen Ebene liegt und in die gleiche Richtung weisst, wie die Sensorfläche, erhebt. In einer bevorzugten Ausführungsform ist der Umriss der Randfläche polygonal, insbesondere bevorzugt rechteckig, insbesondere bevorzugt quadratisch. In einer bevorzugten Ausführungsform ist der Umriss der Randfläche eine Vergrößerung des Umriss der Sensorfläche. In einer bevorzugten Ausführungsform entspricht der Mittelpunkt des Umriss der Randfläche dem Mittelpunkt des Umriss der Sensorfläche.

In einer bevorzugten Ausführungsform weist der Kraftsensor ein Gehäuse auf. In einer bevorzugten Ausführungsform umschließt das Gehäuse zusammen mit dem Block, bzw. den Blöcken das piezoelektrische Material.

In einer bevorzugten Ausführungsform weist das Gehäuse eine Seitenfläche, insbesondere bevorzugt eine umlaufende Seitenfläche und einen im Winkel, vorzugsweise im rechten Winkel zur Seitenfläche verlaufenden, insbesondere bevorzugt umlaufend verlaufenden Rand auf. In einer bevorzugten Ausführungsform liegt der Rand des Gehäuses auf der Randfläche des Blocks auf.

In einer bevorzugten Ausführungsform weist der Kraftsensor

- einen oberen Block, der mit seiner der Sensorfläche gegenüberliegenden Seite auf einem oberen piezoelektrischen Material, insbesondere bevorzugt auf einem oberen piezoelektrischen Quarz, insbesondere bevorzugt auf einer oberen Scheibe aus piezoelektrischem Quarz aufliegt,

- ein oberes piezoelektrische Material, insbesondere bevorzugt einen oberen piezoelektrischen Quarz, insbesondere bevorzugt eine obere Scheibe aus piezoelektrischem Quarz,

- ein unteres piezoelektrische Material, insbesondere bevorzugt einen unteren piezoelektrischen Quarz, insbesondere bevorzugt eine untere Scheibe aus piezoelektrischem Quarz, und

- einen unteren Block mit einer Unterseite auf, der mit seiner der Unterseite gegenüberliegenden Seite an dem unteren piezoelektrischen Material, insbesondere bevorzugt an dem unteren piezoelektrischen Quarz, insbesondere bevorzugt an der unteren Scheibe aus piezoelektrischem Quarz anliegt.

In einer bevorzugten Ausführungsform weist das Gehäuse einen oberen, in einem Winkel zur Seitenfläche verlaufenden Rand und einen unteren, in einem Winkel zur Seitenfläche verlaufenden Rand auf. In einer bevorzugten Ausführungsform umklammert das Gehäuse das Paket aus oberem Block, oberem piezoelektrischen Material, unterem piezoelektrischen Material und unterem Block. In einer bevorzugten Ausführungsform bewirkt die Umklammerung eine Vorspannung. In einer bevorzugten Ausführungsform wird der erfindungsgemäß einzusetzende Kraftsensor dadurch hergestellt, dass ein zweiteiliges Gehäuse eingesetzt wird, wobei das Gehäuse einen oberen Teil mit dem oberen Rand und einen unteren Teil mit dem unteren Rand aufweist Der obere Teil wird mit dem oberen Rand in Anlage mit dem oberen Block gebracht, das untere Teil wird mit dem unteren Rand in Anlage mit dem unteren Block gebracht. Das Paket aus oberem Block, oberem piezoelektrischen Material, unterem piezoelektrischen Material und unterem Block wird mit einer Kompressionskraft belastet. Der obere Teil und der untere Teil des Gehäuses werden in dieser Lage miteinander verbunden, beispielsweise durch ein Fügeverfahren, beispielsweise durch Kleben oder durch Schweißen, beispielsweise Laserschweißen, oder durch Löten. Da die so miteinander verbundenen Teile des Gehäuses eine Entspannung des Pakets nicht oder nur teilweise zulassen, ergibt sich eine durch die Umklammerung bewirkte Vorspannung.

In einer bevorzugten Ausführungsform weist der Kraftsensor eine eingebaute Impedanzwandler-Elektronik auf. In einer bevorzugten Ausführungsform ist diese als FET-Schaltung realisiert und wandelt das hochimpedante Signal des piezoelektrischen Materials in ein Spannungssignal mit einer geringen Impedanz um, beispielsweise von etwa 100 $\Omega$. In einer bevorzugten Ausführungsform werden der Versorgungsstrom und das Sensorsignal gemeinsam über ein Koaxialkabel übertragen.

In einer bevorzugten Ausführungsform wird die Sensorelektronik mit einem Konstantstrom versorgt, der beispielsweise zwischen 2 und 20 mA liegt. Über dem Sensor kann sich bei Speisung mit Konstantstrom eine positive Arbeitspunktspannung bilden, die typischerweise 8 bis 12 V beträgt. Das eigentliche Messsignal des Sensors überlagert sich als Wechselspannung mit dieser Arbeitspunktspannung. Die Vorspannung der Stromquelle liegt beispielsweise zwischen 24 und 30 V, so dass eine symmetrische Aussteuerbarkeit in positive und negative Richtung erreicht wird.

In einer bevorzugten Ausführungsform weist der unter Block ebenfalls eine Sensorfläche auf, insbesondere bevorzugt eine als Oberfläche einer Erhebung über eine umlaufende Randfläche ausgebildete Sensorfläche.

Eine erfindungsgemäße Messrolle zum Feststellen einer Eigenschaft eines über die Messrolle geführten bandförmigen Guts, insbesondere von Metallband, mit den Merkmalen von Anspruch 10.

Diese erfindungsgemäße Messrolle lässt sich ebenfalls nach Art der zuvor beschriebenen besonderen Ausführungsformen weiterbilden und kann beispielsweise eine Vielzahl von Krafte"nsoren aufweisen.

Die Erfindung wird nachfolgend anhand von in der Zeichnung dargestellten Ausführungsbeispielen des näheren erläutert. In der Zeichnung zeigen:

Fig. 1      die Seitenansicht einer ersten Ausführungsform einer Messrolle teilweise im Schnitt;

Fig. 2      eine Messrolle mit Kabelkanälen in perspektivischer Darstellung mit abgenommenem Deckel;

Fig. 3      einen Ausschnitt einer Stirnansicht der Messrolle gemäß Fig. 3;

Fig. 4      die perspektivische Ansicht einer Messrolle mit längs einer Schraubenlinie angeordneten gestaffelten Kraftsensoren mit abgenommenem Deckel;

Fig. 5      eine geschnittene Detailansicht der in einer Bohrung angeordneten Kraftsensoren;

Fig. 6      eine Draufsicht auf die Anordnung der Kraftsensoren gemäß Fig. 5;

Fig. 7      die Seitenansicht einer weiteren Ausführungsform einer Messrolle teilweise im Schnitt;

Fig. 8      einen Querschnitt durch eine Halterung mit einem Kraftsensor in der Einbausituation in einer ausschnittweise dargestellten Messrolle in einer geschnittenen Seitenansicht gemäß der Schnittlinie B-B in Fig. 9;

Fig. 9      die Elemente der Fig. 8 in einer Ansicht entlang der Schnittlinie A-A in Fig. 8;

Fig. 10      die Elemente der Fig. 8 und 9 in einer Ansicht gemäß der Schnittlinie C-C der Fig. 9;

Fig. 11      eine alternative Bauform der Halterung in einer zur Fig. 9 vergleichbaren Darstellung;

Fig. 12      eine weitere Bauform der Halterung in einer zu der Fig. 8 vergleichbaren Darstellung;

Fig. 13    die Elemente der Fig. 12 in einer Ansicht entlang der Schnittlinie A-A der Fig. 12;

Fig. 14    die Elemente der Fig. 12 und 13 in einer Ansicht entlang der Schnittlinie C-C in Fig. 12;

Fig. 15    eine weitere Bauform der Halterung in einer der Fig. 8 und 12 vergleichbaren Ansicht;

Fig. 16    eine Detailansicht von in einer Ausnehmung der Messrolle angeordneten Kraftsensoren;

Fig. 17    eine Detailansicht von in einer Ausnehmung der Messrolle angeordnete Kraftsensoren einer weiteren Ausführungsform;

Fig. 18    eine schematische Darstellung der auf eine Messrolle wirkenden Kräfte;

Fig. 19    eine schematische Darstellung einer erfindungsgemäßen Messrolle mit einem teilbedeckten Kraftsensor;

Fig. 20    eine schematische, geschnitten Seitenansicht und eine Draufsicht auf einen ringförmigen Kraftsensor, wie er in der erfindungsgemäßen Messrolle und in dem erfindungsgemäßen Verfahren eingesetzt werden kann;

Fig. 21    den Messsignalverlauf des ringförmig ausgebildeten Sensors gemäß Fig. 20 mit gleicher flächenspezifischer Kraft bei zunehmender Sensorüberdeckung in Axialrichtung;

Fig. 22    eine schematische Darstellung des Empfindlichkeitsfeld und der Messsignalform in axialer- und radialer Empfindlichkeitsrichtung eines ringförmig ausgebildeten Kraftsensors gemäß Fig. 20;

Fig. 23    eine schematische, geschnitten Seitenansicht und eine Draufsicht auf einen quadratischen Kraftsensor, wie er in der erfindungsgemäßen Messrolle und in dem erfindungsgemäßen Verfahren eingesetzt werden kann;

Fig. 24    den Messsignalverlauf des ringförmig ausgebildeten Sensors gemäß Fig. 23 mit gleicher flächenspezifischer Kraft bei zunehmender Sensorüberdeckung in Axialrichtung;

Fig. 25    eine schematische Darstellung des Empfindlichkeitsfeld und der Messsignalform in axialer- und radialer Empfindlichkeitsrichtung eines quadratisch ausgebildeten Kraftsensors gemäß Fig. 23; und

Fig. 26    eine schematische Darstellung des Empfindlichkeitsfeld und der Messsignalform in axialer- und radialer Empfindlichkeitsrichtung eines quadratisch ausgebildeten Kraftsensors gemäß Fig. 23, wenn er abstandsfrei zu einem benachbarten Kraftsensor angeordnet wird.

Die erfindungsgemäße Messrolle 1 mit einem Zapfen 2 weist einen als Vollrolle ausgeführten Messrollenkörper 1a auf. In den Messrollenkörper 1a ist eine als zur Längsachse A des Messrollenkörpers 1a achsparallele Bohrung ausgeführte Ausnehmung 3 vorgesehen, von der nahe an ihrer Stirnseite ein Querkanal 4 abgeht und zu einem zentrischen Kabelkanal 5 führt. Die Ausnehmung 3 ist stirnseitig mit mit einem Deckel 6 oder jeweils einzeln mit Deckeln verschlossen und enthält einen ersten Kraftsensor 7a, einen neben dem ersten Kraftsensor 7a angeordneten zweiten Kraftsensor 7b, einen neben dem zweiten Kraftsensor 7b angeordneten dritten Kraftsensor 7c und einen neben dem dritten Kraftsensor 7c angeordneten vierten Kraftsensor 7d, von denen jeweils ein Kabel 8 (zur Vereinfachung nur als ein Kabel dargestellt) durch die Bohrung 3 , den Querkanal 4 und den zentrischen Kanal 5 nach außen geführt sind.

Die in den Fig. 2 und Fig. 3 schematisch-perspektivisch dargestellte Messrolle 1 mit abgenommenem Deckel 6 besitzt parallel zu jeder Bohrung 3 einander gegenüber liegende Kabelkanäle 10, 11 für über den Querkanal 4 und den zentrischen Kanal 5 nach außen geführte Leitungen.

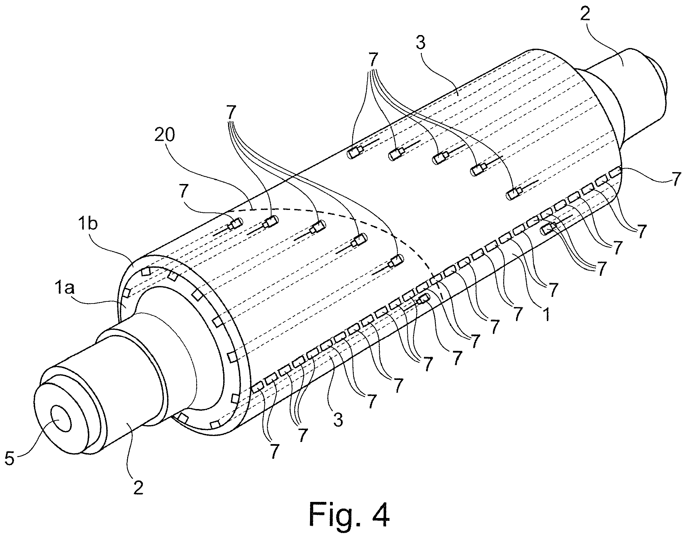

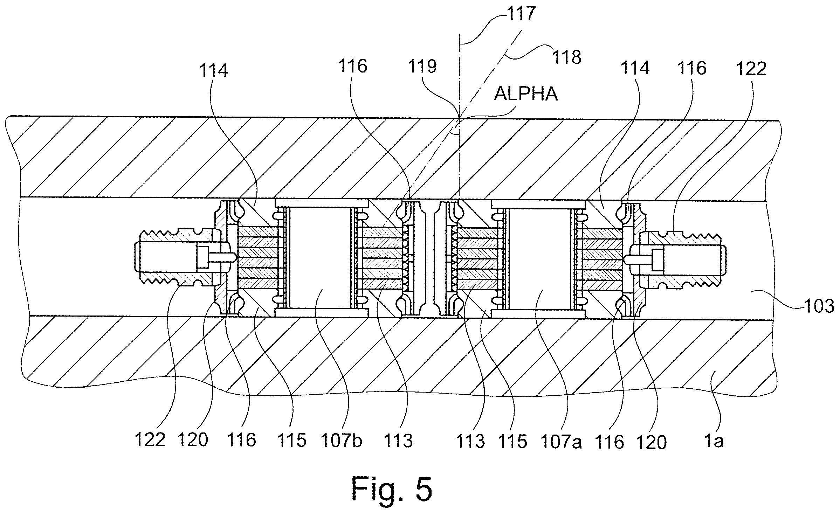

Die Bohrungen können, wie in den Fig. 4 und Fig. 5 dargestellt, von beiden Stirnseiten der Rolle 1 ausgehen und als Sackbohrungen eine unterschiedliche Tiefe besitzen. Das führt dazu, dass die einzelnen Sensoren längs einer Schraubenlinie 20, d. h. gestaffelt angeordnet sind und insgesamt die gesamte Breite der Rolle 1 erfassen.

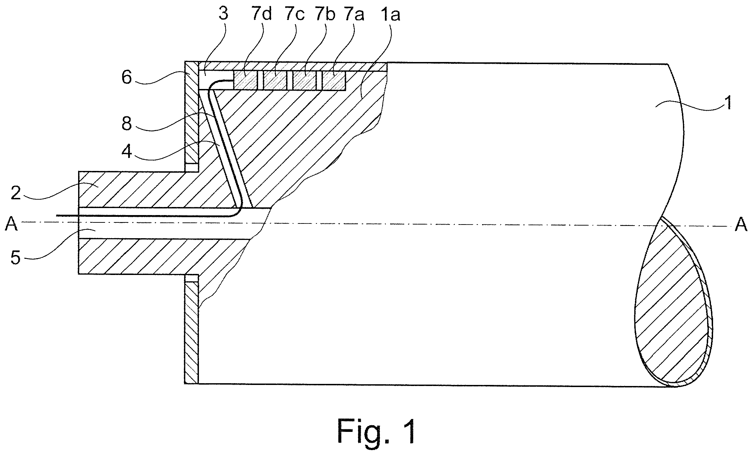

Im Vergleich zur Ausführungsform der Fig. 1 bis 3, sind die Ausführungsformen der Fig. 4 und 5 so ausgeführt, dass ein als Vollrolle ausgeführter Rollenkörper 1a mit an seinem Außenumfang ausgeführten Nuten, die die Ausnehmungen für die Kraftsensoren 7 bilden, mit einem die Nuten verschließenden Mantelrohr 1b überzogen wurde.

Wie die Fig. 4 zeigt, können einzelne Ausnehmungen 3 so ausgeführt sein, dass nur ein Kraftsensor 7 in ihnen angeordnet ist. Es ist aber auch in der Ausführungsform der Fig. 4 eine Ausnehmung 3 vorgesehen, die eine Vielzahl von Kraftsensoren 7 aufweist. Diese Ausnehmung 3 ist in der Ausführungsform der Fig. 4 so ausgeführt, dass sie von einer Stirnseite des Messrollkörpers 1a zur gegenüberliegenden Stirnseite des Messrollenkörpers führt.

Fig. 5 zeigt die Anordnung zweier Kraftsensoren 107a, 107b in einer Bohrung 103 eines Messrollenkörpers 1a einer Messrolle, die nach Art der in Fig. 1 und 2 gezeigten Bauform als Vollrolle mit in die Vollrolle eingebrachte, axiale Bohrung 103 ausgeführt ist. Die in Fig. 5 dargestellten Kraftsensoren 7a, 7b weisen jeweils ein Gehäuse 120 auf. Auf einer Seite des jeweiligen Gehäuses 120 ist eine Steckerbuchse 122 eingebaut. Der jeweilige Kraftsensor 107a, 107b weist jeweils ein Piezoelement 113 auf, das aus einer mehrschichtigen Kristallanordnung besteht. Das jeweilige Piezoelement 113 liegt zwischen zwei Kraftübertragungsscheiben 114, 115. Die Kraftübertragungsscheiben 114, 115 sind mittels elastischer Flansche 116 mit dem Gehäuse 120 verbunden. Die Sensorfläche des Kraftsensors 107a ist die in Kontakt mit der Bohrungswandung der Bohrung 103 stehende äußere Oberfläche der Kraftübertragungsscheibe 114. Die Sensorfläche des Kraftsensors 107b ist die in Kontakt mit der Bohrungswandung der Bohrung 103 stehende äußere Oberfläche der Kraftübertragungsscheibe 114.

In der Fig. 5 ist für den Kraftsensor 107a die in Radialrichtung der Messrolle verlaufenden Endbegrenzungslinie 117 eingezeichnet, die den Punkt der Sensorfläche des ersten Kraftsensors 107a schneidet, der der Sensorfläche des zweiten Kraftsensor 107b am nächsten ist. Ferner ist in Fig. 5 die Linie 118 eingezeichnet, die

- in der Ebene verläuft, die die Endbegrenzungslinie 117 und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und
- die Endbegrenzungslinie 117 im Schnittpunkt 119 der Endbegrenzungslinie 117 mit der Umfangsfläche schneidet, und
- den Punkt der Sensorfläche des zweiten Kraftsensors 107b schneidet, der der Sensorfläche des ersten Kraftsensors 107a am nächsten liegt.

Wie die Fig. 5 zeigt, ist der Winkel ALPHA zwischen der Endbegrenzungslinie 117 und der Linie 118 kleiner als 65°, nämlich ungefähr 45°.

Damit die kreisringförmigen, ebenen Sensorflächen der Kraftsensoren 107a und 107b an den Wandungen der Bohrung 103 anliegen können, ist die Bohrung 103 im Querschnitt rechteckig ausgeführt.

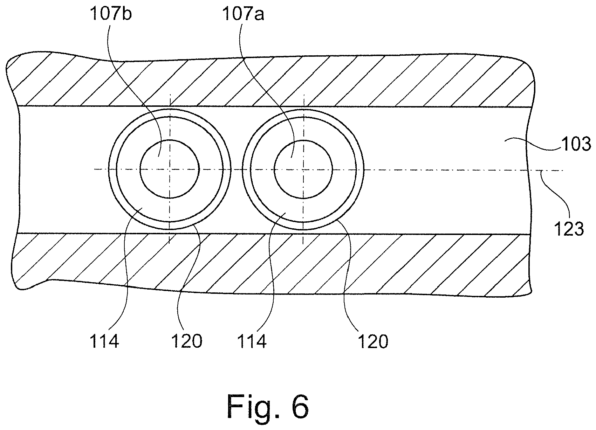

Fig. 6 zeigt eine schematische, auf Höhe der oberen Bohrungswandung geschnittene Draufsicht auf die in der Bohrung 103 angeordneten Kraftsensoren 107a, 107b, wobei in Fig. 6 die Linie 123 eingezeichnet ist, die den Punkt der Sensorfläche des ersten Kraftsensors 107a, der der Sensorfläche des zweiten Kraftsensors 107b am nächsten liegt, mit dem Punkt der Sensorfläche des zweiten Kraftsensors 107b, der der Sensorfläche des ersten Kraftsensors 107a am nächsten liegt, verbindet. Die Sensorfläche des Kraftsensors 107a ist die in Kontakt mit der Bohrungswandung der Bohrung 103 stehende äußere Oberfläche der Kraftübertragungsscheibe 114. Die Sensorfläche des Kraftsensors 107b ist die in Kontakt mit der Bohrungswandung der Bohrung 103 stehende äußere Oberfläche der Kraftübertragungsscheibe 114.

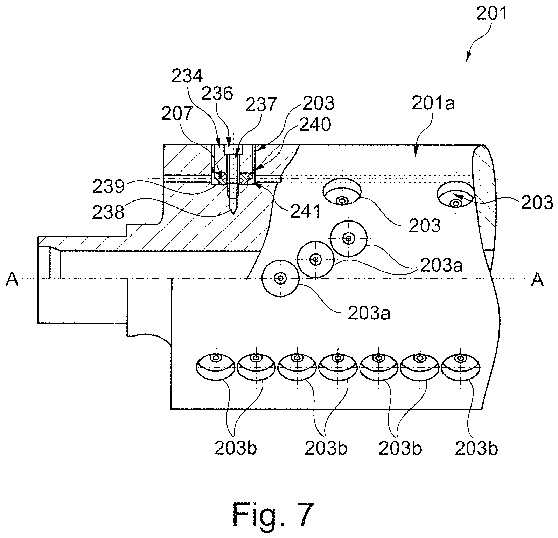

Die in Fig. 7 dargestellte Messrolle 201 besitzt einen als Vollrolle ausgebildeten Messrollenkörper 201a, in dessen Umfangsfläche eine Vielzahl von über die Rollenbreite verteilten Ausnehmungen 203, 203a, 203b, in die Messgeber, beispielsweise Weg- oder Kraft-bzw. Piezomessgeber 207 in Gestalt von Quarz-Unterlegscheiben zum Messen dynamischer und quasistatischer Kräfte mit zylindrischen Abdeckungen 234 eingesetzt sind. Die Messgeber 207 erstrecken sich zwischen dem Boden 239 der Ausnehmung 203 und der Abdeckung 234. Die Abdeckung 234 besitzt eine Einsenkung, in der sich der Kopf 236 einer Spannschraube 237 befindet, die in eine Gewindebohrung 238 der Messrolle 201 eingreift. Mit Hilfe der Spannschraube 237 ist die Abdeckung 234 mit dem Messgeber 207 gegen den Boden 239 der Ausnehmung 203 verspannt.

Die Abdeckung 234 ist mit einer Kunststoffschicht 240 versehen. Zwischen dem Messgeber 207 und der Wandung der Ausnehmung 203 der Rolle 201 befindet sich infolge der unterschiedlichen Durchmesser des Messgebers und der Ausnehmung 203 ein Spalt 241, der bei eingesetzter Abdeckung durch die Kunststoffschicht 240 oder auf andere Weise nach außen hin verschlossen ist. Der Spalt kann sich auch zwischen der Messgeberabdeckung und der Wandung der Ausnehmung befinden.

Die Fig. 7 zeigt, dass die Bohrungen 203b nahe beieinander und auf einer Linie angeordnet sind, die parallel zur Längsachse A des Messrollenkörpers 203b verläuft. Die Linie, die den Punkt der Sensorfläche eines jeweiligen Kraftsensors 207 in einer Ausnehmung 203b, der der Sensorfläche eines benachbarten Kraftsensors 207 in einer benachbarten Ausnehmung 203b am nächsten liegt, mit dem Punkt der Sensorfläche des benachbarten Kraftsensor 207 in der benachbarten Ausnehmung 203b, der der Sensorfläche des jeweiligen Kraftsensors 207 in der Ausnehmung 203b am nächsten liegt, verbindet, verläuft bei diesen Bohrungen 203b parallel zur Längsachse A des Messrollenkörpers 203b.

Fig. 7 zeigt in Form der Bohrungen 203a jedoch aus solche, die nahe beieinander, aber nicht auf einer Linie, die parallel zur Längsachse A des Messrollenkörpers 203b verläuft angeordnet sind. Die Parallelprojektion Linie, die den Punkt der Sensorfläche eines jeweiligen Kraftsensors 207 in einer Ausnehmung 203a, der der Sensorfläche eines benachbarten Kraftsensors 207 in einer benachbarten Ausnehmung 203a am nächsten liegt, mit dem Punkt der Sensorfläche des benachbarten Kraftsensor 207 in der benachbarten Ausnehmung 203a, der der Sensorfläche des jeweiligen Kraftsensors 207 in der Ausnehmung 203a am nächsten liegt, verbindet, auf eine Ebene, die die Längsachse A des Messrollenkörpers 203b enthält, verläuft bei diesen Bohrungen 203a in einem Winkel zur Längsachse A des Messrollenkörpers 203b.

Der Messrollenkörper 201a kann zur Bildung einer geschlossenen Umfangsfläche mit einer hier nicht dargestellten Beschichtung ausgeführt werden.

In der Fig. 7 sind weitere, einzeln ausgeführte Bohrungen 203 vorgesehen. Die Fig. 7 verdeutlicht damit, dass verschiedene Anordnungen von Bohrungen 203, 203a, 203b auf einer Messrolle vereinigt werden können, je nach gewünschter Messaufgabe. Es sind jedoch auch Ausführungsformen denkbar, bei denen nur die Bohrungen 203b oder nur die Bohrungen 203a vorhanden sind.

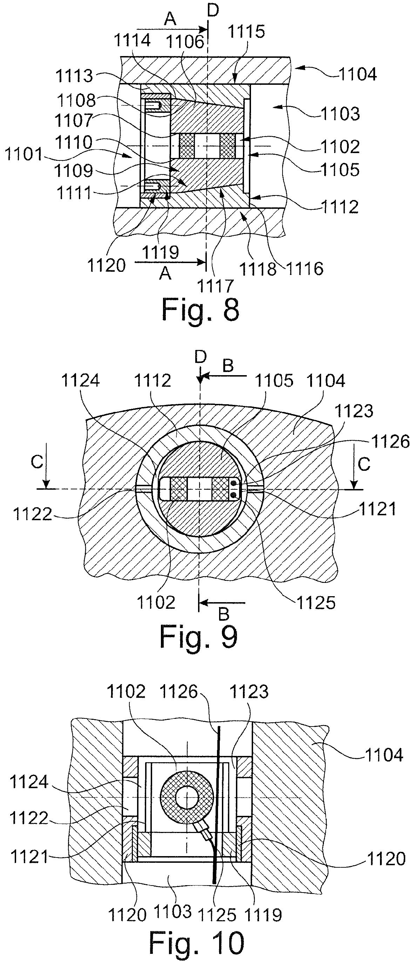

Fig. 8 zeigt eine Halterung 1101 für einen Kraftsensor 1102. Die Halterung 1101 hält den Kraftsensor 1102 in einer Axialbohrung 1103 der ausschnittweise dargestellten Messrolle 1104. Die Halterung 1101 weist eine Innenhülse 1105 auf, die aus einem ersten oberhalb der für den Kraftsensor 1102 vorgesehenen Einbauposition angeordneten Innenkeilelement 1106 mit einer zu der Einbauposition des Kraftsensors 1102 weisenden Innenfläche 1107 und einer im Winkel zur Innenfläche 1107 stehenden, der Innenfläche 1107 gegenüberliegenden Außenfläche 1108 auf. Ferner weist die Innenhülse 1105 ein zweites unterhalb der für den Kraftsensor 1102 vorgesehenen Einbauposition angeordnetes Innenkeilelement 1109 auf, das eine zu der Einbauposition des Kraftsensors 1102 weisende Innenfläche 1110 und eine im Winkel zur Innenfläche 1110 stehende, der Innenfläche 1110 gegenüberliegende Außenfläche 1111 aufweist.

Ferner weist die Halterung 1101 eine Außenhülse 1112 auf. Die Außenhülse 1112 weist ein erstes Außenkeilelement 1113 mit einer zu der Einbauposition des Kraftsensors weisenden Innenfläche 1114 und einer im Winkel zur Innenfläche 1114 stehenden, der Innenfläche 1114 gegenüberliegenden Außenfläche 1115 auf. Ferner weist die Außenhülse 1112 ein zweites Außenkeilelement 1116 mit einer zur Einbauposition des Kraftsensors 1102 weisenden Innenfläche 1117, mit der das Außenkeilelement 1116 auf der Außenfläche des zweiten Innenkeilelements 1109 aufliegt, auf. Ferner weist das Außenkeilelement 1116 eine der Innenfläche 1117 gegenüberliegende Außenfläche 1118 auf.

Eine Druckschraube 1119 mit einem Außengewinde ist in ein in die Außenhülse eingebrachtes Innengewinde 1120 eingeschraubt. Die Einschraubtiefe der Druckschraube 1119 bestimmt die Relativposition der Innenhülse 1105 im Verhältnis zur Außenhülse 1112 und damit den Grad der Vorspannung der Halterung 1101 in der Axialausnehmung 1103.

Wie der Fig. 9 zu entnehmen ist, weisen die Innenhülse 1105 und die Außenhülse 1112, Schlitze 1121 respektive 1122 auf. Diese Längsschlitze 1121, 1122 reduzieren die Federsteifigkeit der Innenhülse 1105 bzw. der Außenhülse 1112 und sorgen dafür, dass der Kraftnebenschluss gering bleibt. Die in die Wirkrichtung des Pfeils D wirkende, zu ermittelnde Druckkraft wird deshalb gut in den Kraftsensor 1102 eingeleitet. Die Außenhülse 1112 und die Innenhülse 1105 können in einem ersten Bearbeitungsschritt durch spanabhebendes Drehen hergestellt werden. Dadurch kann insbesondere die Formtoleranz der Innenflächen 1114, 1117 der Außenhülse 1112 und der Außenflächen 1108, 1111 der Innenhülse besonders präzise hergestellt werden und so ein kippmomentfreies Bewegen der Innenhülse 1105 relativ zur Außenhülse 1112 ermöglicht werden. In nachfolgenden Bearbeitungsschritten können die in der Ansicht der Fig. 9 seitlich angeordneten Bereiche der Innenhülse 1105 weiter verschmälert werden, um die seitliche Wandstärke der Innenhülse 1105 zu reduzieren. Dadurch entstehen in der Ansicht der Fig. 9 seitliche Freiräume 1123, 1124 zwischen der Innenhülse 1105 und der Außenhülse 1112, die die Krafteinleitung in den Kraftsensor 1102 begünstigen und den Kraftnebenschluss weiter verringern.

Die Fig. 10 zeigt die Draufsicht auf den Kraftsensor 1102. In dieser Ansicht ist die zu dem Kraftsensor 1102 führende Kabelanordnung gut zu erkennen. Ein erstes Kabel 1125 führt zu dem dargestellten Kraftsensor 1102, während weitere Kabel 1126 zu weiteren, nicht dargestellten Kraftsensoren führen, die in der gleichen Axialausnehmung 1103 angeordnet sind.

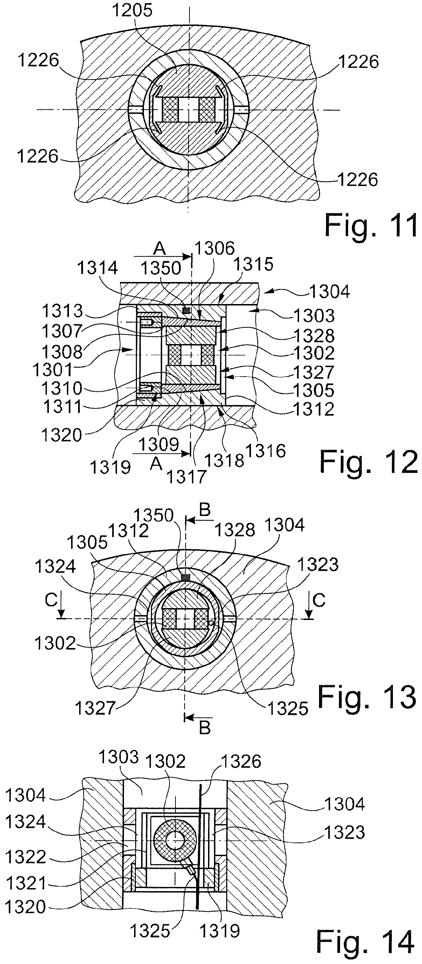

Die in der Fig. 11 dargestellte weitere Ausführungsform der Halterung weist grundsätzlich den gleichen Aufbau wie die in den Fig. 8 bis 10 dargestellte Halterung auf. Gleiche Bauelemente weisen um den Wert 100 erhöhte Bezugszeichen auf. Allerdings ist bei der Innenhülse 1205 dieser zweiten Ausführungsform eine Mehrzahl von Ausnehmungen 1226 vorgesehen, die die seitliche Wandstärke der Innenhülse 1205 weiter reduzieren und damit zu einer erneut geringeren Federsteifigkeit und damit einem geringeren Kraftnebenschluss führen.

In den Fig. 12 bis 14 ist eine weitere Ausführungsform der Erfindung gezeigt, die sich von der in den Fig. 8 bis 10 Dargestellten dadurch unterscheidet, dass zwischen der Innenhülse 1305 und dem Kraftsensor 1302 Zwischenstücke 1327 und 1328 mit Kalotten vorgesehen sind. Im Übrigen entsprechen die dargestellten Bauelemente den Bauelementen der in den Fig. 8 bis 10 dargestellten Elemente. Sie werden mit einem um den Wert 200 erhöhten Bezugzeichen dargestellt. Zudem zeigen Fig. 12 und 13 die Möglichkeit, einen Temperatursensor 1350 in die Außenhülse 1312 einzubringen.

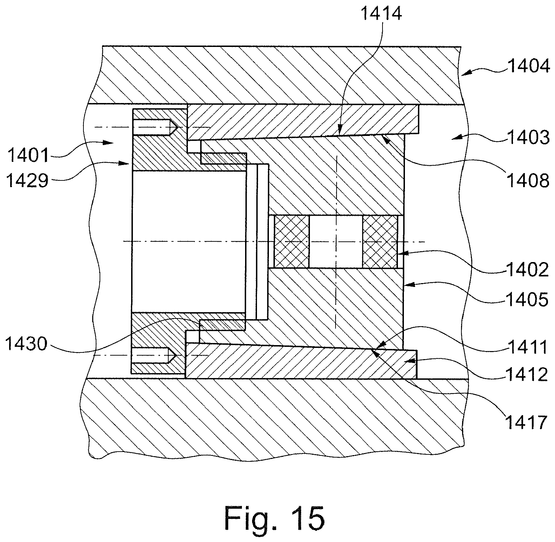

Fig. 15 zeigt eine der in Fig. 8 dargestellte vergleichbare Halterung 1401. Sie unterscheidet sich von der in Fig. 8 Dargestellten durch eine andere Orientierung der Innenflächen 1408, 1411 und der dazu korrespondierenden Außenflächen 1414, 1417 sowie durch eine Zugschraube 1429, die in ein Innengewinde 1430 der Innenhülse 1405 eingeschraubt ist. Die Einschraubtiefe der Zugschraube 1429 in das Innengewinde 1430 bestimmt die Position der Innenhülse 1405 relativ zur Außenhülse 1412 und damit die Vorspannung der Halterung 1401 in der Axialbohrung 1403 der Messrolle 1404. Gleiche Bauelemente zu den in Fig. 8 bis 10 dargestellten Elementen werden mit einem um den Wert 300 erhöhtes Bezugszeichen gekennzeichnet.

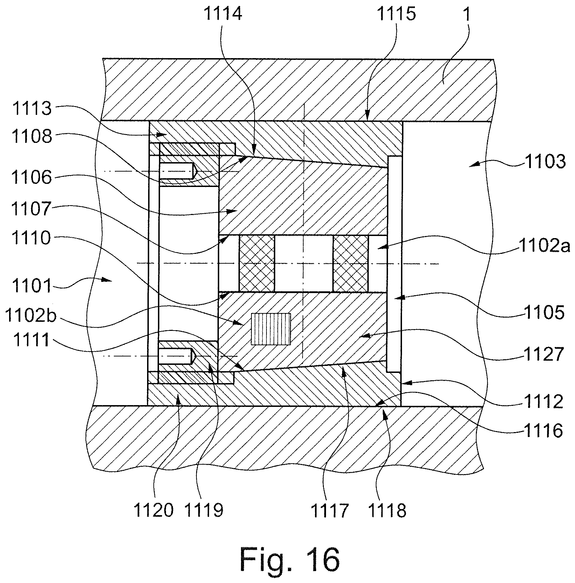

Fig. 16 zeigt eine Weiterbildung der Ausführungsform gemäß Fig. 8 und zeigt eine Detailansicht von in einer Ausnehmung 1103 der Messrolle in einem Paar angeordneten Kraftsensoren 1102a, 1102b. Das Gehäuse 1101 bzw. die Halterung hält den Kraftsensor 1102a einer ersten Art, der zum Messen der Radialkraft ausgestaltet ist in der Ausnehmung 1103 der ausschnittweise dargestellten Messrolle. Das Gehäuse 1101 weist eine Innenhülse 1105 auf, die aus einem ersten oberhalb der für den Kraftsensor 1102a vorgesehenen Einbauposition angeordneten Innenkeilelement 1106 mit einer zu der Einbauposition des Kraftsensors 1102a weisenden Innenfläche 1107 und einer im Winkel zur Innenfläche 1107 stehenden, der Innenfläche 1107 gegenüberliegenden Außenfläche 1108 auf. Ferner weist die Innenhülse 1105 ein zweites unterhalb der für den Kraftsensor 1102a vorgesehenen Einbauposition angeordnetes Innenkeilelement 1127 auf, das eine zu der Einbauposition des Kraftsensors 1102a weisende Innenfläche 1110 und eine im Winkel zur Innenfläche 1110 stehende, der Innenfläche 1110 gegenüberliegende Außenfläche 1111 aufweist.

Ferner weist das Gehäuse 1101 eine Außenhülse 1112 auf, die ein erstes Außenkeilelement 1113 mit einer zu der Einbauposition des Kraftsensors 1102a weisenden Innenfläche 1114 und einer im Winkel zur Innenfläche 1114 stehenden, der Innenfläche 1114 gegenüberliegenden Außenfläche 1115 auf. Ferner weist die Außenhülse 1112 ein zweites Außenkeilelement 1120 mit einer zur Einbauposition des Kraftsensors 1102a weisenden Innenfläche 1117, mit der das Außenkeilelement 1120 auf der Außenfläche des zweiten Innenkeilelements 1127 aufliegt, auf. Ferner weist das Außenkeilelement 1120 eine der Innenfläche 1117 gegenüberliegende Außenfläche 1116 auf.

Eine Druckschraube 1119 mit einem Außengewinde ist in ein in die Außenhülse 1112 eingebrachtes Innengewinde eingeschraubt. Die Einschraubtiefe der Druckschraube 1119 bestimmt die Relativposition der Innenhülse 1127 im Verhältnis zur Außenhülse 1112 und damit den Grad der Vorspannung des Gehäuses 1101 in der Ausnehmung 1103. Zur Ermittlung der Vorspannung ist der Kraftsensor 1102b in der Innenhülse 1127 in einer Ausnehmung derselben angeordnet. Mit dem Kraftsensor 1102b kann die Vorspannkraft gemessen werden.

Der Kraftsensor 1102a zum Messen der Radialkraft wird vorgespannt, wobei die Größe der Vorspannung mittels des Kraftsensors 1102b ermittelt werden kann. Bei einem thermischen Eintrag bei der Behandlung beispielsweise von Metallband beim Warmwalzen werden durch die Umlenkung des unter Längszug stehenden Bandes Radialkräfte in die Messrolle eingeleitet, die die äußere Schale der Messrolle elastisch deformieren. Der "membranförmig" ausgebildete Steg oberhalb der Ausnehmung 1103 wird dabei in Radialrichtung verschoben, was durch den Kraftsensor 1102a, der als piezoelektrischer Kraftsensor ausgestaltet sein kann, ermittelbar ist. Thermische Spannungen, die aufgrund eines Temperaturgradienten entstehen, erzeugen an der dem in Umfangsrichtung nach außen liegenden Steg oberhalb der Ausnehmung 1103 ebenfalls eine Wegänderung in Radialrichtung, die der Radialkraft entgegengesetzt ist. Hierdurch wird das Messergebnis des Kraftsensors 1102a verändert, wobei mit dem Kraftsensor 1102b, der als statisch messender Kraftsensor, insbesondere als Dehnungsmessstreifen, ausgestaltet sein kann, die Wegänderung durch eine Änderung der Vorspannung erfassbar ist. Mit Hilfe der jeweils aktuell gemessenen Vorspannkraft können die Radialkraftwerte der Kraftsensoren 1102a korrigiert werden.

Die in Paaren nahe beabstandet zueinander angeordneten Kraftsensoren 1102a, 1102b werden in die die Innenhülse 1127 und die Außenhülse 1112 aufweisende Gehäuse 101 eingesetzt und danach in die Ausnehmung 1103 der Messrolle 1 positioniert und an ihrer Position verspannt.

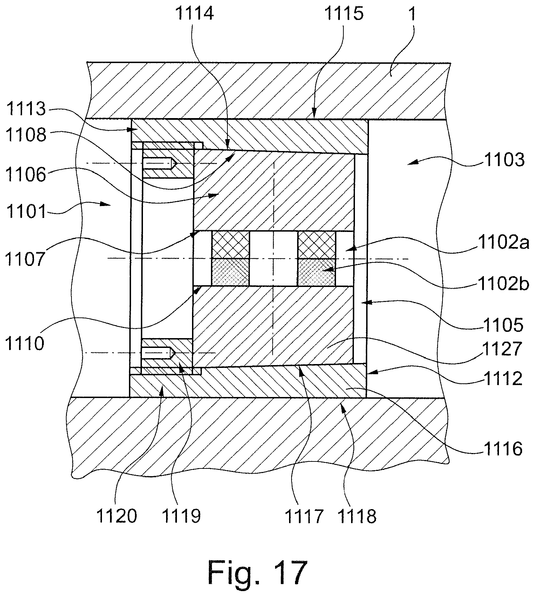

Figur 17 zeigt eine Detailansicht von in einer Ausnehmung 1103 der Messrolle 1 angeordneten Kraftsensoren 1102a und 1102b einer zur Figur 16 unterschiedlichen Ausführungsform. Der Aufbau der Ausführungsform, wie er in Figur 17 gezeigt wird, entspricht im Wesentlichen dem Aufbau der in Figur 16 gezeigten Ausführungsform. Lediglich hinsichtlich der Anordnung und Ausführung der Kraftsensoren 1102a und 1102b unterscheidet sich die Ausführungsform der Figur 17 von den Kraftsensoren 1102a und 1102b der Figur 16. Der Kraftsensor 1107a ist als Piezo-elektrischer Kraftsensor ausgestaltet, wobei er in Radialrichtung etwas kürzer baut als der Kraftsensor 1102a der Fig. 16. Als Kraftsensor der anderen Art ist der Kraftsensor 1107b vorgesehen, der als statisch messender Kraftsensor, insbesondere als Dehnungsmessstreifen ausgebildet ist.

Fig. 18 zeigt die durch ein die Messrolle teilweise umschlingendes, unter Bandzug stehendes Metallband auf die Messrolle aufgebrachten Kräfte. Die an den in Ausnehmungen in der Messrolle angeordneten Quarz-Kraftsensoren erzeugen elektrische Ladung. Diese ist direkt proportional der auf den Quarz aufgebrachten Kraft.

Die üblicherweise in I-Units gemessene Bandlängenabweichung, die üblicherweise als ein Repräsentant für die Planheit des Bandes verwendet wird, lässt sich aufgrund der folgenden Beziehungen berechnen:

Örtliche Radialkraft in N

$$F_{R,i}$$

Örtliche Zugkraft in N

$$F_{Z,i} = F_{R,i} / (2 \times \sin \alpha/2)$$

$\alpha$ = Bandumlenkwinkel um Messrolle

Örtliche Zugspannung in N/mm2

$$\sigma_{Z,i} = F_{Z,i} / (b_{EI} \times d)$$

$b_{EI}$ = Messzonenbreit
d = Banddicke

Zugspannungsabweichung in N/mm2

$$\Delta\sigma_{Z,i} = \sigma_{Z,max} - \sigma_{Z,i}$$

$\delta_{Z,max}$ = maximale örtliche Zugspannung

Bandlängenabweichung in $\mu$m/m

$$\Delta L/L_i = (\Delta\sigma_{Z,i}/E) \times 10^6$$

$$E = \text{E-Modul } (E_{Stahl} = 2{,}06 \times 10^5 \text{ N/mm2})$$

Bandlängenabweichung in I-Unit

$$\Delta L/L_i = (\Delta\sigma_{Z,i}/E) \times 10^5$$

$$E = \text{E-Modul } (E_{Stahl} = 2{,}06 \times 10^5 \text{ N/mm2})$$

Beispiel:

Quarz-Kraftsensor: Empfindlichkeit = 4,2 pC/N Ladung am Sensor: = 210 pC
Kraft auf Sensor: $F_{R,i}$ = 50 N

$$F_{Z,i} = 50/(2 \times 0{,}342/2) = 146{,}19 \text{ N} \quad \alpha = 20° \quad \sigma_{Z,i} = 146{,}19/(25 \times 0.5) = 11{,}69 \text{ N/mm2} \quad b_{EI} = 25mm, d = 0.5mm \quad \Delta\sigma_{Z,i} = 20 - 11{,}69 = 8{,}3 \text{ N/mm2} \quad \sigma_{Z,max} = 20 \text{ N/mm2}$$

$$\Delta L/L_i = (\Delta\sigma_{Z,i}/E) \times 10^6 = 162{,}34 \text{ µm/m} \quad E = \text{E-Modul}$$

$$(E_{Stahl} = 2{,}06 \times 10^5 \text{ N/mm2})$$

$$\Delta L/L_i = (\Delta\sigma_{Z,i}/E) \times 10^5 = 16{,}234 \text{ I-Unit}$$

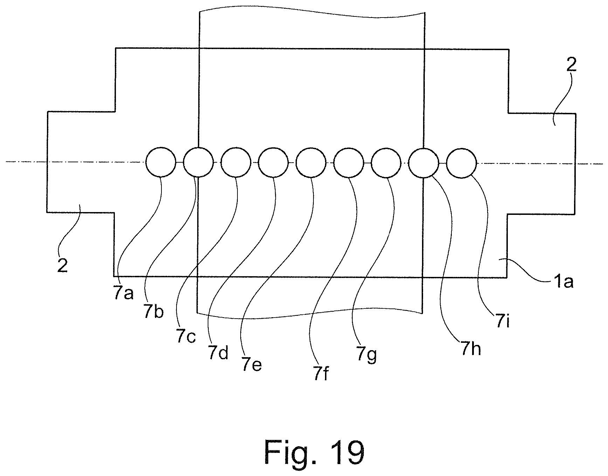

Fig. 19 zeigt eine schematische Darstellung einer erfindungsgemäßen Messrolle 1 mit teilbedeckten Kraftsensoren 7b, 7h. Zu erkennen ist die Messrolle 1 mit den Zapfen 2 und dem als Vollrolle ausgestalteten Messrollenkörper 1a und die Kraftsensoren 7a, 7b, 7c,. 7d, 7e, 7f, 7g, 7h, 7i. Die Sensoren 7c, 7d, 7e, 7f, 7g sind vollständig vom schematisch angedeuteten Band überdeckt. Die Sensoren 7a und 7i nicht. Die Sensoren 7b und 7h sind teilüberdeckt.

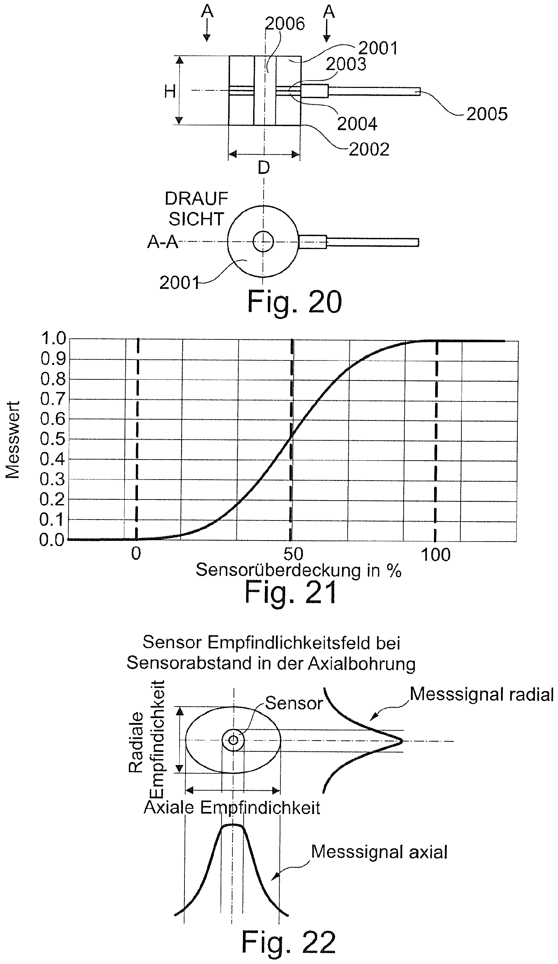

Fig. 20 zeigt eine schematische, geschnitten Seitenansicht und eine Draufsicht auf einen ringförmigen Kraftsensor, wie er in der erfindungsgemäßen Messrolle und in dem erfindungsgemäßen Verfahren eingesetzt werden kann. Der Sensor weist zwei Blöcke 2001 und 2002 auf. An der jeweils nach außen weisenden Oberfläche des Block 2001 und des Blocks 2002 ist eine freistehende Sensorfläche vorgesehen. Der Block 2001 liegt auf einer oberen Quarzscheibe 2003 auf. Die obere Quarzscheibe ist oberhalb der unteren Quarzscheibe 2004 angeordnet. Der untere Block 2002 liegt an der unteren Quarzscheibe 2004 an. Der Kraftsensor kann eine nicht näher dargestellte, eingebaute Impedanzwandler-Elektronik aufweisen. Der Versorgungsstrom und das Sensorsignal können gemeinsam über ein Koaxialkabel 2005 übertragen werden. Der Kraftsensor weißt die Höhe H und den Durchmesser D auf. Der Kraftsensor weist eine Axialbohrung 2006 auf.

Fig. 21 zeigt den Messsignalverlauf des ringförmig ausgebildeten Sensors gemäß Fig. 20 mit gleicher flächenspezifischer Kraft bei zunehmender Sensorüberdeckung in Axialrichtung. Zu erkennen ist, dass bei ringförmiger Ausbildung des Sensors sich das Sensorsignal bei gleicher flächenspezifischer Kraft (N/mm2) bei zunehmender Überdeckung des Sensors in Axialrichtung nicht proportional verhält. Als zunehmende Überdeckung in Axialrichtung wird verstanden, welchen Anteil das Band überdeckt. Die axiale Überdeckung beim Kraftsensor 7b in Fig. 19 ist beispielsweise deutlich höher als die axiale Überdeckung beim Kraftsensor 7h in Fig. 19. Die axiale Überdeckung des Kraftsensors 7h würde sich im Verhältnis zu der in Fig. 19 dargestellten Bandkantenlage erhöhen, wenn die Bandkante ausgehend von der in Fig. 19 dargestellten Lage weiter nach rechts in der Fig. 19, nämlich entlang der Achse der Messrolle 1 wandern würde und damit den Sensor 7h zunehmend überdecken würde. Bei vollständiger Überdeckung wäre die Sensorüberdeckung in %: 100%.

Fig. 22 zeigt eine schematische Darstellung des Empfindlichkeitsfeld und der Messsignalform in axialer- und radialer Empfindlichkeitsrichtung eines ringförmig ausgebildeten Kraftsensors gemäß Fig. 20. Fig. 22 zeigt das Empfindlichkeitsfeld am Beispiel eines im Abstand von der Umfangsfläche in eine Axialbohrung (vgl. Fig. 1) eingebauten Kraftsensors. Das Empfindlichkeitsfeld gibt die Fläche auf der Umfangsfläche der Messrolle wieder, bei der ein Einwirken einer Kraft noch vom Kraftsensor wahrgenommen würde. Jede Kraft, die irgendwo in dem Empfindlichkeitsfeld auf die Umfangsfläche der Messrolle einwirkt, wird vom Kraftsensor erkannt (führt zu einem Signal des Kraftsensors). Das Messsignalform zeigt, welche Höhe eines Messsignals eine Kraft auslösen würden, wenn sie an der bestimmten Stelle innerhalb des Empfindlichkeitsfeld auf der Umfangsfläche der Messrolle einwirkt.

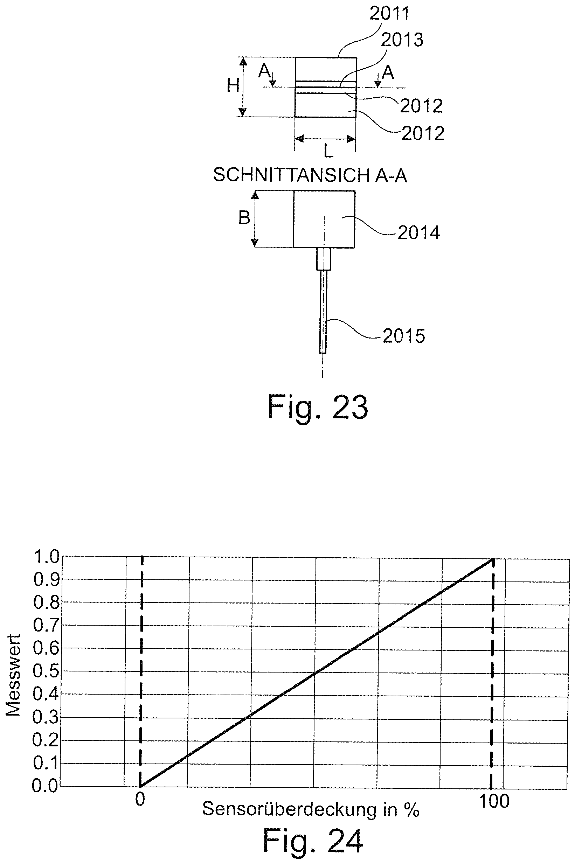

Fig. 23 zeigt eine schematische, geschnitten Seitenansicht und eine Draufsicht auf einen quadratischen Kraftsensor, wie er in der erfindungsgemäßen Messrolle und in dem erfindungsgemäßen Verfahren eingesetzt werden kann. Der Sensor weist zwei Blöcke 2011 und 2022 auf. An der jeweils nach außen weisenden Oberfläche des Block 2011 und des Blocks 2012 ist eine freistehende Sensorfläche vorgesehen. Der Block 2011 liegt auf einer oberen Quarzscheibe 2013 auf. Die obere Quarzscheibe 2013 ist oberhalb der unteren Quarzscheibe 2014 angeordnet. Der untere Block 2012 liegt an der unteren Quarzscheibe 2014 an. Der Kraftsensor kann eine nicht näher dargestellte, eingebaute Impedanzwandler-Elektronik aufweisen. Der Versorgungsstrom und das Sensorsignal können gemeinsam über ein Koaxialkabel 2015 übertragen werden. Der Kraftsensor weißt die Höhe H und eine Breite B und eine Länge L auf. Die Breite B und die Länge L sind gleich.

Fig. 24 zeigt den Messsignalverlauf des ringförmig ausgebildeten Sensors gemäß Fig. 23 mit gleicher flächenspezifischer Kraft bei zunehmender Sensorüberdeckung in Axialrichtung. Im Vergleich zur Fig. 21 erkennt man den linearen Zusammenhang zwischen Überdeckung und Messwert.

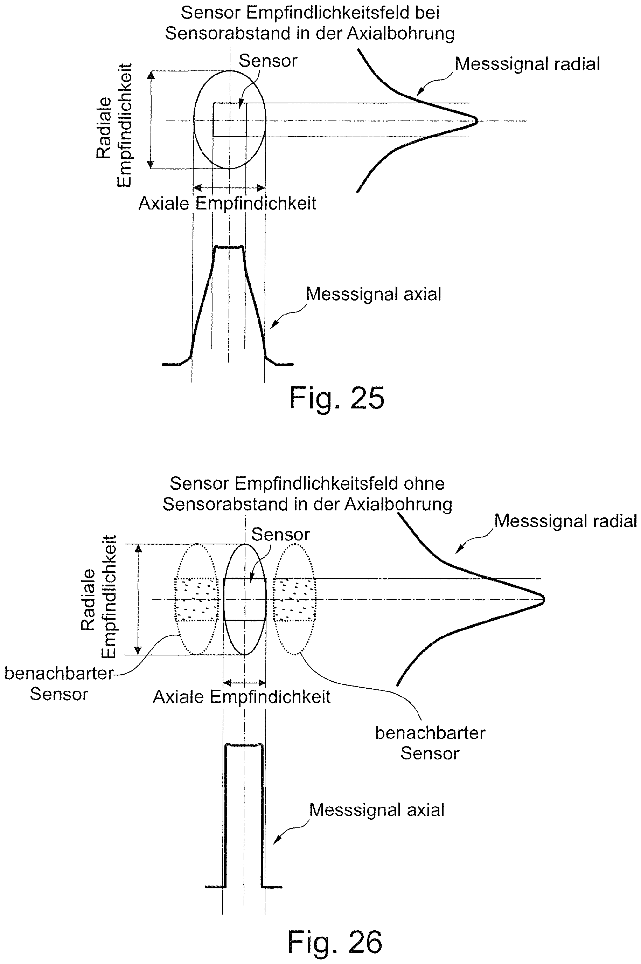

Fig. 25 zeigt eine schematische Darstellung des Empfindlichkeitsfeld und der Messsignalform in axialer- und radialer Empfindlichkeitsrichtung eines quadratisch ausgebildeten Kraftsensors gemäß Fig. 23. Im Vergleich zur Fig. 22 erkennt man, dass das Empfindlichkeitsfeld in axialer Richtung schlanker ist.

Fig. 26 zeigt eine schematische Darstellung des Empfindlichkeitsfeld und der Messsignalform in axialer- und radialer Empfindlichkeitsrichtung eines quadratisch ausgebildeten Kraftsensors gemäß Fig. 23, wenn er abstandsfrei zu einem benachbarten Kraftsensor angeordnet wird. Zur Verdeutlichung sind in Fig. 26 punktiert die benachbarten Kraftsensoren mit ihren jeweiligen Empfindlichkeitsfeldern gepunktet eingezeichnet. Zu erkennen ist, dass bei dieser Bauform der Sensoren (rechteckige, insbesondere bevorzugte quadratische Sensorfläche) die axiale Lage der einwirkenden Kraft präziser bestimmt werden kann. Die Empfindlichkeitsfelder sind in axialer Richtung sehr viel schlanker.

## Patentansprüche

1. Verfahren zum Feststellen einer Eigenschaft eines über eine Messrolle (1, 201) geführten bandförmigen Guts, insbesondere von Metallband, wobei das bandförmige Gut über eine Messrolle (1, 201) zum Feststellen einer Eigenschaft eines über die Messrolle (1, 201) geführten bandförmigen Guts, insbesondere von Metallband, geführt wird, wobei die Messrolle (1, 201) mit

- einem Messrollenkörper (1a, 201a) mit einer Umfangsfläche,
- mindestens einer Ausnehmung (3, 103, 203, 203a, 203b) in dem Messrollenkörper (1a, 201a), die beabstandet zu der Umfangsfläche angeordnet ist oder von der Umfangsfläche in das Innere des Messrollenkörpers (1a, 201a) führt und
- mit einem ersten Kraftsensor (7a, 107a, 207, 1102, 1102a, 1102b, 1302, 1402), der in der Ausnehmung (3, 203, 203a, 203b, 1102) angeordnet ist, und einem zweiten Kraftsensor (7b, 107b), der in der Ausnehmung (3, 103) oder einer weiteren, der Ausnehmung (3, 103, 203, 203a, 203b) benachbarten Ausnehmung (3, 103, 203, 203a, 203b) angeordnet ist, ausgeführt ist, wobei der erste Kraftsensor (7a, 107a, 207, 1102, 1102a, 1102b, 1302, 1402) eine Sensorfläche aufweist und der erste Kraftsensor (7a, 107a, 207, 1102, 1102a, 1102b, 1302, 1402) bei einer Änderung der Lage der Sensorfläche des ersten Kraftsensors (7a, 107a, 207, 1102, 1102a, 1102b, 1302, 1402) ein Sensorsignal erzeugen kann und der zweite Kraftsensor (7b, 107b) eine Sensorfläche aufweist und der zweite Kraftsensor (7b, 107b, 207, 1102, 1102a, 1102b, 1302, 1402) bei einer Änderung der Lage der Sensorfläche des zweiten Kraftsensors (7b, 107b, 207, 1102, 1102a, 1102b, 1302, 1402) ein Sensorsignal erzeugen kann, wobei das bandförmige Gut derart über die Messrolle (1, 201) geführt wird, dass es die Messrolle (1, 201) teilweise umschlingt, und dass
- das Sensorsignal, das der erste Kraftsensor (7a, 107a, 207, 1102, 1102a, 1102b, 1302, 1402) aufgrund der Änderung der Lage der Sensorfläche des ersten Kraftsensors, die sich aufgrund der aus der Umschlingung ergebenden Druckkraft ergibt, erzeugt, einer Auswerteeinheit zugeführt wird und
- das Sensorsignal, das der zweite Kraftsensor (7b, 107b) aufgrund der Änderung der Lage der Sensorfläche des zweiten Kraftsensors, die sich aufgrund der aus der Umschlingung ergebenden Druckkraft ergibt, erzeugt, einer Auswerteeinheit zugeführt wird,
**dadurch gekennzeichnet, dass**:

entweder der erste Kraftsensor in der Ausnehmung neben dem zweiten Kraftsensor angeordnet ist und die Sensorfläche des ersten Kraftsensors an die Sensorfläche des zweiten Kraftsensors unmittelbar angrenzt

oder der erste Kraftsensor (7a, 107a, 207, 1102, 1102a, 1102b, 1302, 1402) so nah neben dem zweiten Kraftsensor (7a, 107b) angeordnet ist, dass der Winkel (ALPHA) zwischen einer in Radialrichtung der Messrolle (1, 201) verlaufenden Endbegrenzungslinie (117), die den Punkt der Sensorfläche des ersten Kraftsensors (7a, 107a, 207, 1102, 1102a, 1102b, 1302, 1402) schneidet, der der Sensorfläche des zweiten Kraftsensor (7b, 107b) am nächsten ist, und einer Linie (118), die

- in der Ebene verläuft, die die Endbegrenzungslinie (117) und die Linie (123) enthält, die den Punkt der Sensorfläche des ersten Kraftsensors (7a, 107am, 207, 1102, 1102a, 1102b, 1302, 1402), der der Sensorfläche des zweiten Kraftsensors (7b, 107b) am nächsten liegt, mit dem Punkt der Sensorfläche des zweiten Kraftsensors (7b, 107b), der der Sensorfläche des ersten Kraftsensors (7a, 107a, 207, 1102, 1102a, 1102b, 1302, 1402) am nächsten liegt, verbindet, und
- die Endbegrenzungslinie (117) im Schnittpunkt (119) der Endbegrenzungslinie (117) mit der Umfangsfläche schneidet, und
- den Punkt der Sensorfläche des zweiten Kraftsensors (7b, 107b) schneidet, der der Sensorfläche des ersten Kraftsensors (7a, 107a, 208, 1102, 1102a, 1102b, 1302, 1402) am nächsten liegt,
kleiner als 65° ist,
und

- die Auswerteeinheit eine von dem Sensorsignal des ersten Kraftsensors (7a, 107a, 207, 1102, 1102a, 1102b, 1302, 1402) und dem Sensorsignal des zweiten Kraftsensors (7b, 107b) abhängige Information erzeugt die dem Bandzug, mit dem das bandförmige Gut über die Messrolle (1, 201) geführt wird, entspricht oder zu dem Bandzug direkt proportional ist.

2. Verfahren nach Anspruch 1, **dadurch gekennzeichnet, dass** das über die Messrolle (1, 201) geführte bandförmige Gut einen Bereich der Umfangsfläche der Messrolle (1, 201) abdeckt und zumindest einmal pro Umdrehung der Messrolle (11, 201) die Ausnehmung (3, 103, 203, 203a, 203b) durch diesen Bereich geführt wird, wobei die Ausnehmung (3, 103, 203, 203a, 203b) sich parallel zur Längsachse des Messrollenkörpers (1a, 201a) erstreckt und zumindest über die parallel zur Längsachse weisende Breite des Bereichs mit einer Kette von Kraftsensoren ausgestattet ist, bei der mit Ausnahme des jeweils letzten Kraftsensors am jeweiligen Ende der Kette jeder Kraftsensor derart angeordnet ist, dass die Sensorfläche des jeweiligen Kraftsensors an die Sensorfläche eines ihm in Richtung der Kette benachbarten Kraftsensors unmittelbar angrenzt und an die Sensorfläche eines ihm entgegengesetzt der Richtung der Kette benachbarten Kraftsensors unmittelbar angrenzt oder der jeweilige Kraftsensor (7, 7a, 7b, 107a, 107b, 207, 1102, 1102a, 1102b, 1302, 1402) sowohl so nah neben dem ihm in Richtung der Kette benachbarten Kraftsensor (7, 7a, 7b, 107a, 107b, 207, 1102, 1102a, 1102b, 1302, 1402) angeordnet ist, dass der Winkel (ALPHA) zwischen einer in Radialrichtung der Messrolle verlaufenden Endbegrenzungslinie (117), die den Punkt der Sensorfläche des jeweiligen Kraftsensors (7, 7a, 7b, 107a, 107b, 207, 1102, 1102a, 1102b, 1302, 1402) schneidet, der der Sensorfläche des ihm benachbarten Kraftsensor (7, 7a, 7b, 107a, 107b, 207, 1102, 1102a, 1102b, 1302, 1402) am nächsten ist, und einer Linie (118), die

- in der Ebene verläuft, die die Endbegrenzungslinie (117) und die Linie (123) enthält, die den Punkt der Sensorfläche des jeweiligen Kraftsensors (7, 7a, 7b, 107a, 107b, 207, 1102, 1102a, 1102b, 1302, 1402), der der Sensorfläche des benachbarten Kraftsensor (7, 7a, 7b, 107a, 107b, 207, 1102, 1102a, 1102b, 1302, 1402) am nächsten liegt, mit dem Punkt der Sensorfläche des benachbarten Kraftsensors (7, 7a, 7b, 107a, 107b, 207, 1102, 1102a, 1102b, 1302, 1402), der der Sensorfläche des jeweiligen Kraftsensors (7, 7a, 7b, 107a, 107b, 207, 1102, 1102a, 1102b, 1302, 1402) am nächsten liegt, verbindet, und
- die Endbegrenzungslinie (117) im Schnittpunkt (119) der Endbegrenzungslinie (117) mit der Umfangsfläche schneidet, und
- den Punkt der Sensorfläche des ihm benachbarten Kraftsensors (7, 7a, 7b, 107a, 107b, 207, 1102, 1102a, 1102b, 1302, 1402) schneidet, der der Sensorfläche des jeweiligen Kraftsensors (7, 7a, 7b, 107a, 107b, 207, 1102, 1102a, 1102b, 1302, 1402) am nächsten liegt,

kleiner als 65° ist
als auch so nah neben dem ihm entgegengesetzt der Richtung der Kette benachbarten Kraftsensor (7, 7a, 7b, 107a, 107b, 207, 1102, 1102a, 1102b, 1302, 1402) angeordnet ist, dass der Winkel (ALPHA) zwischen einer in Radialrichtung der Messrolle verlaufenden Endbegrenzungslinie (117), die den Punkt der Sensorfläche des jeweiligen Kraftsensors (7, 7a, 7b, 107a, 107b, 207, 1102, 1102a, 1102b, 1302, 1402) schneidet, der der Sensorfläche des ihm benachbarten Kraftsensor (7, 7a, 7b, 107a, 107b, 207, 1102, 1102a, 1102b, 1302, 1402) am nächsten ist, und einer Linie (118), die

- in der Ebene verläuft, die die Endbegrenzungslinie (117) und die Linie (123) enthält, die den Punkt der Sensorfläche des jeweiligen Kraftsensors (7, 7a, 7b, 107a, 107b, 207, 1102, 1102a, 1102b, 1302, 1402), der der Sensorfläche des benachbarten Kraftsensor (7, 7a, 7b, 107a, 107b, 207, 1102, 1102a, 1102b, 1302, 1402) am nächsten liegt, mit dem Punkt der Sensorfläche des benachbarten Kraftsensors (7, 7a, 7b, 107a, 107b, 207, 1102, 1102a, 1102b, 1302, 1402), der der Sensorfläche des jeweiligen Kraftsensors (7, 7a, 7b, 107a, 107b, 207, 1102, 1102a, 1102b, 1302, 1402) am nächsten liegt, verbindet, und
- die Endbegrenzungslinie (117) im Schnittpunkt (119) der Endbegrenzungslinie (118) mit der Umfangsfläche schneidet, und
- den Punkt der Sensorfläche des ihm benachbarten Kraftsensors (7, 7a, 7b, 107a, 107b, 207, 1102, 1102a, 1102b, 1302, 1402) schneidet, der der Sensorfläche des jeweiligen Kraftsensors (7, 7a, 7b, 107a, 107b, 207, 1102, 1102a, 1102b, 1302, 1402) am nächsten liegt,
kleiner als 65° ist.

3. Verfahren nach Anspruch 1, **dadurch gekennzeichnet, dass** das über die Messrolle (1, 201) geführte bandförmige Gut einen Bereich der Umfangsfläche der Messrolle (1, 201) abdeckt und zumindest einmal pro Umdrehung der Messrolle (1,201) eine Kette von Ausnehmungen (3, 103, 203, 203a, 203b) durch diesen Bereich geführt wird, wobei die Ausnehmungen (3, 103, 203, 203a, 203b) parallel zur Längsachse des Messrollenkörpers (1a, 201a) angeordnet sind und zumindest über die parallel zur Längsachse weisende Breite des Bereichs Ausnehmungen (3, 103, 203, 203a, 203b) angeordnet sind und in jeder Ausnehmung (3, 103, 203, 203a, 203b) der Kette ein Kraftsensor (7, 7a, 7b, 107a, 107b, 207, 1102, 1102a, 1102b, 1302, 1402) angeordnet ist, wobei mit Ausnahme des jeweils letzten Kraftsensors (7, 7a, 7b, 107a, 107b, 207, 1102, 1102a, 1102b, 1302, 1402) am jeweiligen Ende der Kette jeder Kraftsensor (7, 7a, 7b, 107a, 107b, 207, 1102, 1102a, 1102b, 1302, 1402) derart angeordnet ist, dass der jeweilige Kraftsensor(7,7a, 7b, 107a, 107b, 207, 1102, 1102a, 1102b, 1302, 1402) sowohl so nah neben dem ihm in Richtung der Kette benachbarten Kraftsensor (7, 7a, 7b, 107a, 107b, 207, 1102, 1102a, 1102b, 1302, 1402) angeordnet ist, dass der Winkel (ALPHA) zwischen einer in Radialrichtung der Messrolle (1, 201) verlaufenden Endbegrenzungslinie (117), die den Punkt der Sensorfläche des jeweiligen Kraftsensors (7, 7a, 7b, 107a, 107b, 207, 1102, 1102a, 1102b, 1302, 1402) schneidet, der der Sensorfläche des ihm benachbarten Kraftsensor (7, 7a, 7b, 107a, 107b, 207, 1102, 1102a, 1102b, 1302, 1402) am nächsten ist, und einer Linie (118), die

- in der Ebene verläuft, die die Endbegrenzungslinie (117) und die Linie (123) enthält, die den Punkt der Sensorfläche des jeweiligen Kraftsensors (7, 7a, 7b, 107a, 107b, 207, 1102, 1102a, 1102b, 1302, 1402), der der Sensorfläche des benachbarten Kraftsensor (7, 7a, 7b, 107a, 107b, 207, 1102, 1102a, 1102b, 1302, 1402) am nächsten liegt, mit dem Punkt der Sensorfläche des benachbarten Kraftsensors (7, 7a, 7b, 107a, 107b, 207, 1102, 1102a, 1102b, 1302, 1402), der der Sensorfläche des jeweiligen Kraftsensors (7, 7a, 7b, 107a, 107b, 207, 1102, 1102a, 1102b, 1302, 1402) am nächsten liegt, verbindet, und

• die Endbegrenzungslinie (117) im Schnittpunkt (119) der Endbegrenzungslinie (117) mit der Umfangsfläche schneidet, und
• den Punkt der Sensorfläche des ihm benachbarten Kraftsensors (7, 7a, 7b, 107a, 107b, 207, 1102, 1102a, 1102b, 1302, 1402) schneidet, der der Sensorfläche des jeweiligen Kraftsensors (7, 7a, 7b, 107a, 107b, 207, 1102, 1102a, 1102b, 1302, 1402) am nächsten liegt,

kleiner als 65° ist
als auch so nah neben dem ihm entgegengesetzt der Richtung der Kette benachbarten Kraftsensor (7, 7a, 7b, 107a, 107b, 207, 1102, 1102a, 1102b, 1302, 1402) angeordnet ist, dass der Winkel (ALPHA) zwischen einer in Radialrichtung der Messrolle (1, 201) verlaufenden Endbegrenzungslinie (117), die den Punkt der Sensorfläche des jeweiligen Kraftsensors (7, 7a, 7b, 107a, 107b, 207, 1102, 1102a, 1102b, 1302, 1402) schneidet, der der Sensorfläche des ihm benachbarten Kraftsensor (7, 7a, 7b, 107a, 107b, 207, 1102, 1102a, 1102b, 1302, 1402) am nächsten ist, und einer Linie (118), die

• in der Ebene verläuft, die die Endbegrenzungslinie (117) und die Linie (123) enthält, die den Punkt der Sensorfläche des jeweiligen Kraftsensors(7, 7a, 7b, 107a, 107b, 207, 1102, 1102a, 1102b, 1302, 1402), der der Sensorfläche des benachbarten Kraftsensor (7, 7a, 7b, 107a, 107b, 207, 1102, 1102a, 1102b, 1302, 1402) am nächsten liegt, mit dem Punkt der Sensorfläche des benachbarten Kraftsensors (7, 7a, 7b, 107a, 107b, 207, 1102, 1102a, 1102b, 1302, 1402), der der Sensorfläche des jeweiligen Kraftsensors(7, 7a, 7b, 107a, 107b, 207, 1102, 1102a, 1102b, 1302, 1402) am nächsten liegt, verbindet, und
• die Endbegrenzungslinie (117) im Schnittpunkt (119) der Endbegrenzungslinie (117) mit der Umfangsfläche schneidet, und
• den Punkt der Sensorfläche des ihm benachbarten Kraftsensors (7, 7a, 7b, 107a, 107b, 207, 1102, 1102a, 1102b, 1302, 1402) schneidet, der der Sensorfläche des jeweiligen Kraftsensors (7, 7a, 7b, 107a, 107b, 207, 1102, 1102a, 1102b, 1302, 1402) am nächsten liegt,
kleiner als 65° ist.

4. Verfahren nach einem der Ansprüche 1 bis 3, **dadurch gekennzeichnet, dass** in der Auswerteeinheit zum Erzeugen der Information das Sensorsignal des ersten Kraftsensors (7, 7a, 107a, 207, 1102, 1102a, 1102b, 1302, 1402) und das Sensorsignal des zweiten Kraftsensors (7b, 107b) summiert werden.

5. Verfahren nach Anspruch 1, **dadurch gekennzeichnet, dass** die Auswerteeinheit zusätzlich die Information angibt, welcher Kraftsensor (7, 7a, 7b, 107a, 107b, 207, 1102, 1102a, 1102b, 1302, 1402) sich in Radialrichtung des Messrollenkörpers (1a, 201a) gesehen unterhalb eines Bereichs befindet, der von dem über die Messrolle (1, 201) geführten bandförmigen Gut abgedeckt wird.

6. Verfahren nach einem der Ansprüche 1 bis 5, **dadurch gekennzeichnet, dass** die Messrolle (1,201) einen Temperatursensor (1350) aufweist und die Auswerteeinheit zusätzlich zu der von der Auswerteeinheit erzeugten Information die von dem Temperatursensor (1350) gemessene Temperatur oder eine von der von dem Temperatursensor (1350) gemessene Temperatur abhängige Größe ausgibt.

7. Verfahren nach einem der Ansprüche 1 bis 6, **dadurch gekennzeichnet, dass** die Auswerteeinheit eine von dem Sensorsignal des ersten Kraftsensors (7, 7a, 107a, 207, 1102, 1102a, 1102b, 1302, 1402) und dem Sensorsignal des zweiten Kraftsensors (7b, 107b) abhängige weitere Information erzeugt, die von der Planheit des über die Messrolle geführten bandförmigen Gutes abhängt.

8. Verwendung einer Messrolle (1, 201) zum Feststellen einer Eigenschaft eines über die Messrolle (1, 201) geführten bandförmigen Guts, insbesondere von Metallband. mit

- einem Messrollenkörper (1a, 201a) mit einer Umfangsfläche,
- mindestens einer Ausnehmung (3, 103, 203, 203a, 203b) in dem Messrollenkörper (1a, 201a), die beabstandet zu der Umfangsfläche angeordnet ist oder von der Umfangsfläche in das Innere des Messrollenkörpers (1a, 201a) führt und
- mit einem ersten Kraftsensor (7a, 107a, 207, 1102, 1102a, 1102b, 1302, 1402), der in der Ausnehmung angeordnet ist, und einem zweiten Kraftsensor, (7b, 107b) der in der Ausnehmung (3, 103, 203, 203a, 203b) oder einer weiteren, der Ausnehmung (3, 103, 203, 203a, 203b) benachbarten Ausnehmung (3, 103, 203, 203a, 203b) angeordnet ist,

wobei der erste Kraftsensor (7a, 107a, 207, 1102, 1102a, 1102b, 1302, 1402) eine Sensorfläche aufweist und der erste Kraftsensor (7a, 107a, 207, 1102, 1102a, 1102b, 1302, 1402) bei einer Änderung der Lage der Sensorfläche des ersten Kraftsensors (7a, 107a, 207, 1102, 1102a, 1102b, 1302, 1402) ein Sensorsignal erzeugen kann und der zweite Kraftsensor (7b, 107b) eine Sensorfläche aufweist und der zweite Kraftsensor (7b, 107b, 207, 1102, 1102a, 1102b, 1302, 1402) bei einer Änderung der Lage der Sensorfläche des zweiten Kraftsensors (7b, 107b, 207, 1102, 1102a, 1102b, 1302, 1402) ein Sensorsignal erzeugen kann, **dadurch gekennzeichnet, dass**:

entweder der erste Kraftsensor in der Ausnehmung neben dem zweiten Kraftsensor angeordnet ist und die Sensorfläche des ersten Kraftsensors an die Sensorfläche des zweiten Kraftsensors unmittelbar angrenzt

oder der erste Kraftsensor (7a, 107a, 207, 1102, 1102a, 1102b, 1302, 1402) so nah neben dem zweiten Kraftsensor (7b, 107b, 207, 1102, 1102a, 1102b, 1302, 1402) angeordnet ist, dass der Winkel (ALPHA) zwischen einer in Radialrichtung der Messrolle (1, 201) verlaufenden Endbegrenzungslinie (117), die den Punkt der Sensorfläche des ersten Kraftsensors (7a, 107a, 207, 1102, 1102a, 1102b, 1302, 1402) schneidet, der der Sensorfläche des zweiten Kraftsensor (7b, 107b, 207, 1102, 1102a, 1102b, 1302, 1402) am nächsten ist, und einer Linie (118), die

• in der Ebene verläuft, die die Endbegrenzungslinie (117) und die Linie enthält (123), die den Punkt der Sensorfläche des ersten Kraftsensors (7a, 107a, 207, 1102, 1102a, 1102b, 1302, 1402), der der Sensorfläche des zweiten Kraftsensors (7b, 107b) am nächsten liegt, mit dem Punkt der Sensorfläche des zweiten Kraftsensors, (7b, 107b, 207, 1102, 1102a, 1102b, 1302, 1402) der der Sensorfläche des ersten Kraftsensors (7a, 107a, 207, 1102, 1102a, 1102b, 1302, 1402) am nächsten liegt, verbindet, und
• die Endbegrenzungslinie (117) im Schnittpunkt (119) der Endbegrenzungslinie (117) mit der Umfangsfläche schneidet, und
• den Punkt der Sensorfläche des zweiten Kraftsensors (7b, 107b) schneidet, der der Sensorfläche des ersten Kraftsensors (7a, 107a, 207, 1102, 1102a, 1102b, 1302, 1402) am nächsten liegt,

kleiner als 65° ist
zum Messen des Bandzugs mit dem das bandförmige Gut über die Messrolle (1, 201) gezogen wird.

9. Verwendung einer Messrolle (1, 201) zum Feststellen einer Eigenschaft eines über die Messrolle (1, 201) geführten bandförmigen Guts, insbesondere von Metallband, mit

- einem Messrollenkörper (1a, 201a) mit einer Umfangsfläche,
- mindestens einer Ausnehmung (3, 103, 203, 203a, 203b) in dem Messrollenkörper (1a, 201a), die beabstandet zu der Umfangsfläche angeordnet ist oder von der Umfangsfläche in das Innere des Messrollenkörpers (1a, 201a) führt und
- mit einem ersten Kraftsensor (7a, 107a, 207, 1102, 1102a, 1102b, 1302, 1402), der in der Ausnehmung (3, 103, 203, 203a, 203b) angeordnet ist, und einem zweiten Kraftsensor (7b, 107b), der in der Ausnehmung (3, 103, 203, 203a, 203b) oder einer weiteren, der Ausnehmung (3, 103, 203, 203a, 203b) benachbarten Ausnehmung (3, 103, 203, 203a, 203b) angeordnet ist,

wobei der erste Kraftsensor (7a, 107a, 207, 1102, 1102a, 1102b, 1302, 1402) eine Sensorfläche aufweist und der erste Kraftsensor (7a, 107a, 207, 1102, 1102a, 1102b, 1302, 1402) bei einer Änderung der Lage der Sensorfläche des ersten Kraftsensors (7a, 107a, 207, 1102, 1102a, 1102b, 1302, 1402) ein Sensorsignal erzeugen kann und der zweite Kraftsensor (7b, 107b) Sensorfläche aufweist und der zweite Kraftsensor (7b, 107b, 207, 1102, 1102a, 1102b, 1302, 1402) bei einer Änderung der Lage der Sensorfläche des zweiten Kraftsensors (7b, 107b) ein Sensorsignal erzeugen kann, **dadurch gekennzeichnet, dass**:

entweder der erste Kraftsensor in der Ausnehmung neben dem zweiten Kraftsensor angeordnet ist und die Sensorfläche des ersten Kraftsensors an die Sensorfläche des zweiten Kraftsensors unmittelbar angrenzt

oder der erste Kraftsensor (7a, 107a, 207, 1102, 1102a, 1102b, 1302, 1402) so nah neben dem zweiten Kraftsensor (7b, 107b) angeordnet ist, dass der Winkel (ALPHA) zwischen einer in Radialrichtung der Messrolle (1, 201) verlaufenden Endbegrenzungslinie (117), die den Punkt der Sensorfläche des ersten Kraftsensors (7a, 107a, 207, 1102, 1102a, 1102b, 1302, 1402) schneidet, der der Sensorfläche des zweiten Kraftsensor (7b, 107b) am nächsten ist, und einer Linie (118), die

- in der Ebene verläuft, die die Endbegrenzungslinie (117) und die Linie enthält (123), die den Punkt der Sensorfläche des ersten Kraftsensors (7a, 107a, 207, 1102, 1102a, 1102b, 1302, 1402), der der Sensorfläche des zweiten Kraftsensors (7b, 107b, 207, 1102, 1102a, 1102b, 1302, 1402) am nächsten liegt, mit dem Punkt der Sensorfläche des zweiten Kraftsensors (7b, 107b), der der Sensorfläche des ersten Kraftsensors (7a, 107a, 207, 1102, 1102a, 1102b, 1302, 1402) am nächsten liegt, verbindet, und
- die Endbegrenzungslinie (117) im Schnittpunkt (119) der Endbegrenzungslinie (117) mit der Umfangsfläche schneidet, und
- den Punkt der Sensorfläche des zweiten Kraftsensors (7b, 107b) schneidet, der der Sensorfläche des ersten Kraftsensors (7a, 107a, 207, 1102, 1102a, 1102b, 1302, 1402) am nächsten liegt,

kleiner als 65° ist

zum Ermitteln der Lage des bandförmigen Guts oder zum Ermitteln der Lage einer Kante des bandförmigen Guts auf der Umfangsfläche der Messrolle (1, 201).

10. Messrolle (1, 201) zum Feststellen einer Eigenschaft eines über die Messrolle (1, 201) geführten bandförmigen Guts, insbesondere von Metallband, mit

- einem Messrollenkörper (1a, 201a) mit einer Umfangsfläche,
- mindestens einer Ausnehmung (3, 103, 203, 203a, 203b) in dem Messrollenkörper (1a, 201a), die beabstandet zu der Umfangsfläche angeordnet ist oder von der Umfangsfläche in das Innere des Messrollenkörpers (1a, 201a) führt und
- mit einem ersten Kraftsensor (7a, 107a, 207, 1102, 1102a, 1102b, 1302, 1402), der in der Ausnehmung (3, 103, 203, 203a, 203b) angeordnet ist, und einem zweiten Kraftsensor (7b, 107b), der in der Ausnehmung (3, 103, 203, 203a, 203b) oder einer weiteren, der Ausnehmung (3, 103, 203, 203a, 203b) benachbarten Ausnehmung (3, 103, 203, 203a, 203b) angeordnet ist,

wobei der erste Kraftsensor (7a, 107a, 207, 1102, 1102a, 1102b, 1302, 1402) eine Sensorfläche aufweist und der erste Kraftsensor (7a, 107a, 207, 1102, 1102a, 1102b, 1302, 1402) bei einer Änderung der Lage der Sensorfläche des ersten Kraftsensors (7a, 107a, 207, 1102, 1102a, 1102b, 1302, 1402) ein Sensorsignal erzeugen kann und der zweite Kraftsensor (7b, 107b) eine Sensorfläche aufweist und der zweite Kraftsensor (7b, 107b) bei einer Änderung der Lage der Sensorfläche des zweiten Kraftsensors (7b, 107b) ein Sensorsignal erzeugen kann,

**dadurch gekennzeichnet, dass**

entweder der erste Kraftsensor in der Ausnehmung neben dem zweiten Kraftsensor angeordnet ist und die Sensorfläche des ersten Kraftsensors an die Sensorfläche des zweiten Kraftsensors unmittelbar angrenzt

oder der erste Kraftsensor (7a, 107a, 207, 1102, 1102a, 1102b, 1302, 1402) so nah neben dem zweiten Kraftsensor (7b, 107b) angeordnet ist, dass der Winkel (ALPHA) zwischen einer in Radialrichtung der Messrolle verlaufenden Endbegrenzungslinie (117), die den Punkt der Sensorfläche des ersten Kraftsensors (7a, 107a, 207, 1102, 1102a, 1102b, 1302, 1402) schneidet, der der Sensorfläche des zweiten Kraftsensor (7b, 107b) am nächsten ist, und einer Linie (118), die

- in der Ebene verläuft, die die Endbegrenzungslinie (117) und die Linie (123) enthält, die den Punkt der Sensorfläche des ersten Kraftsensors (7a, 107a, 207, 1102, 1102a, 1102b, 1302, 1402), der der Sensorfläche des zweiten Kraftsensors (7b, 107b) am nächsten liegt, mit dem Punkt der Sensorfläche des zweiten Kraftsensors (7b, 107b), der der Sensorfläche des ersten Kraftsensors (7a, 107a, 207, 1102, 1102a, 1102b, 1302, 1402) am nächsten liegt, verbindet, und
- die Endbegrenzungslinie (117) im Schnittpunkt (119) der Endbegrenzungslinie (117) mit der Umfangsfläche schneidet, und
- den Punkt der Sensorfläche des zweiten Kraftsensors (7b, 107b) schneidet, der der Sensorfläche des ersten Kraftsensors (7a, 107a, 207, 1102, 1102a, 1102b, 1302, 1402)am nächsten liegt,

kleiner als 65° ist, wobei die Linie (123), die den Punkt der Sensorfläche des ersten Kraftsensors (7a, 107a, 207, 1102, 1102a, 1102b, 1302, 1402), der der Sensorfläche des zweiten Kraftsensors (7b, 107b) am nächsten liegt, mit dem Punkt der Sensorfläche des zweiten Kraftsensors (7b, 107b, 207, 1102, 1102a, 1102b, 1302, 1402), der der Sensorfläche des ersten Kraftsensors (7a, 107a, 207, 1102, 1102a, 1102b, 1302, 1402) am nächsten liegt, verbindet, in einem Winkel von > 10° zu einer Ebene, die senkrecht zur Längsachse der Messrolle (1, 201) steht, verläuft und die Messrolle (1, 201) als Vollrolle ausgeführt ist und eine geschlossene Umfangsfläche aufweist, wobei

- entweder alle in dem Messrollenkörper (1a, 201a) vorgesehenen Ausnehmungen derart ausgebildet sind, dass keine Ausnehmung (3, 103, 203, 203a, 203b) von der Ausnehmung (3, 103, 203, 203a, 203b) zur Umfangsfläche führt
- oder bei Ausführungsformen, bei denen die jeweilige Ausnehmung (3, 103, 203, 203a, 203b) eine in Richtung auf die Umfangsfläche führende Ausnehmung (3, 103, 203, 203a, 203b) aufweist, diese durch ein Verschlusselement verschlossen werden und dass die Messrolle einen Temperatursensor (1350) aufweist.

## Claims

1. Method of determining a property of a strip-shaped good, in particular of metal strip guided over a measuring roller (1, 201) is performed, wherein

   the strip-shaped good is guided over a measuring roller (1, 201) to determine a property of a strip-shaped good, in particular of metal strip, guided over the measuring roller (1, 201), wherein the measuring roller (1, 201) is constructed with

   - a measuring roller body (1a, 201a) with a circumferential surface,
   - at least one recess (3, 103, 203, 203a, 203b) in the measuring roller body (1a, 201a), which is arranged remotely from the circumferential surface or leads from the circumferential surface to the inside the measuring roller body (1a, 201a) and
   - with a first force sensor (7a, 107a, 207, 1102, 1102a, 1102b, 1302, 1402), which is arranged in the recess (3, 203, 203a, 203b, 1102) and a second force sensor (7b, 107b), which is arranged in the recess (3, 103) or in a further recess (3, 103, 203, 203a, 203b) adjacent to the recess (3, 103, 203, 203a, 203b),

     wherein the first force sensor (7a, 107a, 207, 1102, 1102a, 1102b, 1302, 1402) has a sensor surface and the first force sensor (7a, 107a, 207, 1102, 1102a, 1102b, 1302, 1402) can generate a sensor signal by a change in the position of the sensor surface of the first force sensor (7a, 107a, 207, 1102, 1102a, 1102b, 1302, 1402) and the second force sensor (7b, 107b) has a sensor surface and the second force sensor (7b, 107b, 207, 1102, 1102a, 1102b, 1302, 1402) can generate a sensor signal by a change in the position of the sensor surface of the second force sensor (7b, 107b, 207, 1102, 1102a, 1102b, 1302, 1402),
     wherein the strip-shaped good is guided over the measuring roller (1, 201) such that it partly encircles the measuring roller (1, 201) and that

   - the sensor signal which the first force sensor (7a, 107a, 207, 1102, 1102a, 1102b, 1302, 1402) generates due to the change in position of the sensor surface of the first force sensor, which is due to the compressive force resulting from the looping, is supplied to an evaluation unit and
   - the sensor signal which the second force sensor (7b, 107b) generates due to the change in position of the sensor surface of the second force sensor which is due to the compressive force resulting from the looping, is supplied to an evaluation unit,
   **characterised in that**:

     either the first force sensor is arranged in the recess nearest to the second force sensor and the sensor surface of the first force sensor is immediately adjacent to the sensor surface of the second force sensor or the first force sensor (7a, 107a, 207, 1102, 1102a, 1102b, 1302, 1402) is arranged so close to the second force sensor (7a, 107b) that the angle (ALPHA) between a travel limiting line (117) running in the radial direction of the measuring roller (1, 201) which intersects the point of the sensor surface of the first force sensor (7a, 107a, 207, 1102, 1102a, 1102b, 1302, 1402) which is nearest to the sensor surface of the second force sensor (7b, 107b) and a line (118) which

• runs in the plane containing the travel limiting line (117) and the line (123) which joins the point ofthe sensor surface of the first force sensor (7a, 107am, 207, 1102, 1102a, 1102b, 1302, 1402), which lies nearest to the sensor surface of the second force sensor (7b, 107b), with the point of the sensor surface of the second force sensor (7b, 107b), which is nearest to the sensor surface of the first force sensor (7a, 107a, 207, 1102, 1102a, 1102b, 1302, 1402), and
• intersects the travel limiting line (117) in the intersection (119) of the travel limiting line (117) with the circumferential surface, and
• intersects the point of the sensor surface of the second force sensor (7b, 107b) which lies nearest to the sensor surface of the first force sensor (7a, 107a, 208, 1102, 1102a, 1102b, 1302, 1402),

is smaller than 65°,
and
the evaluation unit generates information based on the sensor signal of the first force sensor (7a, 107a, 207, 1102, 1102a, 1102b, 1302, 1402) and the sensor signal of the second force sensor (7b, 107b)

which corresponds to the belt tension with which the strip-shaped good is guided over the measuring roller (1, 201) or is directly proportional to the belt tension.

2. Method according to claim 1, **characterised in that** the strip-shaped good guided over the measuring roller (1, 201) covers an area of the circumferential surface of the measuring roller (1, 201) and the recess (3, 103, 203, 203a, 203b) is guided at least once per revolution of the measuring roller (11, 201) through this region wherein the recess (3, 103, 203, 203a, 203b) extends parallel to the longitudinal axis of the measuring roller body (1a, 201a) and is equipped, at least over the width of the area pointing parallel to the longitudinal axis with a chain of force sensors, through which, except for the respective last force sensor at each end of the chain, each force sensor is arranged such that the sensor surface of the respective force sensor immediately adjoins the sensor surface of a force sensor nearest to it in the direction of the chain and immediately adjoins the sensor surface of a force sensor nearest to it opposite the direction of the chain or the respective force sensor (7, 7a, 7b, 107a, 107b, 207, 1102, 1102a, 1102b, 1302, 1402) is also arranged so close to the force sensor (7, 7a, 7b, 107a, 107b, 207, 1102, 1102a, 1102b, 1302, 1402) adjacent to it in the direction of the chain that the angle (ALPHA) between a travel limiting line (117) running in the radial direction of the measuring roller which intersects the point of the sensor surface of the respective force sensor (7, 7a, 7b, 107a, 107b, 207, 1102, 1102a, 1102b, 1302, 1402) which is nearest to the sensor surface of the neighbouring force sensor (7, 7a, 7b, 107a, 107b, 207, 1102, 1102a, 1102b, 1302, 1402) and a line (118) which

• runs in the plane containing the travel limiting line (117) and the line (123) which joins the point of the sensor surface of the respective force sensor (7, 7a, 7b, 107a, 107b, 207, 1102, 1102a, 1102b, 1302, 1402), which is nearest to the sensor surface of the neighbouring force sensor (7, 7a, 7b, 107a, 107b, 207, 1102, 1102a, 1102b, 1302, 1402), with the point of the sensor surface of the neighbouring force sensor (7, 7a, 7b, 107a, 107b, 207, 1102, 1102a, 1102b, 1302, 1402), which is nearest to the sensor surface of the respective force sensor (7, 7a, 7b, 107a, 107b, 207, 1102, 1102a, 1102b, 1302, 1402), and
• intersects the travel limiting line (117) in the intersection (119) of the travel limiting line (117) with the circumferential surface, and
• intersects the point of the sensor surface of its neighbouring force sensor (7, 7a, 7b, 107a, 107b, 207, 1102, 1102a, 1102b, 1302, 1402) lying adjacent to the sensor surface of the respective force sensor (7, 7a, 7b, 107a, 107b, 207, 1102, 1102a, 1102b, 1302, 1402),

is less than 65°
as well as being arranged so close to the neighbouring force sensor (7, 7a, 7b, 107a, 107b, 207, 1102, 1102a, 1102b, 1302, 1402) opposite it in the direction of the chain that the angle (ALPHA) between a travel limiting line (117) running in the radial direction of the measuring roller which intersects the point of the sensor surface of the respective force sensor (7, 7a, 7b, 107a, 107b, 207, 1102, 1102a, 1102b, 1302, 1402) which is nearest to the sensor surface of its neighbouring force sensor (7, 7a, 7b, 107a, 107b, 207, 1102, 1102a, 1102b, 1302, 1402) and a line (118) which

• runs in the plane containing the travel limiting line (117) and the line (123) which joins the point of the sensor surface of the respective force sensor (7, 7a, 7b, 107a, 107b, 207, 1102, 1102a, 1102b, 1302, 1402), which is nearest to the sensor surface of the neighbouring force sensor (7, 7a, 7b, 107a, 107b, 207, 1102, 1102a, 1102b, 1302, 1402), with the point of the sensor surface of the neighbouring force sensor (7, 7a, 7b, 107a, 107b, 207, 1102, 1102a, 1102b, 1302, 1402), which is nearest to the sensor surface of the respective force sensor (7, 7a, 7b, 107a, 107b, 207, 1102, 1102a, 1102b, 1302, 1402), and
• intersects the travel limiting line (117) in the intersection (119) of the travel limiting line (118) with the circumferential surface, and
• intersects the point of the sensor surface of its neighbouring force sensor (7, 7a, 7b, 107a, 107b, 207, 1102, 1102a, 1102b, 1302, 1402) which is nearest to the sensor surface of the particular force sensor (7, 7a, 7b, 107a, 107b, 207, 1102, 1102a, 1102b, 1302, 1402),
is smaller that 65°.

3. Method according to claim 1, **characterised in that** the strip-shaped good guided over the measuring roller (1, 201) covers an area ofthe circumferential surface ofthe measuring roller (1, 201) and, at least once per revolution of the measuring roller (1, 201), a chain of recesses (3, 103, 203, 203a, 203b) is guided through this area, wherein the recesses (3, 103, 203, 203a, 203b) are arranged parallel to the longitudinal axis of the measuring roller body (1a, 201a) and recesses (3, 103, 203, 203a, 203b) are arranged at least over the width of the area pointing parallel to the longitudinal axis and, in each recess (3, 103, 203, 203a, 203b) of the chain, a force sensor (7, 7a, 7b, 107a, 107b, 207, 1102, 1102a, 1102b, 1302, 1402) is arranged wherein, except for the respective last force sensor (7, 7a, 7b, 107a, 107b, 207, 1102, 1102a, 1102b, 1302, 1402) on the respective end of the chain, each force sensor (7, 7a, 7b, 107a, 107b, 207, 1102, 1102a, 1102b, 1302, 1402) is arranged such that the respective force sensor (7, 7a, 7b, 107a, 107b, 207, 1102, 1102a, 1102b, 1302, 1402) is also arranged so close to the neighbouring force sensor (7, 7a, 7b, 107a, 107b, 207, 1102, 1102a, 1102b, 1302, 1402) in the direction of the chain that the angle (ALPHA) between a travel limiting line (117) running in the radial direction of the measuring roller (1, 201) which intersects the point of the sensor surface of the respective force sensor (7, 7a, 7b, 107a, 107b, 207, 1102, 1102a, 1102b, 1302, 1402) which is nearest to the sensor surface of the neighbouring force sensor (7, 7a, 7b, 107a, 107b, 207, 1102, 1102a, 1102b, 1302, 1402) and a line (118) which

• runs in the plane containing the travel limiting line (117) and the line (123) which joins the point of the sensor surface of the respective force sensor (7, 7a, 7b, 107a, 107b, 207, 1102, 1102a, 1102b, 1302, 1402), which is nearest to the sensor surface of the neighbouring force sensor (7, 7a, 7b, 107a, 107b, 207, 1102, 1102a, 1102b, 1302, 1402), with the point of the sensor surface of the neighbouring force sensor (7, 7a, 7b, 107a, 107b, 207, 1102, 1102a, 1102b, 1302, 1402), which is nearest to the sensor surface of the respective force sensor (7, 7a, 7b, 107a, 107b, 207, 1102, 1102a, 1102b, 1302, 1402), and
• intersects the travel limiting line (117) in the intersection (119) of the travel limiting line (117) with the circumferential surface, and
• intersects the point of the sensor surface of its neighbouring force sensor (7, 7a, 7b, 107a, 107b, 207, 1102, 1102a, 1102b, 1302, 1402), lying nearest to the sensor surface of the respective force sensor (7, 7a, 7b, 107a, 107b, 207, 1102, 1102a, 1102b, 1302, 1402),
is smaller than 65°,
is also arranged as close as possible nearest to the force sensor (7, 7a, 7b, 107a, 107b, 207, 1102, 1102a, 1102b, 1302, 1402) opposite the direction of the chain such that the angle (ALPHA) between a travel limiting line (117) running in the radial direction of the measuring roller (1, 201) intersects the point of the sensor surface of the respective force sensor (7, 7a, 7b, 107a, 107b, 207, 1102, 1102a, 1102b, 1302, 1402) lying nearest to the sensor surface of its neighbouring force sensor (7, 7a, 7b, 107a, 107b, 207, 1102, 1102a, 1102b, 1302, 1402), and a line (118) which
• runs in the plane containing the travel limiting line (117) and the line (123) which lies nearest to the point of the sensor surface of the respective force sensor (7, 7a, 7b, 107a, 107b, 207, 1102, 1102a, 1102b, 1302, 1402), lying nearest to the sensor surface of its neighbouring force sensor (7, 7a, 7b, 107a, 107b, 207, 1102, 1102a, 1102b, 1302, 1402)joining the point of the sensor surface of the neighbouring force sensor (7, 7a, 7b, 107a, 107b, 207, 1102, 1102a, 1102b, 1302, 1402), lying nearest to the sensor surface ofthe respective force sensor (7, 7a, 7b, 107a, 107b, 207, 1102, 1102a, 1102b, 1302, 1402), and
• intersects the travel limiting line (117) in the intersection (119) of the travel limiting line (117) with the circumferential surface, and
• intersects of the point the sensor surface of the neighbouring force sensor (7, 7a, 7b, 107a, 107b, 207, 1102, 1102a, 1102b, 1302, 1402), lying nearest to the sensor surface of the respective force sensor (7, 7a, 7b, 107a, 107b, 207, 1102, 1102a, 1102b, 1302, 1402),

is smaller than 65°.

4. Method according to any one of the claims 1 to 3, **characterised in that** in the evaluation unit to generate the information, the sensor signal of the first force sensor (7, 7a, 107a, 207, 1102, 1102a, 1102b, 1302, 1402) and the sensor signal of the second force sensor (7b, 107b) are summed.

5. Method according to claim 1, **characterised in that,** in addition, the evaluation unit provides information about which force sensor (7, 7a, 7b, 107a, 107b, 207, 1102, 1102a, 1102b, 1302, 1402) is located, viewed in the radial direction of the measuring roller body (1a, 201a), underneath an area which is covered by the strip-shaped good guided over the measuring roller (1, 201).

6. Method according to any one of claims 1 to 5, **characterised in that** the measuring roller (1, 201) has a temperature sensor (1350) and the evaluation unit, in addition to the information created by the evaluation unit, states the temperature measured by the temperature sensor (1350) or a quantity dependent on the temperature measured by the temperature sensor (1350).

7. Method according to any one of claims 1 to 6, **characterised in that** the evaluation unit generates further information dependent on the sensor signal of the first force sensor (7, 7a, 107a, 207, 1102, 1102a, 1102b, 1302, 1402) and the sensor signal of the second force sensor (7b, 107b), said information depending on the evenness of the strip-shaped good guided over the measuring roller.

8. Application of a measuring roller (1, 201) for determining a property of a strip-shaped good, in particular of metal strip, guided over a measuring roller (1, 201), with

- a measuring roller body (1a, 201a) with a circumferential surface,
- at least one recess (3, 103, 203, 203a, 203b) in the measuring roller body (1a, 201a), which is arranged remotely from the circumferential surface or leads from the circumferential surface to the inside the measuring roller body (1a, 201a) and
- with a first force sensor (7a, 107a, 207, 1102, 1102a, 1102b, 1302, 1402), which is arranged in the recess (3, 103, 203, 203a, 203b) and a second force sensor (7b, 107b), which is arranged in the recess or in a further recess (3, 103, 203, 203a, 203b) adjacent to the recess (3, 103, 203, 203a, 203b),
wherein the first force sensor (7a, 107a, 207, 1102, 1102a, 1102b, 1302, 1402) has a sensor surface and the first force sensor (7a, 107a, 207, 1102, 1102a, 1102b, 1302, 1402) can generate a sensor signal by changing the position of the sensor surface of the first force sensor (7a, 107a, 207, 1102, 1102a, 1102b, 1302, 1402) and the second force sensor (7b, 107b) has a sensor surface and the second force sensor (7b, 107b, 207, 1102, 1102a, 1102b, 1302, 1402) can generate a sensor signal by changing the position of the sensor surface of the second force sensor (7b, 107b, 207, 1102, 1102a, 1102b, 1302, 1402),
**characterised in that**:

either the first force sensor is arranged in the recess nearest to the second force sensor and the sensor surface of the first force sensor is immediately adjacent to the sensor surface of the second force sensor or the first force sensor (7a, 107a, 207, 1102, 1102a, 1102b, 1302, 1402) is arranged so close to the second force sensor (7b, 107b, 207, 1102, 1102a, 1102b, 1302, 1402) that the angle (ALPHA) between a travel limiting line (117) running in the radial direction of the measuring roller (1, 201) which intersects the point of the sensor surface of the first force sensor (7a, 107a, 207, 1102, 1102a, 1102b, 1302, 1402), which is nearest to the sensor surface of the second force sensor (7b, 107b, 207, 1102, 1102a, 1102b, 1302, 1402), and of a line (118) which

• runs in the plane containing the travel limiting line (117) and the line (123), lying nearest to the point of the sensor surface of the first force sensor (7a, 107a, 207, 1102, 1102a, 1102b, 1302, 1402), which joins the sensor surface of the second force sensor (7b, 107b) with the point of the sensor surface of the second force sensor, (7b, 107b, 207, 1102, 1102a, 1102b, 1302, 1402) which lies nearest to the sensor surface of the first force sensor (7a, 107a, 207, 1102, 1102a, 1102b, 1302, 1402), and

- intersects the travel limiting line (117) in the intersection (119) of the travel limiting line (117) with the circumferential surface, and
- intersects the point of the sensor surface of the second force sensor (7b, 107b) which lies nearest to the sensor surface of the first force sensor (7a, 107a, 207, 1102, 1102a, 1102b, 1302, 1402),

is less than 65°
- to measure the compression tension with which the strip-shaped good is pulled over the measuring roller (1, 201).

9.  Application of a measuring roller (1, 201) for determining a property of a strip-shaped good, in particular of metal strip, guided over the measuring roller (1, 201)

- a measuring roller body (1a, 201a) with a circumferential surface,
- at least one recess (3, 103, 203, 203a, 203b) in the measuring roller body (1a, 201a), which is arranged remotely from the circumferential surface or leads from the circumferential surface to the inside the measuring roller body (1a, 201a) and

with a first force sensor (7a, 107a, 207, 1102, 1102a, 1 102b, 1302, 1402), which is arranged in the recess (3, 103, 203, 203a, 203b) and a second force sensor (7b, 107b), which is arranged in the recess (3, 103, 203, 203a, 203b) or in a further recess (3, 103, 203, 203a, 203b) adjacent to the recess (3, 103, 203, 203a, 203b),
wherein the first force sensor (7a, 107a, 207, 1102, 1102a, 1102b, 1302, 1402) has a sensor surface and the first force sensor (7a, 107a, 207, 1102, 1102a, 1102b, 1302, 1402) can generate a sensor signal by changing the position of the sensor surface of the first force sensor (7a, 107a, 207, 1102, 1102a, 1102b, 1302, 1402) and the second force sensor (7b, 107b) has a sensor surface and the second force sensor (7b, 107b, 207, 1102, 1102a, 1102b, 1302, 1402) can generate a sensor signal by changing the position of the sensor surface of the second force sensor (7b, 107b),
**characterised in that**:
either the first force sensor is arranged in the recess nearest to the second force sensor and the sensor surface of the first force sensor is immediately adjacent to the sensor surface of the second force sensor or the first force sensor (7a, 107a, 207, 1102, 1102a, 1102b, 1302, 1402) is arranged so close to the second force sensor (7a, 107b) that the angle (ALPHA) between a travel limiting line (117) running in the radial direction of the measuring roller (1, 201) which intersects the point of the sensor surface ofthe first force sensor (7a, 107a, 207, 1102, 1102a, 1102b, 1302, 1402), which is nearest to the sensor surface of the second force sensor (7b, 107b), and a line (118) which

• runs in the plane containing the travel limiting line (117) and contains the line (123), lying nearest to the point ofthe sensor surface ofthe first force sensor (7a, 107a, 207, 1102, 1102a, 1102b, 1302, 1402), which joins the sensor surface of the second force sensor (7b, 107b, 207, 1102, 1102a, 1102b, 1302, 1402) with the point of the sensor surface of the second force sensor, (7b, 107b) which lies nearest to the sensor surface of the first force sensor (7a, 107a, 207, 1102, 1102a, 1102b, 1302, 1402), and
• intersects the travel limiting line (117) in the intersection (119) of the travel limiting line (117) with the circumferential surface, and
• intersects the point of the sensor surface of the second force sensor (7b, 107b) which lies nearest to the sensor surface of the first force sensor (7a, 107a, 207, 1102, 1102a, 1102b, 1302, 1402)

is less than 65°
for determining the position of the strip-shaped good or for determining the position of an edge of the strip-shaped good on the circumferential surface of the measuring roller (1, 201).

10. Measuring roller (1, 201) for determining a property of a strip-shaped good, in particular of metal strip, guided over the measuring roller (1, 201)

- a measuring roller body (1a, 201a) with a circumferential surface,
- at least one recess (3, 103, 203, 203a, 203b) in the measuring roller body (1a, 201a), which is arranged remotely from the circumferential surface or leads from the circumferential surface to the inside of the measuring roller body (1a, 201a) and
- with a first force sensor (7a, 107a, 207, 1102, 1102a, 1102b, 1302, 1402), which is arranged in the recess (3, 103, 203, 203a, 203b) and a second force sensor (7b, 107b), which is arranged in the recess (3, 103, 203, 203a, 203b) or in a further recess (3, 103, 203, 203a, 203b) adjacent to the recess (3, 103, 203, 203a, 203b), wherein the first force sensor (7a, 107a, 207, 1102, 1102a, 1102b, 1302, 1402) has a sensor surface and the first force sensor (7a, 107a, 207, 1102, 1102a, 1102b, 1302, 1402) can generate a sensor signal by changing the position ofthe sensor surface of the first force sensor (7a, 107a, 207, 1102, 1102a, 1102b, 1302, 1402) and the second force sensor (7b, 107b) has a sensor surface and the second force sensor (7b, 107b) can generate a sensor signal by changing the position of the sensor surface of the second force sensor (7b, 107b),

**characterised in that**

either the first force sensor is arranged in the recess adjacent to the second force sensor and the sensor surface of the first force sensor is immediately adjacent to the sensor surface of the second force sensor or the first force sensor (7a, 107a, 207, 1102, 1102a, 1102b, 1302, 1402) is arranged so close to the second force sensor (7b, 107b)

that the angle (ALPHA) between a travel limiting line (117) running in the radial direction of the measuring roller which intersects the point of the sensor surface of the first force sensor (7a, 107a, 207, 1102, 1102a, 1102b, 1302, 1402), which is nearest to the sensor surface of the second force sensor (7b, 107b), and a line (118) which

• runs in the plane containing the travel limiting line (117) and the line (123), lying nearest to the point of the sensor surface of the first force sensor (7a, 107a, 207, 1102, 1102a, 1102b, 1302, 1402), which joins the sensor surface of the second force sensor (7b, 107b) with the point of the sensor surface of the second force sensor, (7b, 107b) which lies nearest to the sensor surface of the first force sensor (7a, 107a, 207, 1102, 1102a, 1102b, 1302, 1402), and
• intersects the travel limiting line (117) in the intersection (119) of the travel limiting line (117) with the circumferential surface, and
• intersects the point the sensor surface of the second force sensor (7b, 107b) which lies nearest to the sensor surface of the first force sensor (7a, 107a, 207, 1102, 1102a, 1102b, 1302, 1402),

is less than 65°
wherein the line (123) which connects the point of the sensor surface of the first force sensor (7a, 107a, 207, 1102, 1102a, 1102b, 1302, 1402), lying nearest to the sensor surface of the second force sensor (7b, 107b), with the point of the sensor surface of the second force sensor (7b, 107b, 207, 1102, 1102a, 1102b, 1302, 1402), lying nearest to the sensor surface of the first force sensor (7a, 107a, 207, 1102, 1102a, 1102b, 1302, 1402), runs at an angle of > 10° to a plane perpendicular to the longitudinal axis of the measuring roller (1, 201), and the measuring roller (1, 201) is completed as a full roll and has a closed circumferential surface, wherein

• either all recesses provided in the measuring roller body (1a, 201a) are designed such that no recess (3, 103, 203, 203a, 203b) leads from the recess (3, 103, 203, 203a, 203b) to the circumferential surface
• or, with other design configurations, wherein the respective recess (3, 103, 203, 203a, 203b) has a recess (3, 103, 203, 203a, 203b) leading towards the circumferential surface, this is closed by a closure element

and that the measuring roller has a temperature sensor (1350).

## Revendications

1. Procédé de détermination d'une propriété d'un matériau en forme de bande, en particulier une bande métallique, guidé sur un rouleau de mesure (1, 201), dans lequel

le matériau en forme de bande sur un rouleau de mesure (1, 201) pour la détermination d'une propriété d'un matériau en forme de bande, en particulier une bande métallique, est guidé sur le rouleau de mesure (1, 201), dans lequel le rouleau de mesure (1, 201) est configuré avec

- un corps de rouleau de mesure (1a, 201a) comportant une surface circonférentielle,
- au moins un évidement (3, 103, 203, 203a, 203b) dans le corps de rouleau de mesure (1a, 201a), qui est disposé à distance de la surface circonférentielle ou mène de la surface circonférentielle à l'intérieur du corps du rouleau de mesure (1a, 201a)
- et comportant un premier capteur de force (7a, 107a, 207, 1102, 1102a, 1102b, 1302, 1402) qui est disposé dans l'évidement (3, 203, 203a, 203b, 1102), et un deuxième capteur de force (7b, 107b)

qui est disposé dans l'évidement (3, 103) ou un autre

évidement (3, 103, 203, 203a, 203b) adjacent à l'évidement (3, 103, 203, 203a, 203b), dans lequel le premier capteur de force (7a, 107a, 207, 1102, 1102a, 1102b, 1302, 1402) présente une surface de capteur et le premier capteur de force (7a, 107a, 207, 1102, 1102a, 1102b, 1302, 1402) peut générer un signal de capteur lors d'une modification de la position de la surface de capteur du premier capteur de force (7a, 107a, 207, 1102, 1102a, 1102b, 1302, 1402) et le deuxième capteur de force (7b, 107b)

présente une surface de capteur et le deuxième

capteur de force (7b, 107b, 207, 1102, 1102a, 1102b, 1302, 1402) peut générer un signal de capteur lors d'une modification de la position de la surface de capteur du deuxième capteur de force (7b, 107b, 207, 1102, 1102a, 1102b, 1302, 1402)

dans lequel le matériau en forme de bande est guidé sur le rouleau de mesure (1, 201) de sorte qu'il s'enroule partiellement autour du rouleau de mesure (1, 201), et que

- le signal de capteur, que le premier capteur de force (7a, 107a, 207, 1102, 1102a, 1102b, 1302, 1402) génère en raison de la modification de position de la surface de capteur du premier capteur de force résultant de la force de compression résultant de l'enroulement, est fourni à une unité d'évaluation et
- le signal de capteur, que le deuxième capteur de force (7b, 107b) génère en raison de la modification de position de la surface de capteur du deuxième capteur de force, qui résulte de la force de compression résultant de l'enroulement, est fourni à une unité d'évaluation,

**caractérisé en ce que**,

soit le premier capteur de force est disposé dans l'évidement à côté du deuxième capteur de force et la surface de capteur du premier capteur de force est directement adjacente à la surface de capteur du deuxième capteur de force

soit le premier capteur de force (7a, 107a, 207, 1102, 1102a, 1102b, 1302, 1402) est disposé si près du deuxième capteur de force (7a, 107b)

, de sorte que l'angle (ALPHA) entre une

ligne de délimitation d'extrémité (117) s'étendant dans la direction radiale du rouleau de mesure (1, 201), qui coupe le point de la surface de capteur du premier capteur de force (7a, 107a, 207, 1102, 1102a, 1102b, 1302, 1402), qui est le plus proche de la surface de capteur du deuxième capteur de force (7b, 107b)

, et une ligne (118), qui

• s'étend dans le plan, qui contient la ligne de délimitation d'extrémité (117) et la ligne (123) qui relie le point de la surface de capteur du premier capteur de force (7a, 107am, 207, 1102, 1102a, 1102b, 1302, 1402), qui est le plus proche de de la surface de capteur du deuxième capteur de force (7b, 107b), avec le point de la surface de capteur du deuxième capteur de force (7b, 107b), qui

est le plus proche de la surface de capteur du premier capteur de force (7a, 107a, 207, 1102, 1102a, 1102b, 1302, 1402) et

• coupe la ligne de délimitation d'extrémité (117) au point d'intersection (119) de la ligne de délimitation d'extrémité (117) avec la surface circonférentielle, et
• coupe le point de la surface de capteur du deuxième capteur de force (7b, 107b) qui est le plus proche de la surface de capteur du

premier capteur de force (7a, 107a, 208, 1102, 1102a, 1102b, 1302, 1402), est inférieur à 65°,
et

- l'unité d'évaluation génère une information en fonction du signal de capteur du premier capteur de force (7a, 107a, 207, 1102, 1102a, 1102b, 1302, 1402) et du signal de capteur du deuxième capteur de force (7b, 107b)

, qui correspond à la tension de la bande avec laquelle le matériau en forme de bande est guidé sur le rouleau de mesure (1, 201) ou qui est directement proportionnelle à la tension de la bande.

**2.** Procédé selon la revendication 1, **caractérisé en ce que** le matériau en forme de bande guidé sur le rouleau de mesure (1, 201) couvre une zone de la surface circonférentielle du rouleau de mesure (1, 201) et, au moins une fois par tour du rouleau de mesure (11, 201), l'évidement (3, 103, 203, 203a, 203b) est guidé à travers cette zone, l'évidement (3, 103, 203, 203a, 203b) s'étendant parallèlement à l'axe longitudinal du corps du rouleau de mesure (1a , 201a) et étant équipé d'une chaîne de capteurs de force au moins sur la largeur de la zone orientée parallèlement à l'axe longitudinal, évidement dans lequel, à l'exception du dernier capteur de force à l'extrémité respective de la chaîne, chaque capteur de force est agencé de sorte que la surface de capteur du capteur de force respective soit directement adjacente à la surface de capteur d'un capteur de force qui lui est adjacent dans la direction de la chaîne et directement adjacente à la surface de capteur d'un capteur de force qui lui est adjacent dans la direction opposée de la chaîne ou le capteur de force respectif (7, 7a, 7b, 107a, 107b, 207, 1102, 1102a, 1102b, 1302, 1402) est disposé si près du capteur de force (7, 7a, 7b, 107a, 107b, 207, 1102, 1102a, 1102b, 1302, 1402) adjacent à celui-ci dans la direction de la chaîne, de sorte que l'angle (ALPHA) entre une ligne de délimitation d'extrémité (117) s'étendant dans la direction radiale du rouleau de mesure, qui coupe le point de la surface de capteur du capteur de force (7, 7a, 7b, 107a, 107b, 207, 1102, 1102a, 1102b, 1302, 1402), qui est le plus proche de la surface de capteur du capteur de force qui lui est adjacente (7, 7a, 7b, 107a, 107b, 207, 1102, 1102a, 1102b, 1302, 1402), et une ligne (118), qui

- s'étend dans le plan, qui contient la ligne de délimitation d'extrémité (117) et la ligne (123) qui relie le point de la surface de capteur du capteur de force respectif (7, 7a, 7b, 107a, 107b, 207, 1102, 1102a, 1102b , 1302, 1402) qui est le plus proche de la surface de capteur du capteur de force adjacent (7, 7a, 7b, 107a, 107b, 207, 1102, 1102a, 1102b, 1302, 1402) avec le point de la surface de capteur du capteur de force (7, 7a, 7b, 107a, 107b, 207, 1102, 1102a, 1102b, 1302, 1402), qui est le plus proche de la surface de capteur du capteur de force (7, 7a, 7b, 107a, 107b, 207 , 1102, 1102a, 1102b, 1302, 1402), et
- coupe la ligne de délimitation d'extrémité (117) au point d'intersection (119) de la ligne de délimitation d'extrémité (117) avec la surface circonférentielle, et
- coupe le point de la surface de capteur du capteur de force adjacent (7, 7a, 7b, 107a, 107b, 207, 1102, 1102a, 1102b, 1302, 1402), qui est le plus proche de la surface de capteur du capteur de force respectif (7, 7a, 7b, 107a, 107b, 207, 1102, 1102a, 1102b, 1302, 1402),

  est inférieur à 65°
  est disposé si près du capteur de force (7, 7a, 7b, 107a, 107b, 207, 1102, 1102a, 1102b, 1302, 1402) qui lui est adjacent dans la direction opposée de la chaîne, que l'angle (ALPHA) entre une ligne de délimitation d'extrémité (117) s'étendant dans la direction radiale du rouleau de mesure, qui coupe le point de la surface de capteur du capteur de force respectif (7, 7a, 7b, 107a, 107b, 207, 1102, 1102a, 1102b, 1302, 1402), qui est le plus proche de la surface de capteur du capteur de force qui lui est adjacente (7, 7a, 7b, 107a, 107b, 207, 1102, 1102a, 1102b, 1302, 1402), et une ligne (118), qui

- s'étend dans le plan, qui contient la ligne de délimitation d'extrémité (117) et la ligne (123) qui relie le point de la surface de capteur du capteur de force respectif (7, 7a, 7b, 107a, 107b, 207, 1102, 1102a, 1102b , 1302, 1402) qui est le plus proche de la surface de capteur du capteur de force adjacent (7, 7a, 7b, 107a, 107b, 207, 1102, 1102a, 1102b, 1302, 1402) avec le point de la surface de capteur du capteur de force (7, 7a, 7b, 107a, 107b, 207, 1102, 1102a, 1102b, 1302, 1402), qui est le plus proche de la surface de capteur du capteur de force (7, 7a, 7b, 107a, 107b, 207 , 1102, 1102a, 1102b, 1302, 1402), et
- coupe la ligne de délimitation d'extrémité (117) au point d'intersection (119) de la ligne de délimitation d'extrémité (118) avec la surface circonférentielle, et
- coupe le point de la surface de capteur du capteur de force adjacent (7, 7a, 7b, 107a, 107b, 207, 1102, 1102a, 1102b, 1302, 1402), qui est le plus proche de la surface de capteur du capteur de force respectif (7, 7a, 7b, 107a, 107b, 207, 1102, 1102a, 1102b, 1302, 1402), est inférieur à 65 °.

3. Procédé selon la revendication 1, **caractérisé en ce que** le matériau en forme de bande guidé sur le rouleau de mesure (1, 201) couvre une zone de la surface circonférentielle du rouleau de mesure (1, 201) et, au moins une fois par tour du rouleau de mesure (1, 201), une chaîne d'évidements (3, 103, 203, 203a, 203b) est guidée à travers cette zone, les évidements (3, 103, 203, 203a, 203b) étant disposés parallèlement à l'axe longitudinal du corps du rouleau de mesure (1a, 201a) et disposés au moins sur la largeur de la zone orientée parallèlement à l'axe longitudinale des évidements (3, 103, 203, 203a, 203b), et un capteur de force (7 , 7a, 7b, 107a, 107b, 207, 1102, 1102a, 1102b, 1302, 1402) est disposé dans chaque évidement (3, 103, 203, 203a, 203b) de la chaîne, dans lequel, à l'exception du dernier capteur de force (7, 7a, 7b, 107a, 107b, 207, 1102, 1102a, 1102b, 1302, 1402) à l'extrémité respective de la chaîne, chaque capteur de force (7, 7a, 7b, 107a, 107b, 207, 1102, 1102a, 1102b, 1302, 1402) est disposé de telle sorte que le capteur de force respectif (7, 7a, 7b, 107a, 107b, 207, 1102, 1102a, 1102b, 1302, 1402) soit si près du capteur de force (7, 7a, 7b, 107a, 107b, 207, 1102, 1102a, 1102b, 1302 , 1402) qui lui est adjacent dans la direction de la chaîne, que l'angle (ALPHA) entre une ligne de délimitation d'extrémité (117), s'étendant dans la direction radiale du rouleau de mesure (1, 201), qui coupe le point de la surface de capteur du capteur de force respectif (7, 7a, 7b, 107a, 107b, 207, 1102, 1102a, 1102b, 1302, 1402) ,qui est le plus proche de la surface de capteur du capteur de force qui lui est adjacente (7, 7a, 7b, 107a, 107b, 207, 1102, 1102a, 1102b, 1302, 1402), et une ligne (118), qui

- s'étend dans le plan, qui contient la ligne de délimitation d'extrémité (117) et la ligne (123) qui relie le point de la surface de capteur du capteur de force respectif (7, 7a, 7b, 107a, 107b, 207, 1102, 1102a, 1102b , 1302, 1402) qui est le plus proche de la surface de capteur du capteur de force adjacent (7, 7a, 7b, 107a, 107b, 207, 1102, 1102a, 1102b, 1302, 1402) avec le point de la surface de capteur du capteur de force (7, 7a, 7b, 107a, 107b, 207, 1102, 1102a, 1102b, 1302, 1402), qui est le plus proche de la surface de capteur du capteur de force (7, 7a, 7b, 107a, 107b, 207 , 1102, 1102a, 1102b, 1302, 1402), et
- coupe la ligne de délimitation d'extrémité (117) au point d'intersection (119) de la ligne de délimitation d'extrémité (117) avec la surface circonférentielle, et
- coupe le point de la surface de capteur du capteur de force adjacent (7, 7a, 7b, 107a, 107b, 207, 1102, 1102a, 1102b, 1302, 1402), qui est le plus proche de de la surface de capteur du capteur de force respectif (7, 7a, 7b, 107a, 107b, 207, 1102, 1102a, 1102b, 1302, 1402), est inférieur à 65 °

est disposé si près du capteur de force (7, 7a, 7b, 107a, 107b, 207, 1102, 1102a, 1102b, 1302, 1402) adjacent dans la direction opposée de la chaîne que l'angle (ALPHA) entre une ligne de délimitation d'extrémité (117), s'étendant dans la direction radiale du rouleau de mesure (1, 201),
, qui coupe le point de la surface de capteur du capteur de force respectif (7, 7a, 7b, 107a, 107b, 207, 1102, 1102a, 1102b, 1302, 1402), qui est le plus proche de la surface de capteur du capteur de force qui lui est adjacente (7, 7a, 7b, 107a, 107b, 207, 1102, 1102a, 1102b, 1302, 1402), et une ligne (118), qui

- s'étend dans le plan qui contient la ligne de délimitation d'extrémité (117) et la ligne (123) qui relie le point de la surface du capteur du capteur de force respectif (7, 7a, 7b, 107a, 107b, 207, 1102, 1102a, 1102b, 1302, 1402), qui est le plus proche de la surface de capteur du capteur de force adjacent (7, 7a, 7b, 107a, 107b, 207, 1102, 1102a, 1102b, 1302, 1402), avec le point de la surface de capteur du capteur de force adjacent (7, 7a, 7b, 107a, 107b, 207, 1102, 1102a, 1102b, 1302, 1402), qui est le plus proche de la surface de capteur du capteur de force respectif (7, 7a, 7b, 107a, 107b, 207, 1102, 1102a, 1102b, 1302, 1402), et
- coupe la ligne de délimitation d'extrémité (117) au point d'intersection (119) de la ligne de délimitation d'extrémité (117) avec la surface circonférentielle, et
- coupe le point de la surface de capteur du capteur de force adjacent (7, 7a, 7b, 107a, 107b, 207, 1102, 1102a, 1102b, 1302, 1402), qui est le plus proche de la surface de capteur du capteur de force respectif (7, 7a, 7b, 107a, 107b, 207, 1102, 1102a, 1102b, 1302, 1402),
est inférieur à 65°.

4. Procédé selon l'une des revendications 1 à 3, **caractérisé en ce que** dans l'unité d'évaluation pour générer les informations, le signal de capteur du premier capteur de force (7, 7a, 107a, 207, 1102, 1102a, 1102b, 1302, 1402) et le le signal de capteur du deuxième capteur de force (7b, 107b) sont additionnés.

5. Procédé selon la revendication 1, **caractérisé en ce que** l'unité d'évaluation indique en outre quel capteur de force (7, 7a, 7b, 107a, 107b, 207, 1102, 1102a, 1102b, 1302, 1402) se trouve, vu dans la direction radiale du corps du rouleau de mesure (1a, 201a), en-dessous d'une zone, qui est recouverte par le matériau en forme de bande guidé sur le rouleau de mesure (1, 201).

6. Procédé selon l'une des revendications 1 à 5, **caractérisé en ce que** le rouleau de mesure (1,201) présente un capteur de température (1350) et l'unité d'évaluation délivre, en plus des informations générées par l'unité d'évaluation, la température mesurée par le capteur de température (1350) ou une température fonction de la température mesurée par le capteur de température (1350).

7. Procédé selon l'une des revendications 1 à 6, **caractérisé en ce que** l'unité d'évaluation génère une information supplémentaire en fonction du signal de capteur du premier capteur de force (7, 7a, 107a, 207, 1102, 1102a, 1102b, 1302, 1402) et du signal de capteur du deuxième capteur de force (7b, 107b), qui dépend de la planéité du matériau en forme de bande guidé sur le rouleau de mesure.

**8.** Utilisation d'un rouleau de mesure (1, 201) pour la détermination d'une propriété d'un matériau en forme de bande, en particulier une bande métallique, guidé sur le rouleau de mesure (1,201),

- avec un corps de rouleau de mesure (1a, 201a) comportant une surface circonférentielle,
- au moins un évidement (3, 103, 203, 203a, 203b) dans le corps du rouleau de mesure (1a, 201a), qui est disposé à une certaine distance de la surface circonférentielle ou mène de la surface circonférentielle à l'intérieur du corps de rouleau de mesure (1a, 201a) et
- comportant un premier capteur de force (7a, 107a, 207, 1102, 1102a, 1102b, 1302, 1402), qui est disposé dans l'évidement, et un deuxième capteur de force (7b, 107b), qui est

disposé dans l'évidement (3, 103, 203, 203a, 203b) ou un autre évidement (3, 103, 203, 203a, 203b) adjacent à l'évidement (3, 103, 203, 203a, 203b),

dans lequel le premier capteur de force (7a, 107a, 207, 1102, 1102a, 1102b, 1302, 1402) présente une surface de capteur et le premier capteur de force (7a, 107a, 207, 1102, 1102a, 1102b, 1302, 1402) peut générer un signal de capteur lors d'une modification de la position de la surface de capteur du premier capteur de force (7a, 107a, 207, 1102, 1102a, 1102b, 1302, 1402) et le deuxième capteur de force (7b, 107b) présente une surface de capteur et le deuxième capteur de force (7b, 107b, 207, 1102, 1102a, 1102b, 1302, 1402) peut générer un signal de capteur lors d'une modification de la position de la surface de capteur du deuxième capteur de force (7b, 107b, 207, 1102, 1102a, 1102b, 1302 , 1402), **caractérisée en ce que** :

soit le premier capteur de force est disposé dans l'évidement à côté du deuxième capteur de force et la surface de capteur du premier capteur de force est directement adjacente à la surface de capteur du deuxième capteur de force

soit le premier capteur de force (7a, 107a, 207, 1102, 1102a, 1102b, 1302, 1402) est disposé si près du deuxième capteur de force (7b, 107b, 207, 1102, 1102a, 1102b, 1302, 1402) que l'angle (ALPHA) entre une ligne de délimitation d'extrémité (117), s'étendant dans la direction radiale du rouleau de mesure (1, 201), qui coupe le point de la surface de capteur du premier capteur de force (7a, 107a, 207, 1102, 1102a , 1102b, 1302, 1402), qui est le plus proche de la surface de capteur du deuxième capteur de force (7b, 107b, 207, 1102, 1102a, 1102b, 1302, 1402), et une ligne (118), qui

• s'étend dans le plan qui contient la ligne de délimitation d'extrémité (117) et la ligne (123) qui relie le point de la surface de capteur du premier capteur de force (7a, 107a, 207, 1102, 1102a, 1102b, 1302, 1402), qui est le plus proche de la surface de capteur du deuxième capteur de force (7b, 107b) avec le point de la surface de capteur du deuxième

capteur de force (7b, 107b, 207, 1102, 1102a, 1102b, 1302, 1402) qui est le plus proche de la surface du capteur du premier capteur de force (7a, 107a, 207, 1102, 1102a, 1102b, 1302, 1402), et

• coupe la ligne de délimitation d'extrémité (117) au point d'intersection (119) de la ligne de délimitation d'extrémité (117) avec la surface circonférentielle, et
• coupe le point de la surface de capteur du deuxième capteur de force (7b, 107b) qui est le plus proche de la surface de capteur du premier capteur de force (7a, 107a, 207, 1102, 1102a, 1102b, 1302, 1402), est inférieur à 65°

pour mesurer la tension de la bande avec laquelle le matériau en forme de bande est tiré sur le rouleau de mesure (1, 201).

**9.** Utilisation d'un rouleau de mesure (1, 201) pour la détermination d'une propriété d'un matériau en forme de bande, en particulier une bande métallique, qui est guidé sur le rouleau de mesure (1, 201), comportant

- un corps de rouleau de mesure (1a, 201a) comportant une surface circonférentielle,
- au moins un évidement (3, 103, 203, 203a, 203b) dans le corps de rouleau de mesure (1a, 201a), qui est disposé à distance de la surface circonférentielle ou mène de la surface circonférentielle à l'intérieur du corps du rouleau de mesure (1a, 201a) et
- comportant un premier capteur de force (7a, 107a, 207, 1102, 1102a, 1102b, 1302, 1402) qui est disposé dans l'évidement (3, 103, 203, 203a, 203b), et un deuxième capteur de force (7b, 107b),

qui est disposé dans l'évidement (3, 103, 203, 203a, 203b) ou dans un autre évidement (3, 103, 203, 203a, 203b) adjacent à l'évidement (3, 103, 203, 203a, 203b),
dans lequel le premier capteur de force (7a, 107a, 207, 1102, 1102a, 1102b, 1302, 1402) présente une surface de capteur et le premier capteur de force (7a, 107a, 207, 1102, 1102a, 1102b, 1302, 1402) peut générer un signal de capteur lors d'une modification de position de la surface de capteur du premier capteur de force (7a, 107a, 207, 1102, 1102a, 1102b, 1302, 1402) et le deuxième capteur de force (7b, 107b) présente une surface du capteur et le deuxième
capteur de force (7b, 107b, 207, 1102, 1102a, 1102b, 1302, 1402)
peut générer un signal de capteur lors d'une modification de la position de la surface du capteur du deuxième capteur de force (7b, 107b), **caractérisée en ce que** :
soit le premier capteur de force est disposé dans l'évidement à côté du deuxième capteur de force et la surface de capteur du premier capteur de force est directement adjacente à la surface de capteur du deuxième capteur de force, soit le premier capteur de force (7a, 107a, 207, 1102 , 1102a, 1102b, 1302, 1402) est disposé si près du deuxième capteur de force (7b, 107b) que l'angle (ALPHA) entre une ligne de délimitation d'extrémité (117), s'étendant dans la direction radiale du rouleau de mesure (1 , 201), qui coupe le point de la surface de capteur du premier capteur de force (7a, 107a, 207, 1102, 1102a, 1102b, 1302, 1402), qui est le plus proche de la surface de capteur du deuxième capteur de force (7b, 107b ), et une ligne (118), qui

• s'étend dans le plan qui contient la ligne de délimitation d'extrémité (117) et la ligne (123) qui relie le point de la surface de capteur du premier capteur de force (7a, 107a, 207, 1102, 1102a, 1102b, 1302, 1402) , qui est le plus proche de la surface de capteur du deuxième capteur de force (7b, 107b, 207, 1102, 1102a, 1102b, 1302, 1402) , avec le point de la surface de capteur de deuxième capteur de force (7b, 107b), qui

est le plus proche de la surface de capteur du premier capteur de force (7a, 107a, 207, 1102, 1102a, 1102b, 1302, 1402) et

• coupe la ligne de délimitation d'extrémité (117) au point d'intersection (119) de la ligne de délimitation d'extrémité (117) avec la surface circonférentielle, et
• coupe le point de la surface de capteur du deuxième capteur de force (7b, 107b) qui est le plus proche de la surface de capteur du premier capteur de force (7a, 107a, 207, 1102, 1102a, 1102b, 1302, 1402), est inférieur à 65° pour déterminer la position du matériau en forme de bande ou déterminer la position d'un bord du matériau en forme de bande sur la surface circonférentielle du rouleau de mesure (1, 201).

**10.** Rouleau de mesure (1, 201) pour la détermination d'une propriété d'un matériau en forme de bande, en particulier une bande métallique, guidé sur le rouleau de mesure (1, 201)

- un corps de rouleau de mesure (1a, 201a) comportant une surface circonférentielle,
- au moins un évidement (3, 103, 203, 203a, 203b) dans le corps de rouleau de mesure (1a, 201a), qui est disposé à distance de la surface circonférentielle ou mène de la surface circonférentielle à l'intérieur du corps du rouleau de mesure (1a, 201a) et
- comportant un premier capteur de force (7a, 107a, 207, 1102, 1102a, 1102b, 1302, 1402) qui est disposé dans l'évidement (3, 103, 203, 203a, 203b), et un deuxième capteur de force (7b, 107b),

qui est disposé dans l'évidement (3, 103, 203, 203a, 203b) ou dans un autre évidement (3, 103, 203, 203a, 203b) adjacent à l'évidement (3, 103, 203, 203a, 203b),
dans lequel le premier capteur de force (7a, 107a, 207, 1102, 1102a, 1102b, 1302, 1402) présente une surface de capteur et le premier capteur de force (7a, 107a, 207, 1102, 1102a, 1102b, 1302, 1402) peut générer un signal de capteur lors d'une modification de la position de la surface de capteur du premier capteur de force (7a, 107a, 207, 1102, 1102a, 1102b, 1302, 1402) et le deuxième capteur de force (7b, 107b) présente une surface de capteur et le deuxième capteur de force (7b, 107b) peut générer un signal de capteur lors d'une modification de la position de la surface de capteur du deuxième capteur de force (7b, 107b), **caractérisé en ce que**
soit le premier capteur de force est disposé dans l'évidement à côté du deuxième capteur de force et la surface de capteur du premier capteur de force est directement adjacente à la surface de capteur du deuxième capteur de force, soit le premier capteur de force (7a, 107a, 207, 1102, 1102a, 1102b, 1302, 1402) est disposé si près du deuxième capteur de force (7b, 107b)
que l'angle (ALPHA) entre une ligne de délimitation d'extrémité (117) s'étendant dans la direction radiale

42

du rouleau de mesure, qui coupe le point de la surface de capteur du premier capteur de force (7a, 107a, 207, 1102, 1102a, 1102b, 1302, 1402), qui est le plus proche de la surface de capteur du deuxième capteur de force (7b, 107b), et une ligne (118), qui

• s'étend dans le plan qui contient la ligne de délimitation d'extrémité (117) et la ligne (123) qui relie le point de la surface de capteur du premier capteur de force (7a, 107a, 207, 1102, 1102a, 1102b, 1302, 1402), qui est le plus proche de la surface de capteur du deuxième capteur de force (7b, 107b), avec le point de la surface de capteur du deuxième capteur de force (7b, 107b), qui
est le plus proche de la surface de capteur du premier capteur de force (7a, 107a, 207, 1102, 1102a, 1102b, 1302, 1402) et
• coupe la ligne de délimitation d'extrémité (117) au point d'intersection (119) de la ligne de délimitation d'extrémité (117) avec la surface circonférentielle, et
• coupe le point de la surface de capteur du deuxième capteur de force (7b, 107b) qui est le plus proche de la surface de capteur du premier capteur de force (7a, 107a, 207, 1102, 1102a, 1102b, 1302, 1402),

est inférieur à 65°, dans lequel la ligne (123) qui relie le point de la surface de capteur du premier capteur de force (7a, 107a, 207, 1102, 1102a, 1102b, 1302, 1402), qui est le plus proche de la surface du capteur du deuxième capteur de force (7b, 107b)
avec le point de la surface de capteur du deuxième
capteur de force (7b, 107b, 207, 1102, 1102a, 1102b, 1302, 1402), qui est le plus proche de la surface de capteur du premier capteur de force (7a, 107a, 207, 1102, 1102a, 1102b, 1302, 1402), dans un angle > 10 ° par rapport à un plan qui est perpendiculaire à l'axe longitudinal du rouleau de mesure (1, 201) et le rouleau de mesure (1, 201) est configuré comme un rouleau plein et présente une surface circonférentielle fermée, dans lequel

• soit tous les évidements prévus dans le corps du rouleau de mesure (1a, 201a) sont configurés de telle sorte qu'aucun évidement (3, 103, 203, 203a, 203b) ne mène de l'évidement (3, 103, 203, 203a, 203b ) à la surface circonférentielle
• soit dans les modes de réalisation, dans lesquels l'évidement respectif (3, 103, 203, 203a, 203b) présente un évidement (3, 103, 203, 203a, 203b) menant à la surface circonférentielle, ceux-ci sont fermés par un élément de fermeture et le rouleau de mesure présente un capteur de température (1350).

Fig. 1

EP 3 781 332 B1

Fig. 2

Fig. 3

EP 3 781 332 B1

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Sensor Empfindlichkeitsfeld bei
Sensorabstand in der Axialbohrung

Fig. 22

2011
2013
2012
2012

SCHNITTANSICH A-A

2014

2015

Fig. 23

Sensorüberdeckung in %

Fig. 24

Sensor Empfindlichkeitsfeld bei
Sensorabstand in der Axialbohrung

Sensor

Messsignal radial

Radiale Empfindlichkeit

Axiale Empfindichkeit

Messsignal axial

## Fig. 25

Sensor Empfindlichkeitsfeld ohne
Sensorabstand in der Axialbohrung

Messsignal radial

Sensor

Radiale Empfindlichkeit

benachbarter
Sensor

Axiale Empfindichkeit

benachbarter
Sensor

Messsignal axial

## Fig. 26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5285684 A
- DE 4236657 A1
- DE 19616980 A1
- DE 10207501 C1
- DE 202007001066 U1
- US 20130298625 A1
- DE 102014012426 A1
- DE 202014006820 U1
- DE 19747655 A1
- DE 10207501
- DE 19838457 A1
- DE 1773551 A1
- DE 102006003792 A1